# EUROPEAN PATENT APPLICATION

(11) **EP 3 620 744 A1**
(43) Date of publication of application: **11.03.2020**
(21) Application number: 19194925.4
(22) Date of filing: 02.09.2019
(51) Int. Cl.: G01B 5/008, G01B 11/00, B25J 19/02

(54) **THREE-DIMENSIONAL MEASURING DEVICE AND METHOD**

(30) Priority: 06.09.2018 US 201862727650 P; 11.03.2019 US 201962816447 P; 24.07.2019 US 201916520628
(71) Applicant: Faro Technologies, Inc., Lake Mary, FL 32746-6204 (US)
(72) Inventor: RAAB, Simon, Santa Barbara, CA 93108 (US); ARMSTRONG, Matthew, Glenmoore, PA 19343 (US); BÉDARD, Renaud Gaboriault, Montreal, Québec H8P 3M3 (CA); DUBÉ-DALLAIRE, Mathieu, Montreal, Québec H4E 3A1 (CA); FU, Qiang, Montreal, Québec H8Z 3L8 (CA); GARCIA, Christopher S, Malvern, PA 19355 (US); HABERLAND, Eric, Woolwich Township, NJ 08085 (US); LANCTOT, Benoit, Montreal, Québec H3J 2T3 (CA); MARONE, Vito, Montreal, Québec H4C 2L8 (CA); MCARDLE, Duncan Andrew, Downingtown, PA 19335 (US); TOHME, Yazid, West Chester, PA 19382 (US); VISHTOK, Yevgeniy, Downingtown, PA 19335 (US); ZANGRILLI, Daniel, Ardmore, PA 19003 (US); BRIDGES, Robert E., Kennett Square, PA 19348 (US)
(74) Representative: Harris, Oliver John Richard

(57) **Abstract**

A system and method for performing noncontact three-dimensional (3D) coordinates. The system including a system includes a noncontact three-dimensional (3D) measuring device operable to measure 3D coordinates of an object. A stage is operable to rotate the object. A mechanical arm is coupled to the 3D measuring device, the mechanical arm being operable to rotate the 3D measuring device in a first arc about a first axis and in a second arc about a second axis, the first arc larger than the second arc.

## Description

### CROSS-REFERENCE TO RELATED APPLICATIONS

The present application is a nonprovisional application and claims the benefit of United States Provisional Application Serial No. 62/727,650 filed on September 6, 2018, and United States Provisional Application Serial No. 62/816,447 filed on March 11, 2019, the contents of both of which are incorporated herein by reference.

The subject matter disclosed herein relates in general to a system for automated non-contact measurement three-dimensional (3D) coordinates.

### BACKGROUND

Instruments within a category of 3D measuring devices measure the 3D coordinates of an object by non-contact methods, which is to say without bringing a tactile measuring element into contact with the object. In one such non-contact 3D measuring device, a pattern of light projected onto the object is captured by a camera, with a processor operable to perform triangulation calculations that determine 3D coordinates. In another type of noncontact 3D measuring device, two or more cameras simultaneously determine 3D coordinates using triangulation based on images captured by the cameras. In still another type of 3D measuring device, a temporally modulated light is projected onto an object. The time for the light to travel from the 3D measuring device to the object and back is measured by the device to obtain the distance traveled. Such distance measurements are sometimes combined with angle measurements, for example, obtained with angular encoders, to determine 3D coordinates of points on the object. In other devices, other non-contact measurement methods are used to determine 3D coordinates.

Although the 3D measuring devices described above are often used in a handheld or stationary mode, there is often a need to measure multiple portions of an object from a variety of perspectives. Often there is a further need to automate the measurement process to enable measurements to be made without the assistance of human operators. To do this, additional elements usually need to be added to the measurement system. Such elements may include a mechanical positioning device, such as a robot, that holds and moves the 3D measuring device or that holds and moves the object under inspection.

Although the need for operator may be eliminated in performance of an automated measurement by a system having a noncontact 3D measuring device, it is desirable that such a system be safe for operation in the immediate vicinity of humans. Such systems as sometimes referred to as collaborative systems. Such systems do not need to be enclosed behind cages that exclude humans. Furthermore, if desired, humans may manually train such systems to perform desired measurements.

A shortcoming found in most systems today is relatively high measurement cost. Usually robots or other mechanical mover devices require relatively expensive motors to move 3D measuring devices or objects from one position to another. Another shortcoming found in most automated measurement systems today is their relatively high bulk and weight, which makes them difficult to transport from site to site to perform measurements.

Another shortcoming found in most systems today is the relatively high effort required to configure the system to obtain the desired measurement output. Such an output might, for example, be a report stating whether a part-under-test was within geometric dimensioning and tolerancing (GD&T) requirements indicated on a CAD drawing of the part. In systems available today, an operator must in most cases spend considerable time to set up the measurement to obtain such a report to determine whether a part-under-test is within tolerance.

There are a number of areas in which existing non-contact 3D measuring systems may be improved, including reduced system cost, reduced weight, and simpler, faster simpler setup to obtain full automation to verify required tolerances. Accordingly, while existing non-contact 3D measuring systems are suitable for their intended purpose, the need for improvement remains.

### BRIEF DESCRIPTION

According to a further embodiment, a system includes: a noncontact three-dimensional (3D) measuring device operable to measure 3D coordinates of an object; a stage operable to rotate the object; and a mechanical arm coupled to the 3D measuring device, the mechanical arm operable to rotate the 3D measuring device in a first arc about a first axis and in a second arc about a second axis, the first arc larger than the second arc.

In this and other embodiments, the system may include the mechanical arm being further operable to point the 3D measuring device toward the object. In this and other embodiments, the system may include the mechanical arm further comprising a linear actuator operable to produce the rotation about the first axis. In this and other embodiments, the system may include the linear actuator being further operable to produce the rotation about the second axis.

In this and other embodiments, the system may include the mechanical arm further comprising a four-bar linkage. In this and other embodiments, the system may be further operable to stop the rotation of the mechanical arm about the first axis whenever an upward force on the arm exceeds a prescribed upward force level or a downward force on the arm exceeds a prescribed downward force level. In this and other embodiments, the system may include a stage operable to rotate the object. In this and other embodiments, the system may include the stage further comprising a platen and a plurality of mounts.

In this and other embodiments, the system may include the noncontact 3D measuring device being a triangulation scanner. In this and other embodiments, the system may include the noncontact 3D measuring device having a triangulation scanner that projects a pattern of light onto an object, the pattern of light being selectable in a variety of shapes. In this and other embodiments, the system may include the noncontact 3D measuring device having a triangulation scanner that sweeps a pattern of light on the object, the pattern being a line of light or a point of light.

In this and other embodiments, the system may include the noncontact 3D measuring device having a pattern generation plane and a lens system, the pattern of light being generated and swept on the pattern generation plane and projected through the lens system. In this and other embodiments, the system may include the noncontact 3D measuring device includes a triangulation line scanner that projects a line of light on the object. In this and other embodiments, the system may include the noncontact 3D measuring device is operable to measure a distance and an angle to the object.

According to a further embodiment, a method includes: providing a system having a noncontact three-dimensional (3D) measuring device, a rotation stage, and a mechanical arm attached to the 3D measuring device; with one or more processors, executing executable instructions causing the mechanical arm to rotate the 3D measuring device in a first arc about a first axis and in a second arc about a second axis, the first arc larger than the second arc; with the one or more processors, executing executable instructions further causing the rotation stage to rotate the object; with the noncontact 3D measuring device, measuring 3D coordinates of a point on the object; and with the one or more processors, executing executable instructions storing the measured 3D coordinates.

In this and other embodiments, the method may include the mechanical arm having a linear actuator, where the one or more processors executing executable instructions that cause the linear actuator to produce the rotation of the 3D measuring device in the first arc about the first axis and in a second arc about the second axis. In this and other embodiments, the method may include the one or more processors executing executable instructions that stop the rotation of the mechanical arm about the first axis whenever an upward force on the mechanical arm exceeds a prescribed maximum upward force level or the downward force on the arm exceeds a prescribed maximum downward force level. In this and other embodiments, the method may include the rotation stage further comprises a platen and a plurality of mounts that support the object, the plurality of mounts supported by the platen at a plurality of positions.

These and other advantages and features will become more apparent from the following description taken in conjunction with the drawings.

### BRIEF DESCRIPTION OF THE DRAWINGS

The subject matter, which is regarded as the invention, is particularly pointed out and distinctly claimed in the claims at the conclusion of the specification. The foregoing and other features and advantages of the invention are apparent from the following detailed description taken in conjunction with the accompanying drawings in which:
FIG. 1A is a perspective view of a non-contact 3D measuring system according to an embodiment of the present invention;
FIGs. 1B, 1C are perspective views of a non-contact 3D measuring system with an object in position to be measured according to an embodiment of the present invention;
FIG. 2 is a perspective view of an non-contact 3D measuring instrument integrated into the non-contact 3D measuring system according to an embodiment of the present invention;
FIG. 3A, 3B, 3C, 3D, 3E are side views of the non-contact 3D measuring instrument moved into various positions to measure different portions of an object according to an embodiment of the present invention;
FIG. 4 is an exploded view of components within a mechanical mover according to an embodiment of the present invention;
FIGs. 5A, 5B are exploded views of elements within a rear portion of a frame assembly according to an embodiment of the present invention;
FIGs. 6A, 6B are partially exploded views of frame and crank assemblies according to an embodiment of the present invention;
FIGs. 7A, 7B are partially exploded views of the crank and coupler assemblies according to an embodiment of the present invention;
FIG. 8 is a partially exploded view of the frame and crank assemblies according to an embodiment of the present invention;
FIG. 9 is an isometric view of the mechanical mover assembly according to an embodiment of the present invention;
FIG. 10 is a partially exploded view of the non-contact 3D measuring system according to an embodiment of the present invention;
FIGs. 11A, 11B, 11C, 11D are isometric views of the coupler assembly, rocker assembly, crank assembly, and frame assembly, respectively, according to an embodiment of the present invention;
FIG. 12 is a partial section view of assembled components within the mechanical mover according to an embodiment of the present invention;
FIGs. 13, 14, 15, 16, 17 are isometric views of rotary-staging assemblies, including mounting stands, according to an embodiment of the present invention;
FIGs. 18, 19 are exploded views of a mounting stand according to an embodiment of the present invention;
FIGs. 20A, 20B, 21A, 21B are front, first cross-sectional, side, and second cross-sectional views according to an embodiment of the present invention;
FIG. 22 is a cross-sectional view of an interconnected mounting stand and rotary staging platen according to an embodiment of the present invention;
FIG. 23 is a block diagram of electronics of the 3D measuring system according to an embodiment of the present invention;
FIG. 23B is a block diagram of a current sensor / connector board according to an embodiment of the present invention;
FIG. 24 is a isometric view of an electrical system attached to a base frame according to an embodiment of the present invention;
FIG. 25 is an isometric view of the 3D measuring system configured for movement by an operator according to an embodiment of the present invention;
FIG. 26 is a cross-sectional view of a triangulation scanner according to an embodiment of the present invention;
FIG. 27 is a schematic illustration of triangulation principles within a triangulation scanner;
FIG. 28 is a schematic illustration of triangulation principles within a triangulation scanner having two cameras according to an embodiment of the present invention;
FIG. 29A is an isometric view of a 3D measuring system that includes a line scanner in a first orientation according to an embodiment of the present invention;
FIGs. 29B, 29C are isometric views of dental restorations in milled disk and 3D printed forms, respectively, for measurement by a 3D measurement system according to an embodiment of the present invention;
FIG. 30 is a schematic illustration of triangulation principles of a line scanner;
FIG. 31 is an isometric view of a 3D measuring system that includes a line scanner in a second orientation according to an embodiment of the present invention;
FIG. 32 is an isometric view of a 3D measuring device that includes a time-of-flight scanner according to an embodiment of the present invention;
FIG. 33 is a schematic representation of measurement conditions that produce multipath interference;
FIGs. 34A, 34B illustrate a measurement arrangement and measurement results, respectively, in which multipath interference is avoided;
FIGs. 34C, 34D illustrate a measurement arrangement and measurement results, respectively, in which multipath interference is present;
FIGs. 35A, 35B, 35C illustrate a noncontact 3D measurement made with a large region of illumination, with a small region of illumination, and with a combination of large and small regions of illumination, respectively, according to an embodiment of the present invention;
FIG. 36 illustrates a triangulation scanner capable of projecting a pattern over an area but which, instead, is configured to sweep a vertical line of light according to an embodiment of the present invention;
FIGs. 37A, 37B are top and side schematic illustrations of a line of light being swept by an area array in a projector according to an embodiment of the present invention;
FIGs. 38A, 38B are images on a camera in a triangulation scanner in which light is projected as a line according to an embodiment of the present invention;
FIGs. 38C, 38D are patterns observed on a triangulation scanner camera and a triangulation scanner projector, respectively, for the case in which a line of light is swept according to an embodiment of the present invention;
FIG. 38E is a pattern observed on a triangulation scanner camera according to the situation in FIG. 38D but back-projected onto the projector, indicating a few incomplete spots resulting from not meeting an acceptance criterion, possibly as a result of multipath interference, according to an embodiment of the present invention;
FIG. 38F represents the idea of using a small spot of light to measure over the incomplete spots according to an embodiment of the present invention;
FIGs. 39A, 39B, 39C are top, front and side views of a V-block illuminated in such a way as to suffer errors from multipath interference;
FIGs. 40A, 40B, 40C are top, front, and side views of a V-block illuminated by a ray of light slightly angled with respect to the ray in FIGs. 39A, 39B, 39C, resulting in the problem multipath interference occurring in a much different location on the V-block;
FIGs. 41A, 41D illustrate the situation in which a V-block is illuminated symmetrically by a projector in a triangulation scanner, resulting in multipath interference over the whole of the block;
FIGs. 41B, 41C, 41E illustrate the situation in which a V-block is illuminated asymmetrically by a projection in a triangulation scanner, resulting in multipath interference over only a small region of the block;
FIG. 42 illustrates a geometry that produces a glint (specular reflection) at a single angle of the plane being measured;
FIGs. 43 is a flow chart illustrating a learn-mode portion of a method used in one-click software according to an embodiment of the present invention;
FIG. 44 illustrate a CAD model and GD&T callouts obtained by application software according to an embodiment of the present invention;
FIG. 45 illustrates default mount configurations and positions in one possible embodiment of the present invention;
FIG. 46 illustrates the mounts in their actual positions as scanned by a noncontact 3D measuring device of the present invention;
FIG. 47 is an isometric view of the top surface of an object having been scanned by the 3D measurement device and a mechanical mechanism according to an embodiment of the present invention;
FIG. 48 is an isometric view of an initial relative orientation of the scanned object and a CAD model of the scanned object for the case in which the coordinate systems of the scanned object and the CAD model are different;
FIG. 49 is an isometric view, as displayed in application software, of a bottom view of the scanned object as measured in a first orientation according to an embodiment of the present invention;
FIG. 50 is an isometric view of the scanned object in its second orientation in combination with the scanned mounts according to an embodiment of the present invention;
FIG. 51 represents a color coded image of the CAD model indicating extent of deviation from specified or expected values, with GD&T values indicated in adjacent boxes;
FIG. 52 is an exemplary illustration of deviations from nominal or specified dimensional values of measured points according to an embodiment of the present invention;
FIGs. 53A, 53B is a flow chart illustrating a playback mode of a method used in one-click software according to an embodiment of the present invention;
FIG. 54 illustrates an exemplary illustration provided to a user guiding placement of a new object on the mounts according to an embodiment of the present invention;
FIG. 55 illustrates registration of the CAD model to the measured points, the alignment being very good compared to that shown in FIG. 48 in registering to the CAD model in the learn mode according to an embodiment of the present invention;
FIGs. 56A, 56B are a simplified but general version of a flow chart sharing features with the flow charts of FIGs. 43, 53A, 53B according to an embodiment of the present invention;
FIG. 57 is a flow chart illustrating another aspect of a one-click application software in which measurements in the learn mode are continued until measurement configurations are obtained that obtain all desired measurements according to an embodiment of the present invention;
FIGs. 58A, 58B are a flow chart in which the mounts are not illuminated, thereby eliminating unwanted points and avoiding multipath interference and specular reflections according to an embodiment of the present invention;
FIG. 59 is a flow chart describing a general method for determining optimum strategies for projecting light onto objects without encountering multipath interference or specular reflections according to an embodiment of the present invention;

The detailed description explains embodiments of the invention, together with advantages and features, by way of example with reference to the drawings.

### DETAILED DESCRIPTION

Embodiments disclosed herein provide advantages in reducing system cost of automated non-contact 3D measurement systems and in providing simpler, faster setup to obtain full automation in a relatively lightweight and portable system.

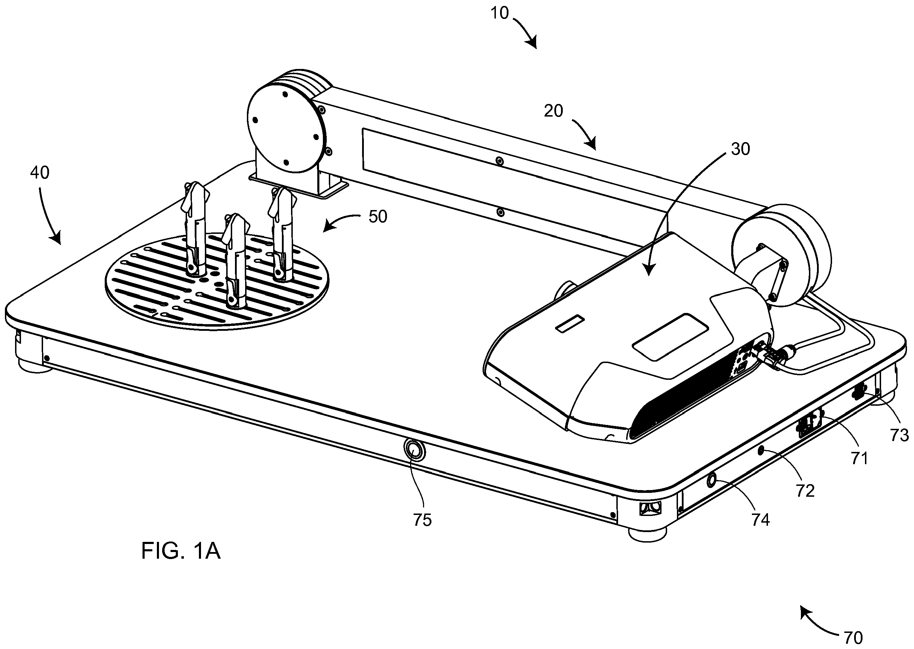

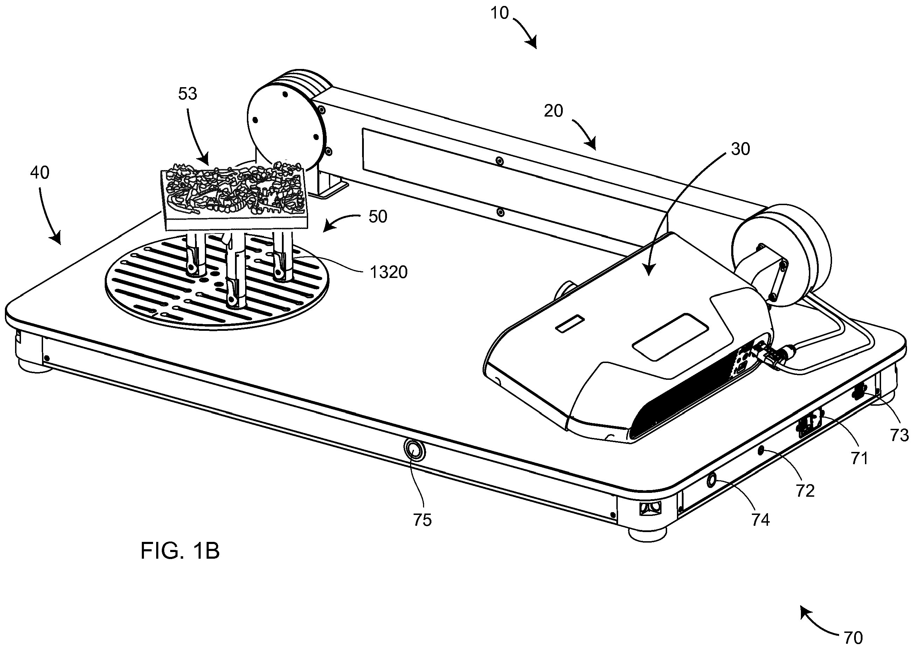

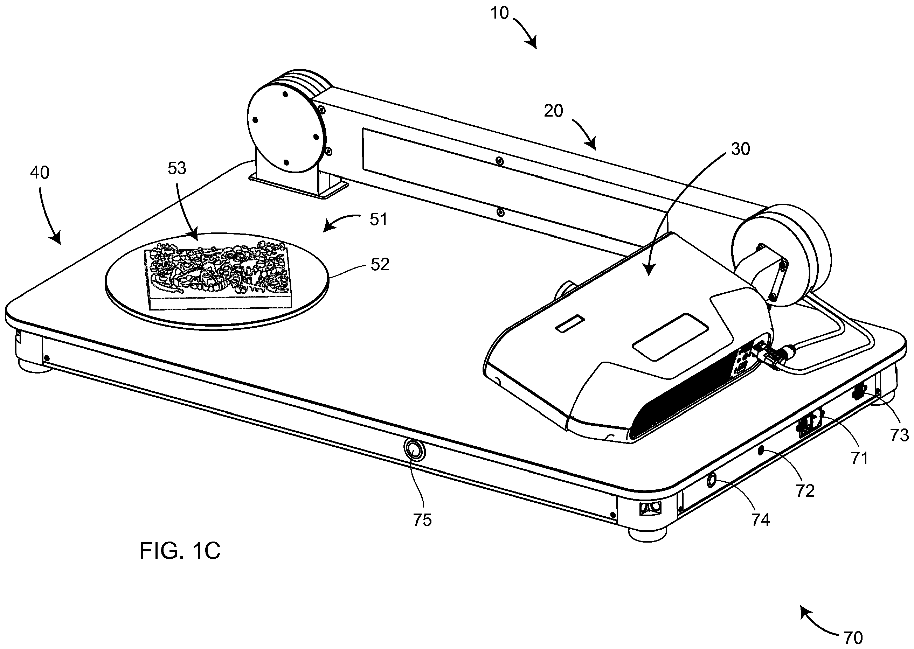

FIG. 1A is a perspective view of a non-contact 3D measuring system 10 according to an embodiment. Elements of the system 10 include a mover mechanism 20, a non-contact 3D measuring device 30, a base assembly 40, a rotary-staging assembly 50, and user interface (UI) panel 70. UI panel 70 components include a power input receptacle with on/off switch 71, an on-off indicator light 72, a USB jack 73, a stow actuator 74, and an action button 75. When pushed, the stow actuator 74 causes the mover mechanism 20 to move downward even if electrical power has been removed from the system 10. USB is an industry standard maintained by the USB Implementers Forum. The action switch 75 causes the current action to commence. In an embodiment, the action switch is illuminated green, yellow, or red to indicate measurement status. FIG. 1B and FIG. 1C illustrate the mounting of an object 53 in position for measurement by the 3D measuring system 10. In FIG. 1B, the object 53 is mounted directly on a platen 52, which is part of the rotary-staging mechanism 50. In FIG. 1C, the object 53 is mounted on mounting stands 1320, which in an embodiment is part of the rotary-staging mechanism 50. In embodiments illustrated in FIGs. 1B, 1C, the object 53 is a collection of dental restorations created using 3D printing.

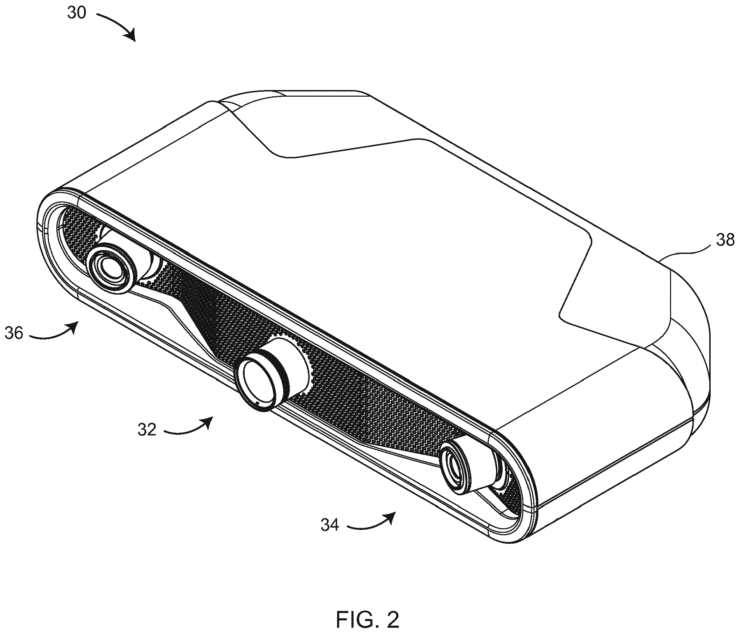

FIG. 2 is a perspective view of a non-contact 3D measuring instrument 30 according to an embodiment. In the figure shown, the measuring instrument 30 is a triangulation scanner having a projector 32, a first camera 34, a second camera 36, and an enclosure 38, but many other types of 3D measuring instruments are possible as further explained herein below.

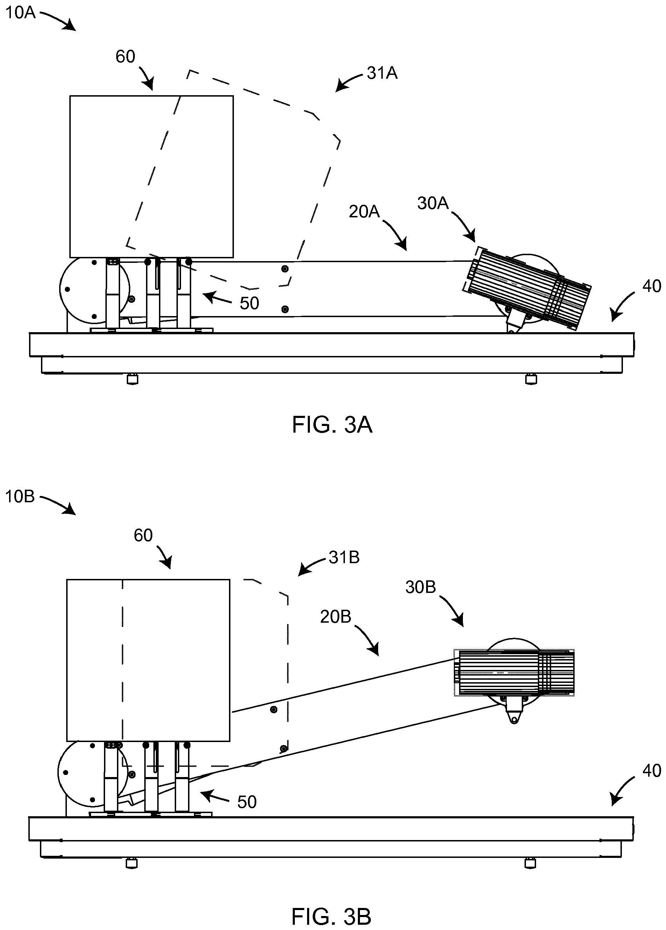

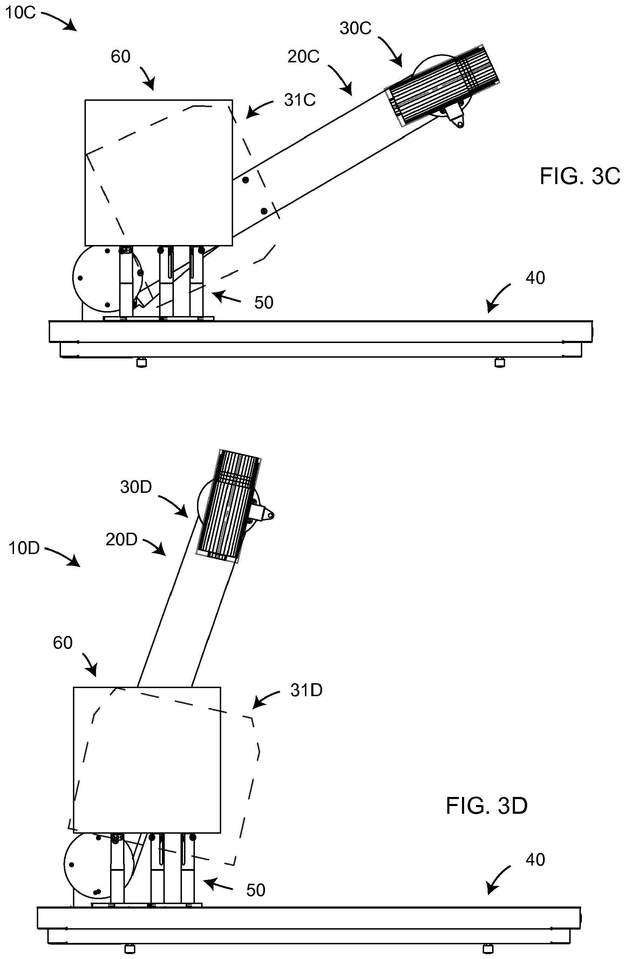

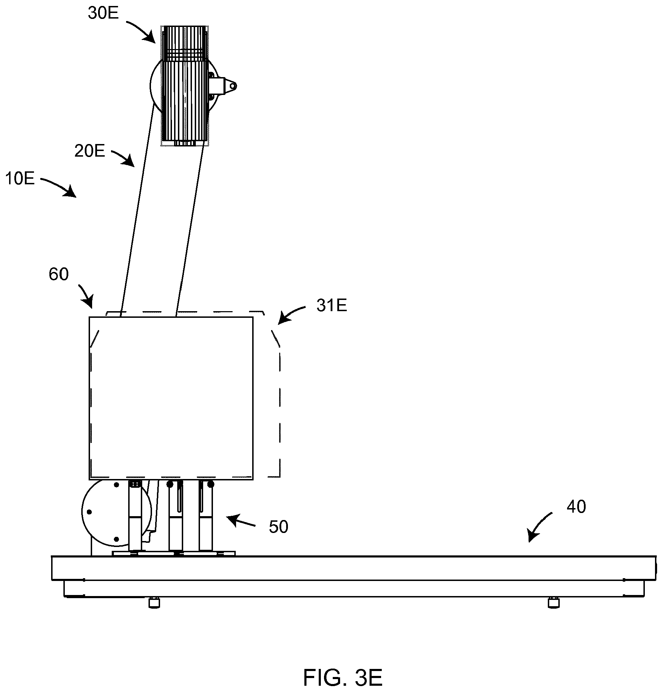

FIGs. 3A, 3B, 3C, 3D, 3E are side views of the system 10 with the mover mechanism 20 being positioned in different orientations 20A, 20B, 20C, 20D, 20E, respectively. At the same time, the measuring device 30 is moved into different positions 30A, 30B, 30C, 30D, 30E, respectively. The region of space over which the measuring instrument is capable of measuring 3D coordinates is indicated by the dashed lines as 31A, 31B, 31C, 31D, 31E, respectively. By moving the measuring instrument 30 to the collection of different positions, the measuring instrument 30 is able to measure an object 60 over a region of space that captures the full extent of the object 60 from a variety of different perspectives. Furthermore, by rotating the rotary-staging assembly 50, different sides of the object 60 are measured by the measuring device 30. Notice that the mover mechanism 20 changes the orientation of the 3D measuring device 30 to continuously point at the object 60 as the mover mechanism 20 changes its orientation relative to the base assembly 40. In other words, the orientation of the measuring device 30 relative to the structure of the mover mechanism 20 changes according to the orientation of the mover mechanism 20 relative to the base 40.

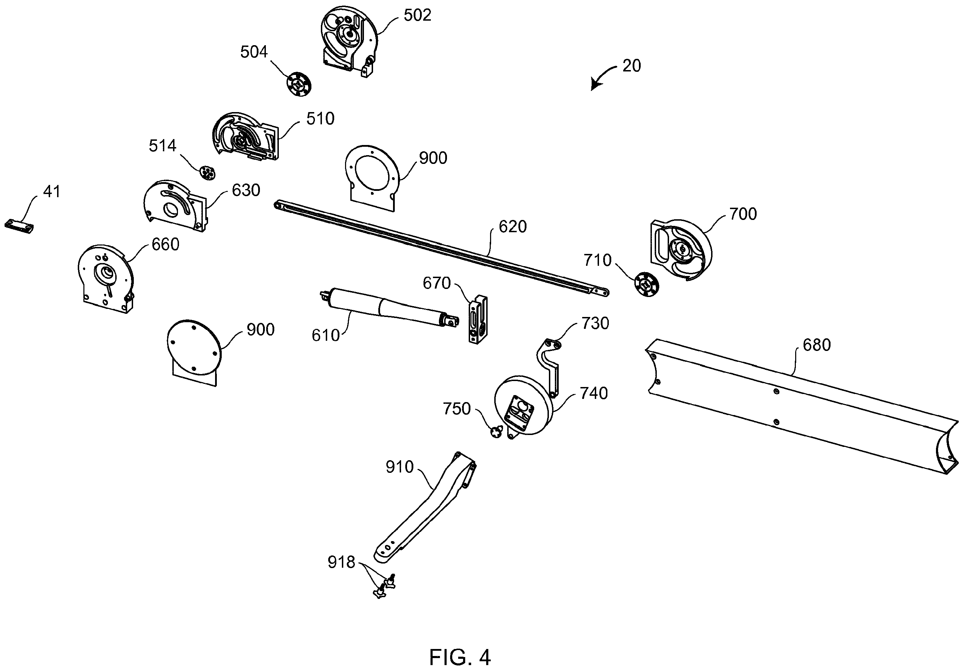

FIG. 4 is an exploded view of components within the mover mechanism 20 according to an embodiment. These elements include a base interface 41, a stationary hinge rear half 502, a frame bearing 504, a moving hinge rear half 510, a stationary shaft 514, a moving hinge front half 630, a stationary hinge front half 660, rear and front stationary hinge caps 900, an actuator 610, a rocker body 620, an actuator attachment 670, a crank body 680, a rear coupler 700, a coupler bearing 710, a rocker transfer link 730, a front coupler 740, a moving shaft 750, a 3D measuring device bracket 910, and thumb screws 918.

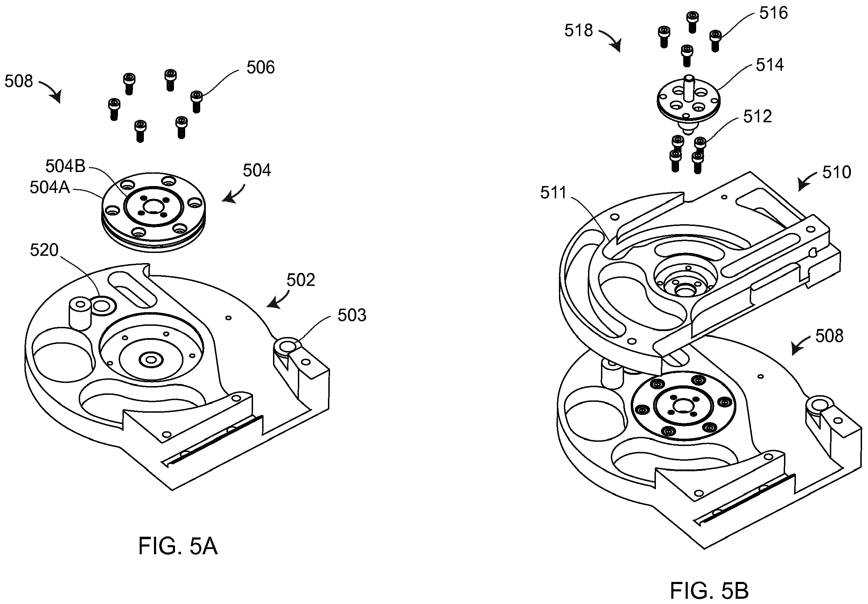

FIGs. 5A, 5B are exploded views of elements within a rear portion of a mover mechanism 20. The subassembly 508 includes the stationary hinge rear half 502, the frame bearing 504, and a collection of screws 506 that attach the frame bearing 504 to the subassembly 508. The subassembly 518 includes the subassembly 508, the moving hinge rear half 510, screws 512, the stationary shaft 514, and screws 516. Screws 512 attach the moving hinge rear half 510 to the subassembly 508. The screws 516 attach the stationary shaft 514 to the moving hinge rear half 510. In an embodiment, the frame bearing 504 is a sealed face-mount crossed-roller bearing having an inner ring 504A that rotates within an outer ring 504B. The moving hinge rear half 510 is thereby enabled to rotate relative to the stationary hinge rear half 502.

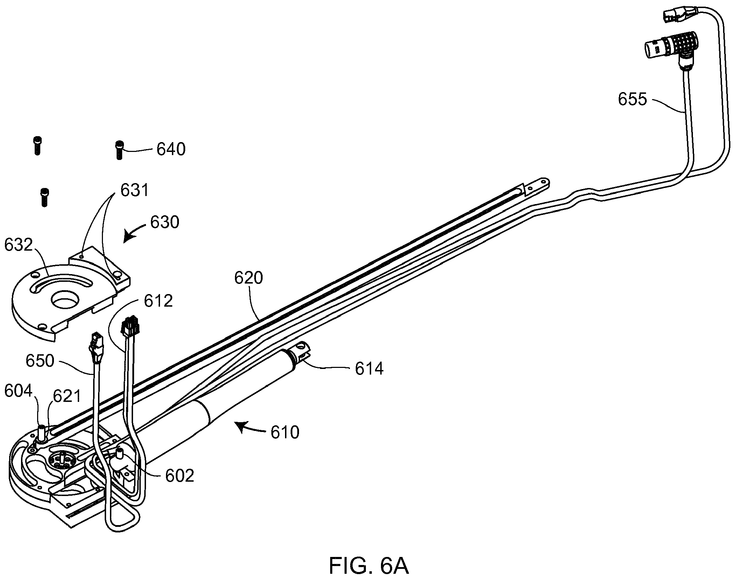

FIG. 6A is a partially exploded view of a collection of components attached to the subassembly 518. Pin 602 attaches the actuator 610 to hole 503 of the stationary hinge rear half 502. In an embodiment, the actuator is an in-line actuator such as a Regner RA 38 actuator manufactured by Regner company with headquarters in Girona, Spain. In an embodiment, the actuator is a linear actuator, which is an actuator that produces motion in a straight line. In an embodiment, the actuator is further an electric linear actuator that produces linear motion through the application of an electric current. In an embodiment, the actuator 610 includes an electrical power cable 612. A pin 604 attaches the rocker body 620 through a slot 511 on the moving hinge rear half 510 and onto the hole 520 in the stationary hinge rear half 502. A pin 604 passes through a slot 632 in the moving hinge front half 630, which is attached with screws 640 to the subassembly 518. In an embodiment, an Ethernet cable 650 and a power cable 655 are routed between the actuator 610 and the rocker body 620.

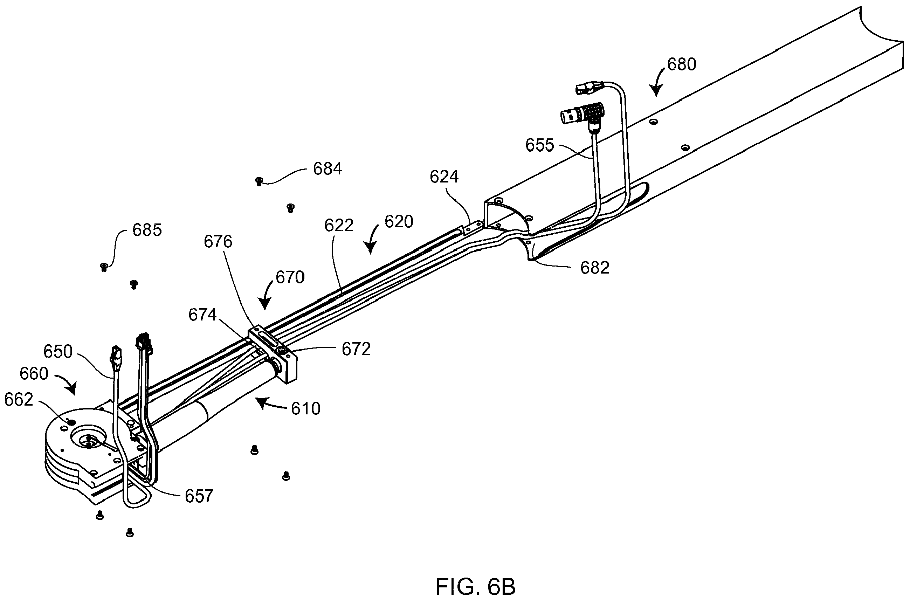

FIG. 6B is a partially exploded view showing additional components added to the assembly of FIG. 6A. The actuator attachment 670 attaches to the actuator clevis rod end 614 by a pin through the attachment hole 672. The actuator attachment 670 captures the cables 650, 655 in the slot 674. An encoder cable 657 is added to the collection of cables. The cables 650, 655 pass through the crank body 680, being routed first through a crank body slot 682. The actuator attachment 670 is attached to the crank body 680 by screws 684. The crank body 680 is attached with screws 685 to holes 631 in the moving hinge front side 630.

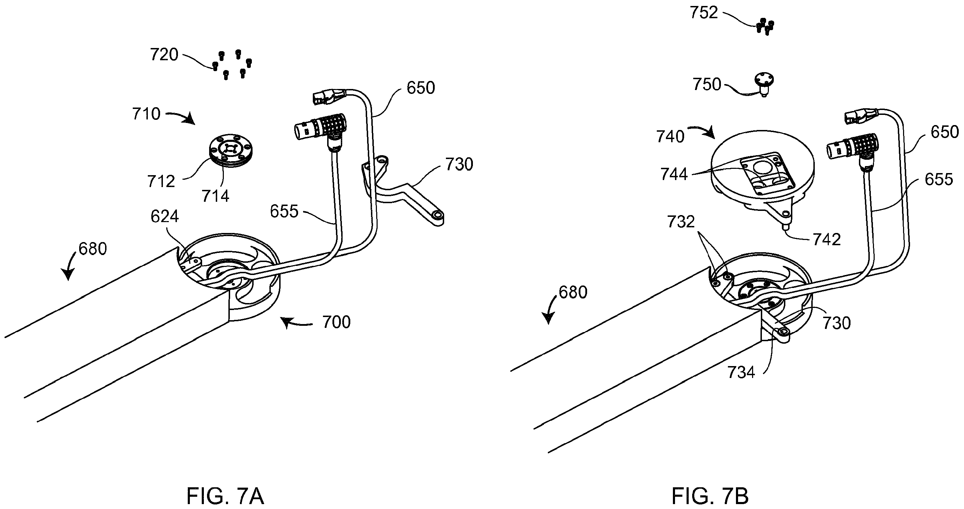

FIGs. 7A, 7B are partially exploded views of components being further attached to the assembly of FIG. 6B. In an embodiment, the rear coupler 700 is attached with two screws (not shown) to the bottom side of the crank body 680. An outer ring 712 of the coupler bearing 710 attaches with screws 720 to the rear coupler 700. The rocker transfer link 730 is attached to the rocker body end 624 with screws 732. Pin 742 attaches the front coupler 740 to hole 734 of the rocker transfer link 730. Cables 650, 655 are routed through coupler holes 744 to secure them to the assembly. Screws 752 attach the moving shaft 750 and the front coupler 740 to coupler bearing inner ring 714. The moving shaft 750 is included to provide a way to optionally attach a rotary encoder (not included in the embodiment of illustrated in FIG. 7B) to the inner ring 714.

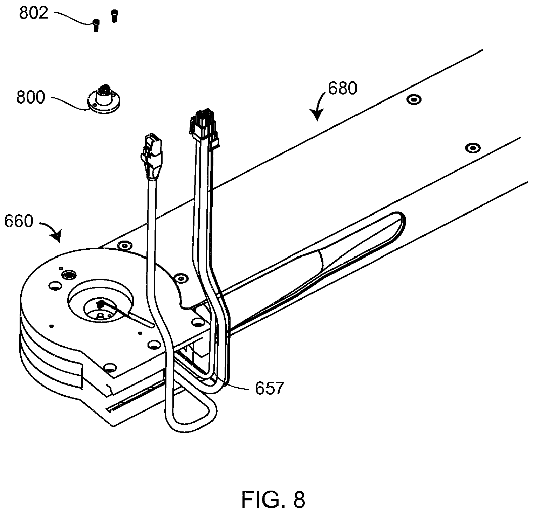

FIG. 8 is a partially exploded isometric view of assembly elements shown in FIG. 6B, as well as a rotary encoder 800 that is attached to encoder cable 657 with screws 802 to the stationary hinge front half 660. In an embodiment, the rotary encoder 800 is an absolute magnetic encoder MAE3 made by US Digital, a company having headquarters in Vancouver, Washington. Such an encoder may have an accuracy that is a fraction of an angular degree. In another embodiment, the rotary encoder 800 is a Gurley R137 incremental rotary encoder manufactured by Gurley Precision Instruments of Troy, New York. The encoder index of the Gurley R137 may be used to home the actuator. In yet another embodiment, these encoders are replaced by a more accurate angular encoder such as an encoder that includes a glass disk having closely spaced lines, the angular position of which is determined using read heads that transmit light through or reflect light off the disk. Such more accurate angular encoders may have angular accuracies on the order of one arcsecond.

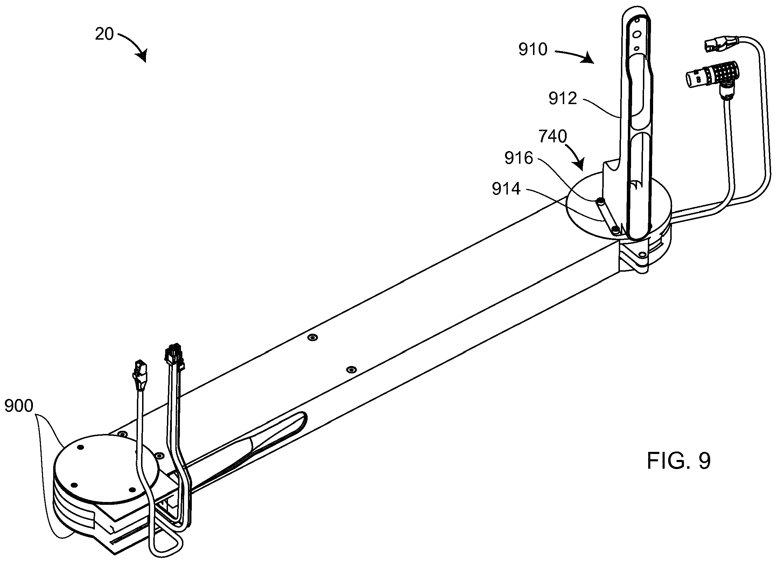

FIG. 9 is an isometric view of the mover mechanism 20 viewed from the bottom of the assembly. The mover mechanism 20 is obtained by adding front and rear stationary hinge caps 900 to the front and rear halves of the stationary hinges 502, 660, respectively. In addition, the 3D measuring device bracket 910 is attached to the front coupler 740 by attaching a bracket base 914 of the bracket 910 with screws 916. The bracket surface 912 is contoured to the shape of the 3D measuring device. For the exemplary 3D measuring device 30, the bracket surface has a smooth, rounded appearance. In an embodiment, the bracket 910 may be removed and replaced with a differently shaped bracket contoured to fit other types of 3D measuring devices.

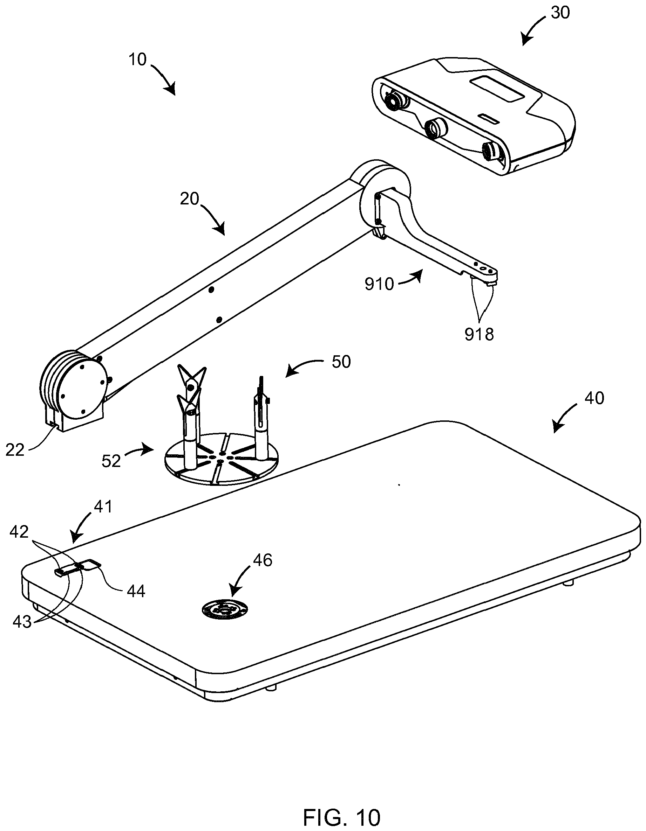

FIG. 10 is a partially exploded view of the 3D measuring system 10, including the mover mechanism 20, the non-contact 3D measuring device 30, the base assembly 40, and the rotary-staging assembly 50. The base assembly includes a base interface 41 and a motorized rotary stage top 46. In an embodiment, the base interface has a keystone shape and is attached to base assembly 40 with screws 42. The rotary-staging assembly includes a platen 52 that is attached to the motorized rotary stage top 46 with screws (not shown). The mover mechanism 20 includes a keystone-shaped slot 22 that slides onto the base interface 41. The mover mechanism 20 is affixed to the base interface 41 with screws (not shown) through screw holes 43. The cables 650, 655, 612, 657 (Figs. 6A, 6B) are routed from the mover mechanism 20 through the base opening 44 to electrical components within the inner portion of the base assembly 40. The measuring device 30 is attached to the bracket 910 with thumb screws 918.

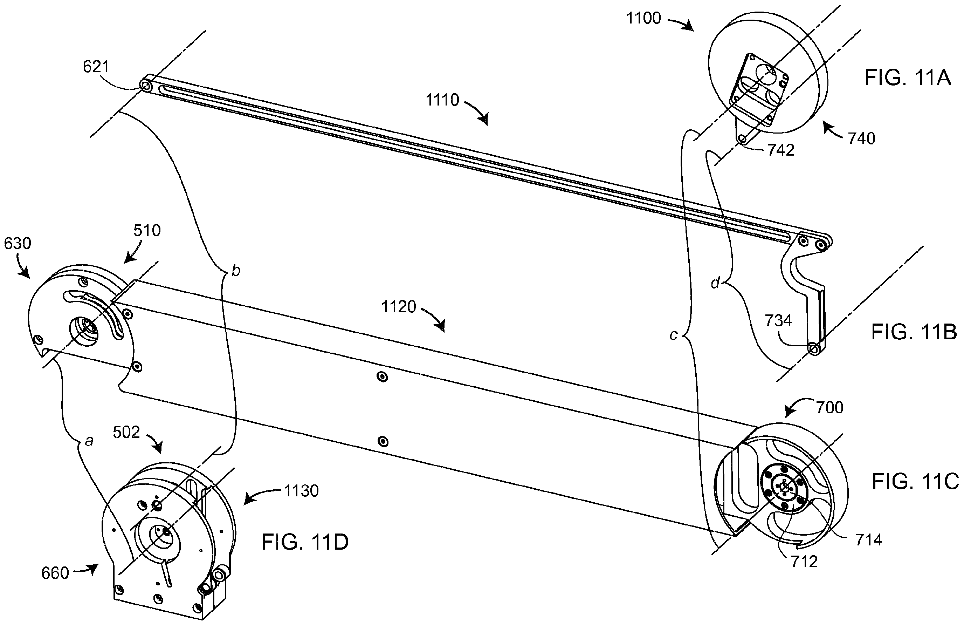

FIGs. 11A, 11B, 11C, 11D are isometric views of four assemblies within the mover mechanism 20: a coupler assembly 1100, a rocker assembly 1110, a crank assembly 1120, and a frame assembly 1130, respectively. The frame assembly 1130, which is rigidly affixed to the base assembly 40, includes the stationary hinge front half 660 and the stationary hinge rear half 502. The crank assembly 1120 includes the moving hinge front half 630 and the moving hinge rear half 510. These four components 660, 502, 630, 510 share a common central axis *a* corresponding to the axis of rotation of the frame bearing 504.

The pin 604 (FIG. 6A) attaches the hole 621 of the rocker body 620 to the hole 520 of the stationary hinge rear half 502. Hence the rocker assembly 1110 and the frame assembly 1130 share a common axis of rotation *b* that passes through the pin 604, the hole 520, and the hole 621. The axis *b* is stationary with respect to the base assembly 40. The pin 604 passes through the slot 632 (FIG. 6A), which permits the crank assembly 1120 to freely rotate about the axis *a*.

In FIG. 11C, the coupler bearing outer ring 712 is screwed to the rear coupler 700. The front coupler 740 is screwed to the coupler bearing inner ring 714. Hence the crank assembly 1120 and the coupler assembly 1100 share the common axis of rotation *c.* In FIGs. 11A, 11B, the hole 734 of the rocker transfer link 730 is attached to the pin 742 of the front coupler 740. Hence the rocker assembly 1110 and the coupler assembly 1100 share the common axis of rotation *d.*

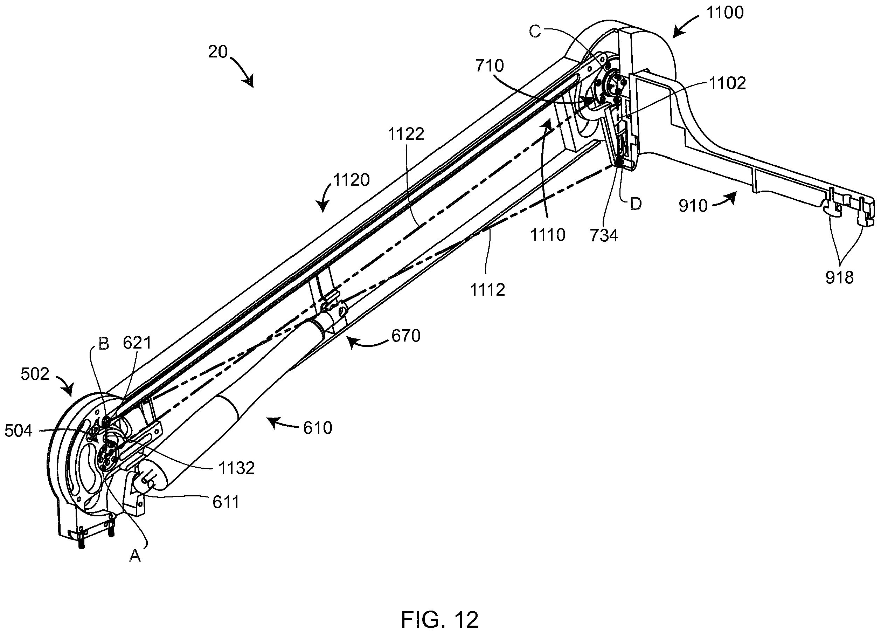

FIG. 12 is a partial cross-sectional view of the mover mechanism 20. The stationary hinge rear half 502 is a portion of the frame assembly 1130 (FIG. 11D). The frame assembly 1130 and the crank assembly 1120 rotate about the common axis *a*. The crank assembly 1120 may be considered to rotate about the center of the frame bearing 504 at a point A. The coupler assembly 1100 attached on the other end of the crank assembly 1120 rotates about the axis c. The coupler assembly may be considered to rotate about the center of the coupler bearing 710 at the point C. A crank link 1122 may be drawn between the points A and C to represent the position of the crank assembly 1120 in space. The in-line actuator 610 is fixed relative to the base assembly at the point 611 and is further attached to the actuator attachment 670, which is fixed to the crank body 680. As the actuator moves its internal rod outward, it presses against the actuator attachment 670, causing the crank link 1122 to increase its angle relative to the base assembly 40.

The rocker assembly 1110 may be considered to rotate about the point B, which corresponds to the hole 621. A frame link 1132 may be drawn between the points A and B to represent the position of the frame assembly 1130, which is fixed in space relative to the base assembly 40. The other end of the rocker assembly 1110 terminates at the point D, which corresponds to the hole 734 and the coupler pin 742. A rocker link 1112 may be drawn between the points B and D. A coupler link 1102 may be drawn between the points C and D. During rotation of the mover mechanism 20, the lengths of the frame link 1132, the crank link 1122, the rocker link 1112, and the coupler link 1102 each remain constant because of mechanical constraints in the mover mechanism 20. However, the angle of the coupler link 1102 relative to the base assembly 40 changes at a slightly higher rate than does the crank link 1122. As a result, the 3D measuring device 30 is kept pointed at the object 60 as illustrated in FIGs. 3A, 3B, 3C, 3D, 3E.

The mover mechanism 20 is an example of a four-bar linkage, defined as a mechanism having four bodies, called bars or links, connected in a loop by four joints. The four links illustrated in FIG. 12 are the frame link 1132 connected between the joints A and B, the crank link 1122 connected between joints A and C, the rocker link 1112 connected between the joints B and D, and the coupler link connected between joints C and D. In the mover mechanism 20, the effect of the four-bar linkage is to produce a desired two-fold movement with a relatively low-cost and light-weight structure and actuator. The desired two-fold movement includes a first movement of the mover mechanism to a range of desired angles relative to the base assembly 40 and a second, simultaneous movement of the bracket 910 that holds the 3D measuring device 30. This second movement keeps the 3D measuring device pointed at the object under test. In an embodiment, the mover mechanism is used in conjunction with a motorized rotary-staging assembly 50, which enables all portions of an object on the assembly 50 to be viewed by a first movement covering only around 90 degrees.

In an embodiment, the 3D measuring device 30 has a weight of 5 kg (11 pounds). A torque of around 50 to 100 Newton-meter (Nm) would be desired to drive the mover mechanism 20 to the desired positions. One possibility for driving the mover mechanism 20 would be to use a direct drive motor. A direct drive motor is a motor that provides its driving force without first going through a gearbox. Use of a direct drive motor to provide this level of torque would require a 10 to 20 kg motor, which is relatively very heavy compared to desired overall weight of the system 10 to 25 kg.

Another possibility would be to use a smaller motor operable to drive gears. Examples of gearing that might be used include worm, harmonic, cycloidal, and planetary drives, but all these have problems that make them unsuitable for the present application. Worm-driven gearboxes having suitable precision and quality for the present application are still relatively heavy - about 8 to 12 kg. Harmonic and cycloidal drives are small, light, and usually not back-drivable, but they are relatively very expensive, usually over $5000. Gearboxes based on planetary drives are relatively light and inexpensive, but have several disadvantages. They can be back driven, which is equivalent to saying that they are not self-locking. Gears that are not self-locking may result in the mover mechanism 20 dropping toward the base assembly 40 when power is removed. This can be a safety concern, as a person could be struck by the falling mover mechanism 20. In addition, to obtain sufficient the torque, multiple planetary drive stages may be used, resulting in a relatively high weight.

Other possibilities that might be considered for assisting in the delivery of the needed torque include torsional springs, compression/extension springs, and counterbalances, but these approaches all add significant weight to the resulting system.

The use of the four-bar linkage in combination with a linear actuator, such as the actuator 610, rather than a rotary motor, overcomes these limitations. The four-bar linkage and linear actuator arrangement illustrated in FIG. 12 is relatively much less expensive and lighter weight than the other motor and gearing arrangements described above. Another advantage of the four-bar linkage design is that, because the mover mechanism has gravity preload that is nearly constant, backlash in the system in nearly eliminated. In an embodiment, the linear actuator includes a lead screw that provides relatively very large thrust for its size and weight. In addition, a linear actuator with a lead screw is self-locking, which provides the system 10 with the safety advantage described above.

Another potential safety hazard of moving machine is a "pinch point," defined as a point at which it is possible for person or part of a person's body to be caught between moving parts of a machine, or between the moving and stationary parts of a machine or between material and any part of the machine. In an embodiment, the design of the system 10 is designed to eliminate pinch points. As shown in FIGs. 10, 11, 12, moving elements that might potentially be pinch points are placed within enclosures, especially the enclosure of the crank assembly 1120, to eliminate their access by human operators.

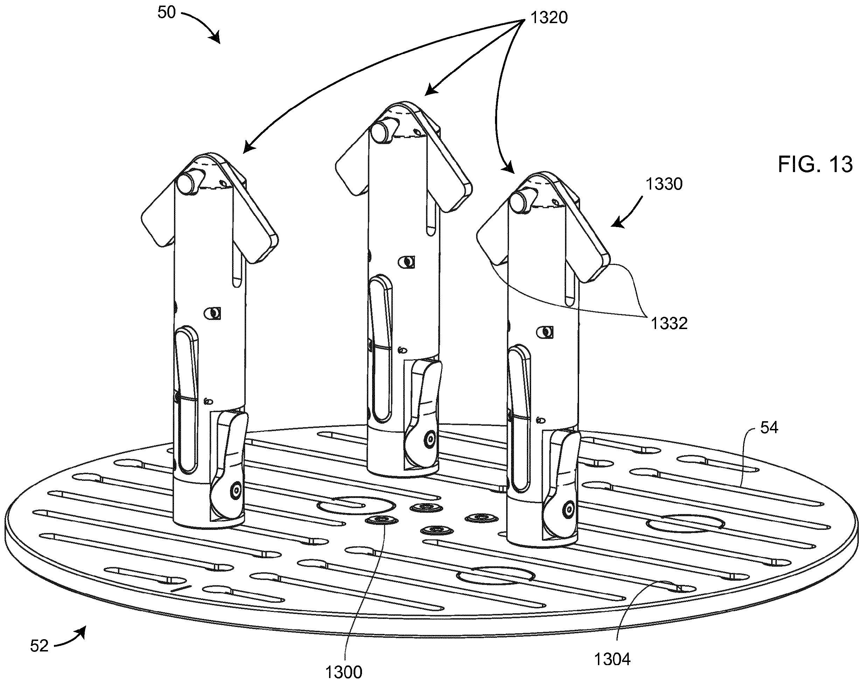

An exemplary rotary-staging assembly 50 is illustrated in FIGs. 13, 14, 15, 16, 17. In an embodiment, the rotary-staging assembly 50 includes the platen 52 and a plurality of mounting stands 1320. In an embodiment, the rotary-staging assembly 50 includes three mounting stands 1320. The platen includes mounting slots 54 and mounting holes 1300. In an embodiment, the mounting holes 1300 are used to attach the platen to the motorized rotary stage top 46. The mounting slots 54 enable the mounting stands 1320 to be attached to the platen 52 at many different positions. In other embodiments, the mounting slots are oriented radially or circumferentially rather than in the pattern shown in FIG. 13.

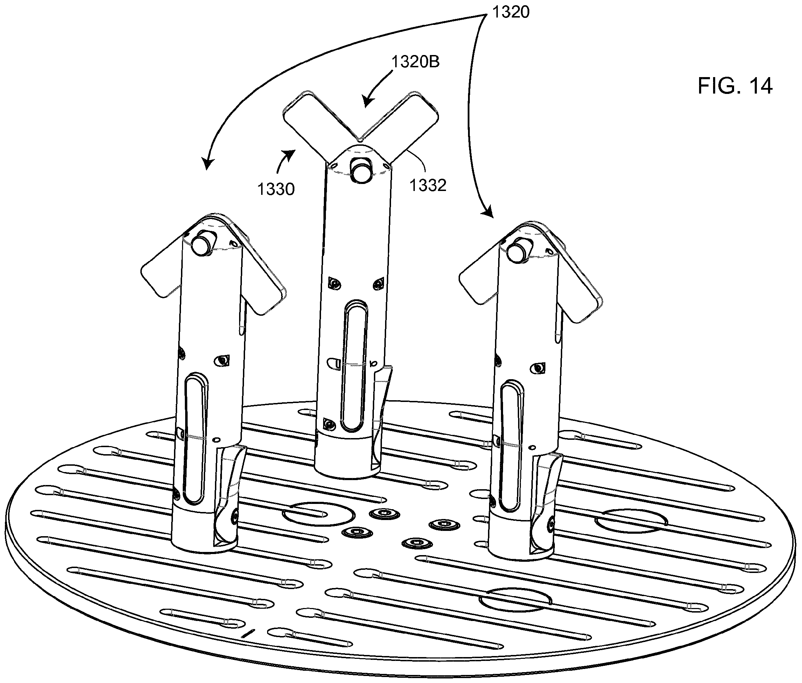

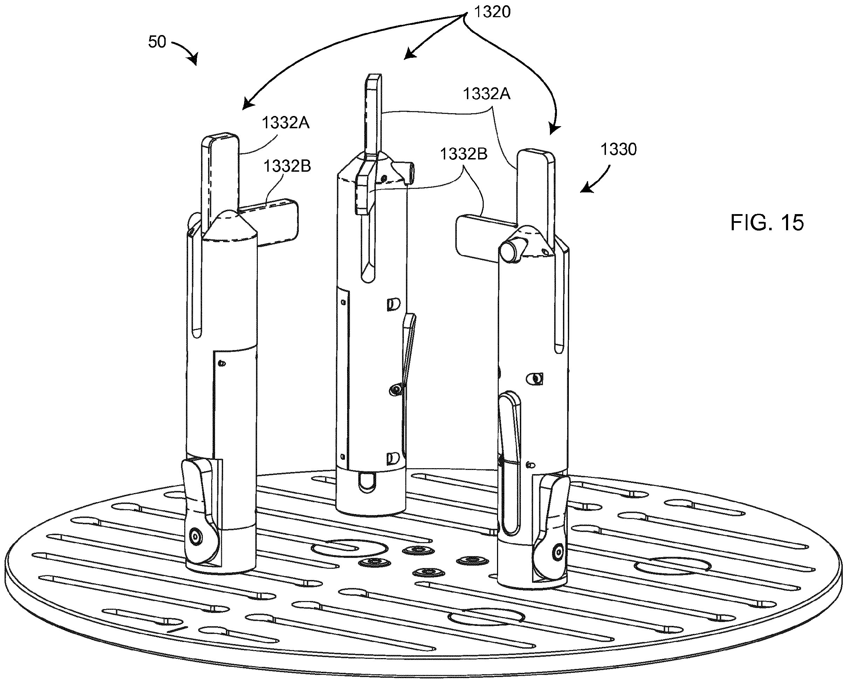

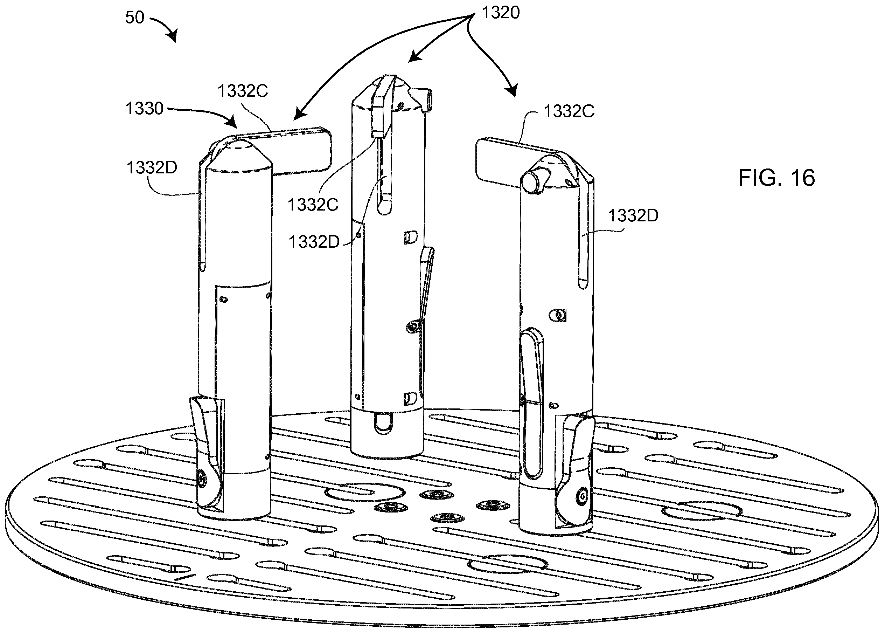

In an embodiment, each mounting stand 1320 includes a fork 1330 that may be oriented with prongs 1332 facing in a multiplicity of different directions. FIG. 13 shows three mounting stands 1330 with all three stands having the prongs 1332 pointed downward. FIG. 14 shows three mounting stands with one of the stands 1320B having a fork 1330 with prongs 1332 pointing upward. FIG. 15 shows three mounting stands, each with a fork 1330 having one prong 1332A pointing upward and the other prong 1332B pointed to the side. FIG. 16 shows three mounting stands 1320, each with a fork 1330 having one prong 1332C pointing to the side and one prong 1332D pointed downward. In the embodiment of FIGs. 15, 16, the three prongs pointed to the side on the three stands form a flat platform on which an object can be placed.

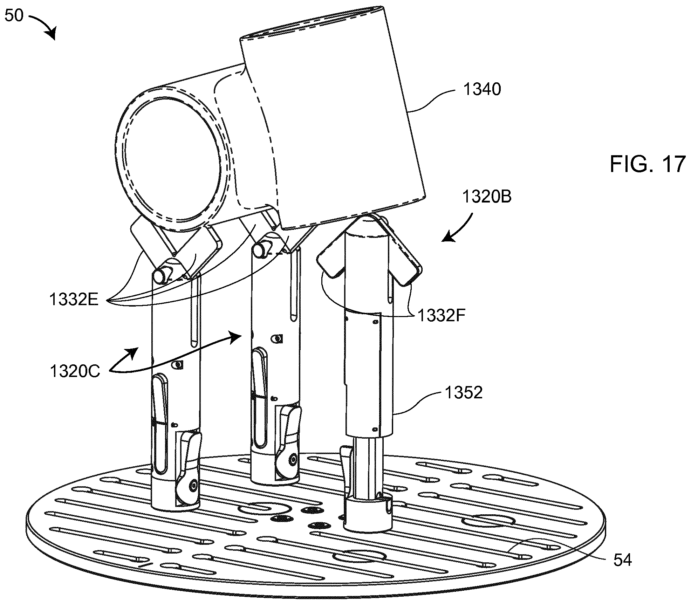

FIG. 17 shows three mounting stands, a post 1352 of one stand 1320B being raised higher than the posts of the two other stands 1320C. The three stands in the example of FIG. 17 are used to support an object 1340, which is to be measured by the 3D measuring device 30. Each of the mounting stands 1320C uses its two upward pointing prongs 1332E to support the object 1340 at two contact points. Hence the four upward facing prongs 1332E provide support for a cylindrically shaped portion of the object 1340. The mounting stand 1320B has its prongs 1332F turned downward, leaving one mounting point to support the object 1340, thereby providing a suitable support for the object 1340. The three stands 1320B, 1320C are adjusted on mounting slots 54 to provide spacing between prong supports to correctly support the object 1340. Furthermore, the prongs 1322 of the two mounting stands 1320C have been oriented to correctly support the cylindrically shaped portion of the object 1340.

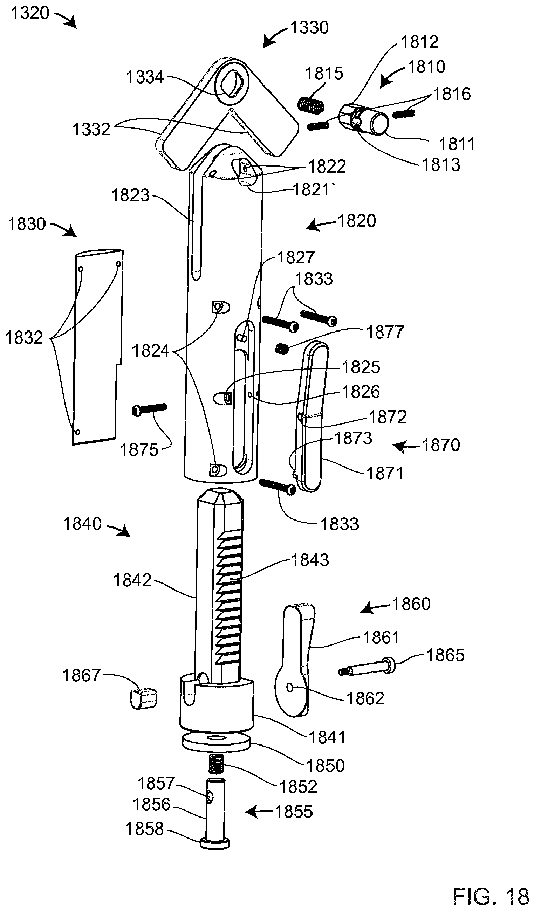

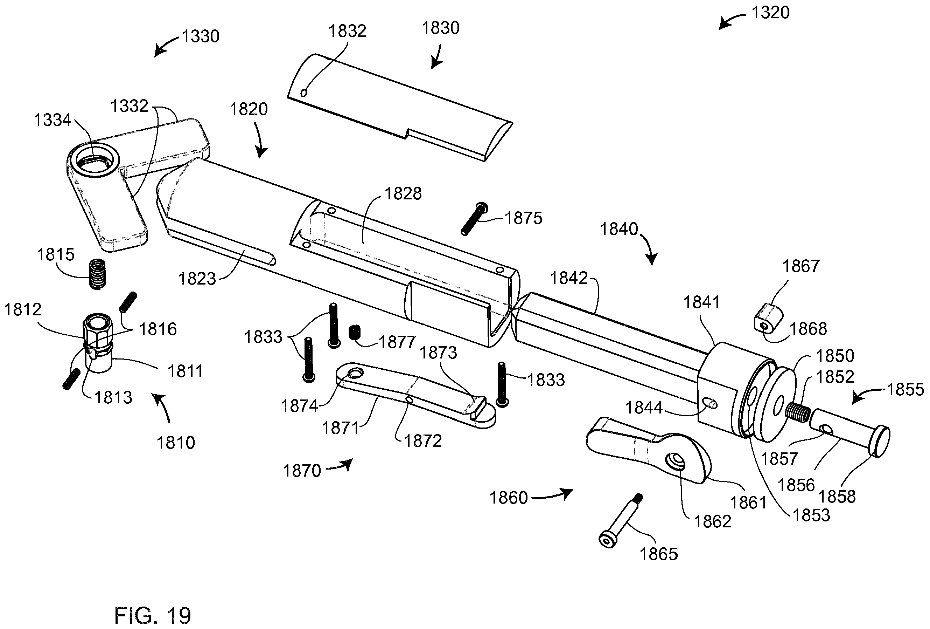

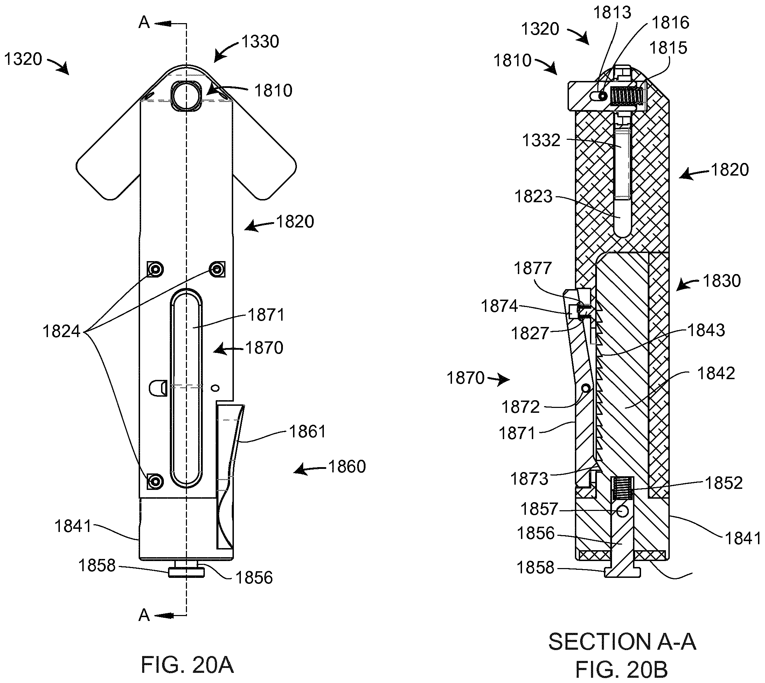

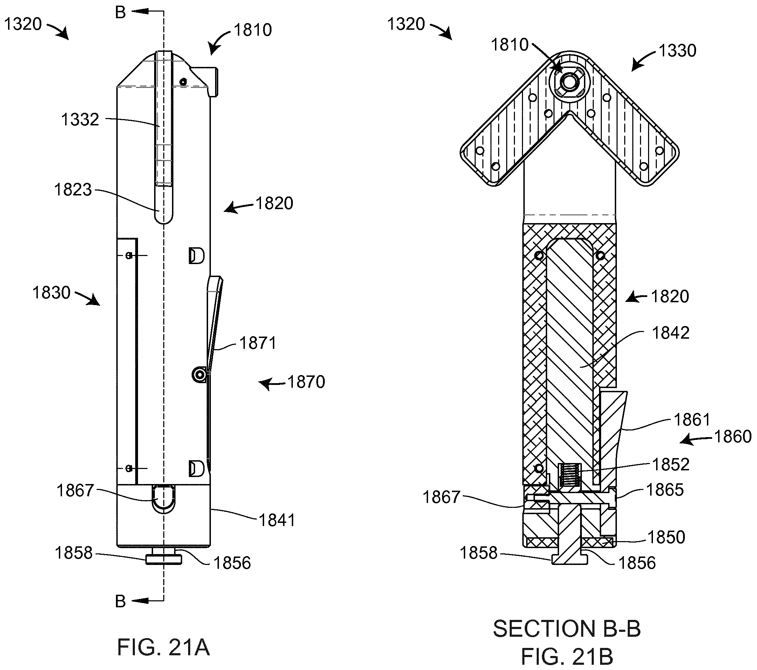

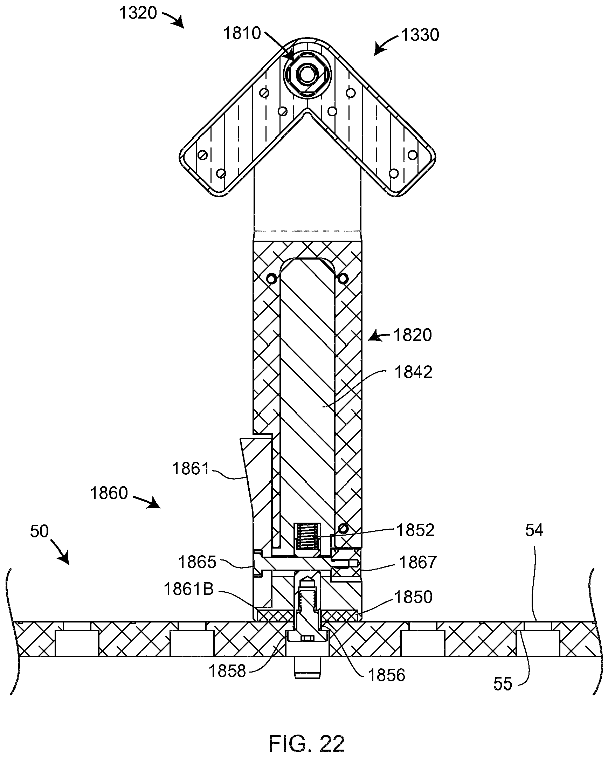

FIGs. 18, 19, 20A, 20B, 21A, 21B are first exploded view, second exploded view, front view, first section view, side view, second section view of a mounting stand 1320, respectively, according to an embodiment. FIG. 22 is a cross section view of a mounting stand and platen according to an embodiment. Referring now to these figures, in an embodiment the mounting stand 1320 includes a fork 1330, an orientation lock 1810, a yoke 1820, a yoke cover 1830, a support post 1840, a base insert 1855, a cam adjuster 1860, and a height lever 1870. In an embodiment, the fork 1330 includes two prongs 1332 and a square hole 1334. In an embodiment, the yoke includes a slot 1823, a square yoke hole 1821 into which are drilled holes for set screws 1816. In an embodiment, the fork 1330 slid into the slot 1823 is held in place by the orientation lock 1810, which is inserted into the square hole 1821 and slid through the square hole 1334. The orientation lock 1810 includes a first portion 1811 having a round cross section and a second portion 1812 having an octagonal cross section. A compression spring 1815 presses outward on the orientation lock 1810 which is confined to the square hole 1821 by the two set screws 1816, which are screwed into tapped holes 1822 and meet up in the slot 1813 of the orientation lock 1810. The orientation of the fork 1330 is adjusted by pressing inward on the orientation lock 1810 so that the round portion 1811 sits within the square hole 1821, enabling the fork 1330 to be freely turned. When the orientation lock 1810 is released, the fork 1330 will be held in place in one of four angular orientations 0, 90, 180, 270 degrees if the sides of the octagonal portion 1812 of the orientation lock 1810 align with the sides of the square hole 1821. Screws 1833 pass through untapped holes 1824 and screw into tapped holes 1832 to hold the yoke cover 1830 in contact with the yoke 1820.

The support post 1840 includes a base section 1841 and a post 1842 having ratchet teeth 1843. The shaft 1842 is inserted into a yoke cavity 1828. Compression spring 1877 sits over yoke projection 1827. Height lever 1870 is attached to the yoke by passing screw 1875 through untapped holes 1825, 1872 and screwing it into tapped hole 1826. The hole 1872 marks the fulcrum of the height lever 1870. The height of the yoke 1820 is adjusted by pressing the height lever 1872 inward at its top, causing the compression spring 1877 to move inward, releasing the pawl 1873. When the yoke 1820 has been adjusted to the desired height, the top of the height lever is released, causing the pawl 1873 to lock onto one of the teeth in the ratchet teeth 1843.

A pad 1850 and compression spring 1852 are pressed into the hole 1853 by a base insert 1855, which includes a base insert body 1856, a hole 1857, and a base clamp 1858. A shoulder screw 1865 passes through hole 1862 of CAM 1861, the hole 1844 of base section 1841, and the hole 1857 before screwing into threaded hole 1868 of a CAM retention nut 1867. To adjust the position of the mounting stand 1320, the base clamp 1858 is inserted into one of the platen holes 1304 (FIG. 13) and slid into the mounting slot 54 to the desired position on the platen 52. To lock the mounting stand 1320 into position on the platen 52, the cam adjuster 1860 is turned into a vertical position. The CAM is non-circular and in an embodiment is longer at the center of lower portion 1861B shown in FIG. 22. As the CAM 1861 is turned toward the vertical position, the longer portion 1861B of the CAM pushes downward on the pad 1850, causing the shoulder screw 1865 to move upward, compressing the compression spring 1852, causing the base clamp 1858 to pull against a lower lip 55 of the slot 54 and lock in place.

The mounting stands 1320 and the platen 52 provide advantages over other available mounting stands and platens. The mounting stands 1320 provide advantages with respect to the support element, which includes the fork 1330, the orientation lock 1810, and the upper portion of the yoke 1820. One advantage of the support element is that it is adjustable yet captive, which is to say that the fork 1330 is adjustably secured to the yoke 1820 by the orientation lock 1810. Keeping the fork 1330 captive reduces effort in searching for support accessories to attach to the mount. Another advantage of the support element in one or more embodiments is that the allowable rotation angles are discrete, in this case, just 0, 90, 180, and 270 degrees. By using discrete angles, repeatably of the mounting assembly is improved over multiple uses. Another advantage of the support element of one or more embodiments is that rotation is enabled by simply pressing inward on the orientation lock 1810. An operator can easily press inward with on the orientation lock 1810 and turn the fork 1330 to any of the four possible orientations.

Another advantage of the support element of one or more embodiments is that the four possible positions of the fork 1330 enable different ways of mounting objects. In a first position, illustrated by all three mounts 1320 in FIG. 13, an object is supported at a single point on each of the three mounts 1320. A possible advantage of this arrangement is that it provides minimum contact of the object with the mounts 1320, thereby enabling more of the object to be view by the noncontact 3D measuring device 30, especially when the device 30 is viewing the underside of the object, as shown in FIG. 3A. In a second position, illustrated by all three mounts in FIG. 16, the three forks 1330 provide a flat platform on which to set an object. This arrangement has an advantage of relatively high stability but with minimum obscuration of the sides of objects. In a third position, illustrated by all three mounts in FIG. 15, the three forks 1330 provide not only a flat platform but also vertical guides, which may be used to align an object for repeated measurements. In a fourth position, illustrated by the two mounts 1320C in FIG. 17, prongs 1332E of the forks for these mounts are oriented as an upward V. As shown in FIG. 17, this shape is useful for supporting cylinders and other non-flat shapes.

The method of using a CAM adjuster 1860 to lock the mounting stand 1320 to a platen such as the platen 52 has many advantages including elimination of the tendency to rotate the mounting stand when tightening the stand to the platen. Another advantage is that the mount 1320 can be locked to the platen 52 using a single hand.

The method of using a ratchet and pawl mechanism to lock the yoke 1820 to the shaft 1840 has advantages over other adjustment methods. As in the case of support element adjustment discussed above, an advantage of the ratchet and pawl mechanism is that adjustments are made in discrete increments, which makes it easier to obtain repeatable adjustments at different times. With the ratchet and pawl mechanism, there is no tendency to rotate the mount 1320 while adjusting the height. Furthermore, the height adjustment can be made with one hand.

Most platens used with rotary tables today include holes or slots that are oriented radially. Radially oriented slots provide a limited number of positions for placing of mounts. In the present embodiment, the use of linear, parallel slots such as the slots 54 in FIG. 13 makes many more positions available for affixing mounting stands 1320 to a platen 52.

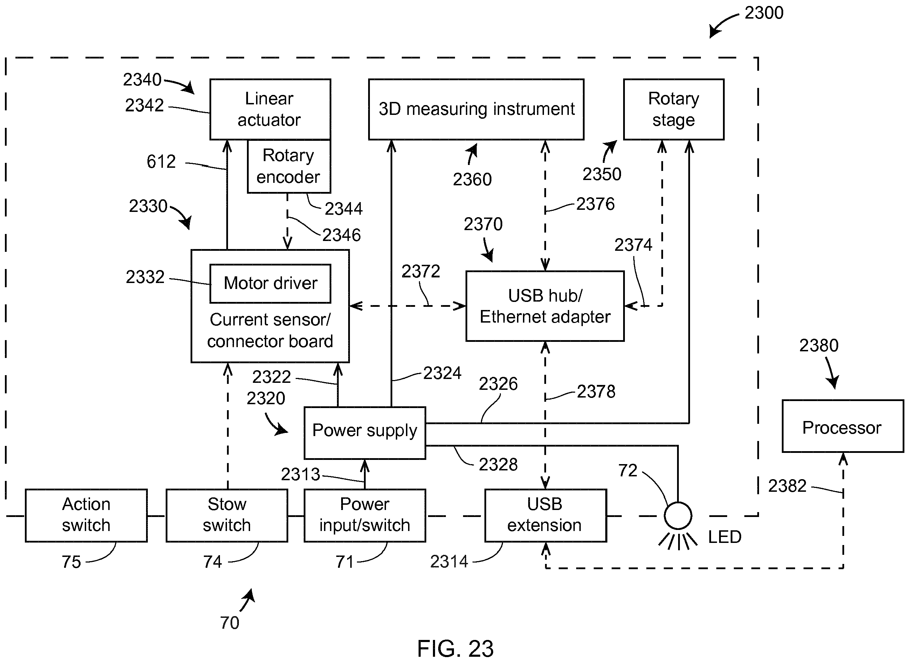

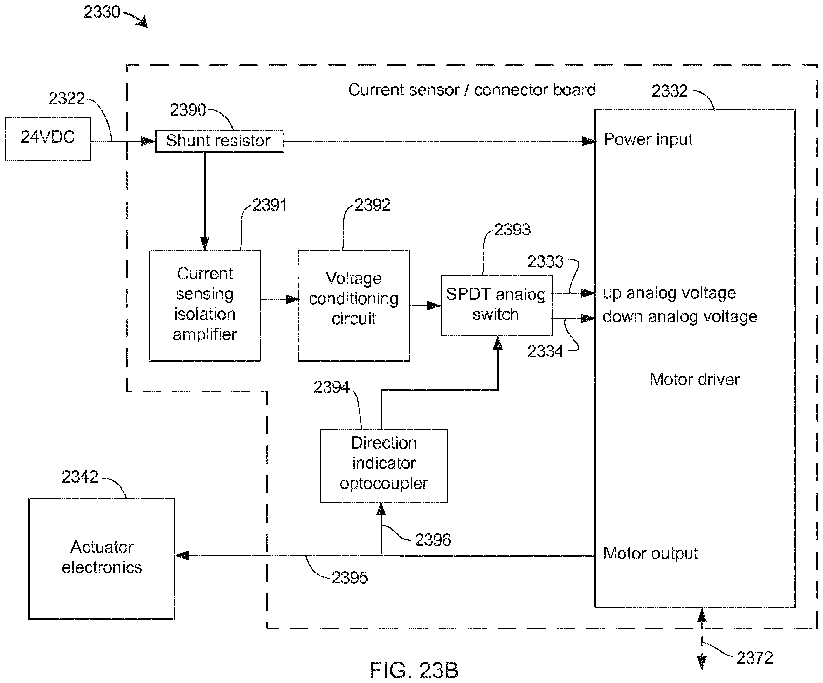

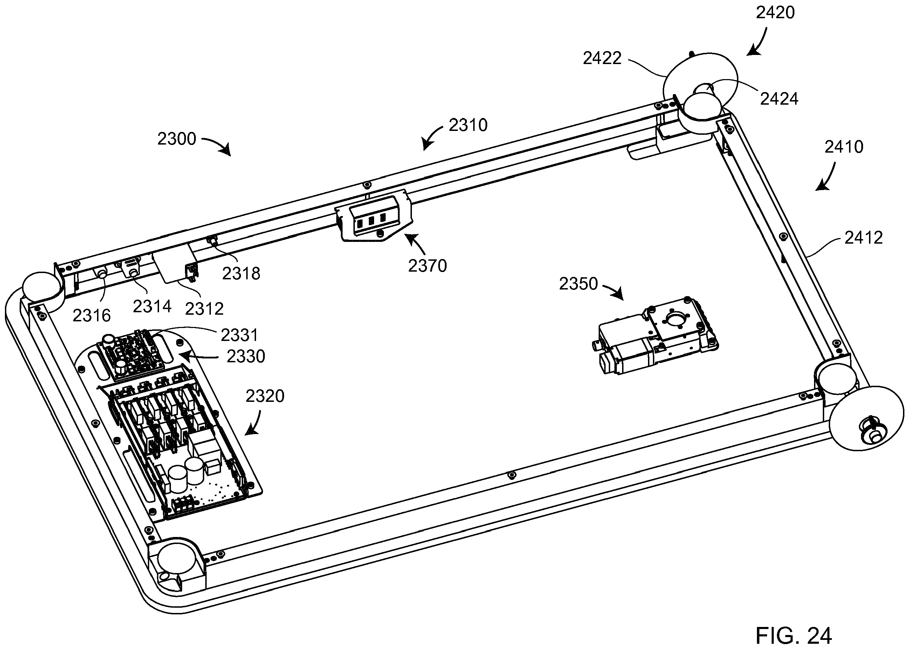

FIG. 23 is a block diagram of an electrical system 2300 of the system 10 according to an embodiment. FIG. 23B is a block diagram the current sensor / connector board 2330, also shown in FIG. 23. FIG. 24 is an isometric view of the electrical system 2300 (without cables) attached to a base frame 2410, which is part of the base assembly 40. In the embodiment illustrated in FIG. 24, elements of the UI panel 70 are shown on a different face of the base assembly 40 than in FIG. 1A. The UI panel 70 includes a power input receptacle and on/off switch 71 that, when switched on, sends AC power to a power supply 2320, causing an LED power indicator 72 to be illuminated. The power supply 2320 does not include internal or external fans and consequently does not produce acoustic noise or vibration.

In an embodiment, the interface panel 2310 also includes a USB (Universal Serial Bus) 3.0 panel-mount B extension 2314. In an embodiment, the interface panel further includes a stow switch 74, which causes lowering of the mover mechanism 20 when it is pushed, even if power on/off switch 71 has been switched off. In an embodiment, the power supply 2320 further sends power to the current sensor / connector board 2330, the motorized rotary stage 2350, and the 3D measuring instrument 30 having electrical components 2360. The current sensor / connector board 2330 further relays electrical power through electrical cable 612 to an actuator assembly 2340 and to the motor driver daughter board 2332 through electrical connector 2331 (FIG. 24). The actuator assembly 2340 includes the linear actuator 2342 and absolute encoder 2344. In an embodiment, the current sensor / connector board 2330 has a custom design and the motor driver 2332 is a Roboteq SDC2160 brushed DC motor controller manufactured by Roboteq, having headquarters in Scottsdale, Arizona, USA. In an embodiment, the motorized rotary stage 2350 is a Zaber X-RSW60C stage manufactured by Zaber company in Vancouver, British Columbia, Canada.

In an embodiment, an external or networked computer or other processor 2380 attaches to the system 10 through the USB panel-mount extension 2314 with a USB cable. The USB panel-mount extension 2314 includes a cable 2378 having a USB device jack 73 (FIG. 1A) that plugs into USB type B connector on a USB hub/Ethernet adapter 2370. In an embodiment, the adapter 2370 further includes A-type USB ports that are attached by cable 2372 to the current sensor / connector board 2330 and by cable 2374 to the rotary stage electronics 2350. The USB hub/Ethernet adapter 2370 is further attached by a 1 Gb/s Ethernet (IEEE 802.3) cable 2376 to the 3D measuring instrument electronics 2360. Digital signals are carried by the cables 2382, 2378, 2372, 2374, 2376. A digital signal is also sent from the absolute encoder electronics 2344 over the cable 2346 to the current sensor / connector board 2330. Digital signals are further exchanged between the current sensor / connector board 2330 and its daughter motor driver board 2332. A further digital signal is sent from the stow switch electronics 2316 to the current sensor/connector board 2330 when the stow switch 74 is pressed. In some embodiments, one or more processors are included within the electrical system 2300, either in addition to the processor 2380 or instead of the processor 2380.

FIG. 23B is a block diagram of elements within the current sensor / connector board 2330. The current sensor / connector board 2330 receives 24 VDC over line 2322 and sends a signal to the actuator electronics 2342 that controls the actuator speed and direction. The current sensor / connector board 2330 includes a shunt resistor 2390, a current sensing isolation amplifier 2391, a voltage conditioning circuit 2392, a single-pole double-throw (SPDT) analog switch 2393, a direction indicator optocoupler 2394, and a motor driver daughter board that holds the motor driver 2332. A portion of the electrical power from the 24 VDC supply is provided to the motor driver 2332. The 24 volts is also applied to the current sensing isolation amplifier 2391. The voltage conditioning circuit 2392 converts the current from the current sensing isolation amplifier 2391, which may vary between 0 and 1 amps, into a voltage between 0 and 4 volts that is proportional to the current from the amplifier 2391. The SPDT switch 2393 receives the voltage from the voltage conditioning circuit 2392 as well as a signal from the direction indicator optocoupler 2396. If the direction of movement of the actuator 610 causes the mover mechanism 20 to move upward, the SPDT switch 2393 provides a signal 2333 for the up analog voltage. If the direction of movement of the actuator 610 causes the mover mechanism 20 to move downward, the SPDT switch 2393 provides a signal 2334 for the down analog voltage. A microcontroller within the motor driver 2332 evaluates the up analog voltage and the down analog voltage to determine whether these voltages are within the allowable thresholds. If so, the mover mechanism 20 continues to move upwards or downwards. If the up analog voltage or the down analog voltage are outside the allowable thresholds, the microcontroller causes the motor driver to cut off the motor output to the line 2395 that goes to the actuator electronics 2342, thereby causing the mover mechanism 20 to freeze in place.

Digital values for the up analog voltage and the down analog voltage (one of which will be non-zero) are further provided over the line 2372 to the USB hub / Ethernet adapter 2370, which sends the values through the USB extension 2314 and USB cable 2382 to the processor 2380, which in an embodiment is an external computer. The processor 2380 returns to the motor driver 2332 a pulse-width modulation (PWM) value and also a sign (positive or negative) for the polarity of the PWM signal. The output lines 2395, 2396 each include two wires that differentially produce signals alternating between 0 and either +24 volts or -24 volts. The width of the pulses determines the speed of the mover mechanism 20 and the polarity (+24 or - 24 volts) determines the direction of movement. The direction indicator optocoupler 2396 receives the signals from the two wires on 2396 and sends to the switch 2393 a direction indicator voltage that indicates whether the actuator 610 is to cause the mover mechanism 20 to move upward, downward, or remain still. A reason for having the microcontroller within the motor driver 2332 cut off (set to zero) the signal to the actuator electronics 2342 when the up analog voltage or the down analog voltage are outside the allowable thresholds is to stop motion of the mover mechanism 20 when an unexpected force such as a force applied by a human hand is applied to it.

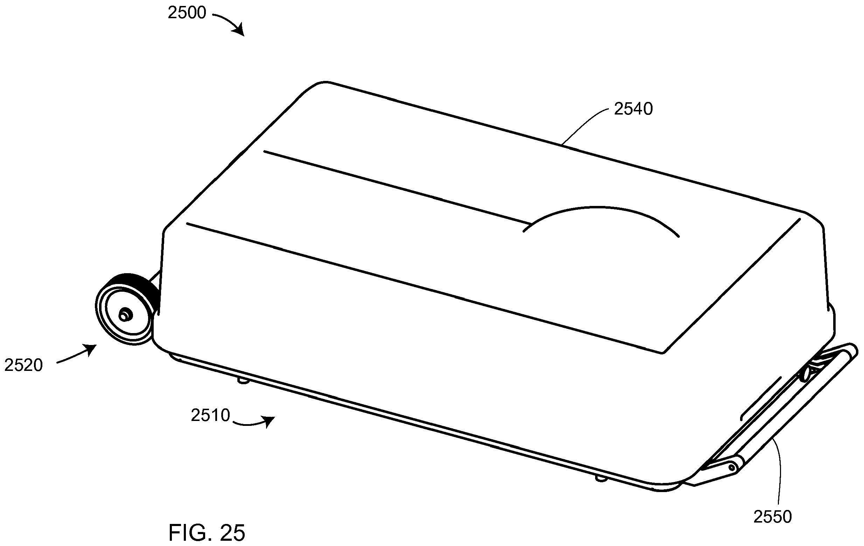

FIG. 25 is an isometric drawing showing the system 10 packed in a case 2500 with a wheel assembly 2520, a transport handle 2550, and a hard cover 2540 mounted on a bottom 2510 of the base assembly 40. The case may be used when transporting the system 10 from one location to another.

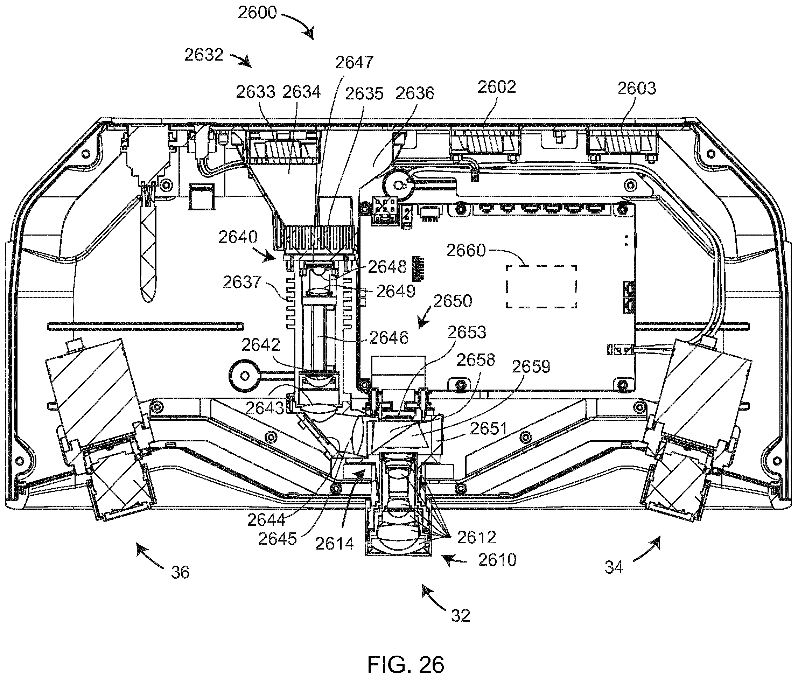

FIG. 26 is a top cross-sectional view 2600 of the 3D measuring instrument 30. In an embodiment, the 3D measuring instrument 30 is a triangulation scanner 30. The cross-sectional view 2600, taken along a plane through the center of the scanner 30, includes a projector 32, the first camera 34, and the second camera 36. The projector 32 includes a projector lens 2610 and a projector lens mount 2614. Projector lens 2610 includes projector lens elements 2612. In an embodiment, the scanner 30 further includes a projector-source assembly 2640 and a pattern-projection assembly 2650. In an embodiment, the projector-source assembly 2640 includes light source 2647, condensing lens elements 2648, 2649, light pipe 2646, lenses 2642, 2643, 2645, and mirror 2644. In an embodiment, the light source 2647 is a light-emitting diode (LED). The condensing lenses 2648, 2649 funnel light into the light pipe 2646. The light pipe 2646 reflects rays of light off reflective surfaces of the light pipe 2646. The purpose of the light pipe 2646 is to improve the homogeneity of the light from the condenser lenses 2648, 2649. Light passes through lenses 2642 and 2643 before reflecting off mirror 2644 and passing through lens 2645 into the pattern-projection assembly 2650.

In an embodiment, the pattern-projection assembly 2650 includes a first prism 2658, a second prism 2659, and a digital micromirror device (DMD) 2653. Together, the first prism 2658 and second prism 2659 comprise a total-internal-reflection (TIR) beam combiner. Light from lens 2645 strikes an air interface between the first prism 2658 and second prism 2659. Because of the index of refraction of the glass in the first prism 2658 and the angle of the first air interface relative to the light arriving from the lens 2645, the light totally reflects toward the DMD 2653. In the reverse direction, light reflected off the DMD 2653 does not experience TIR and passes either out of the projector lens assembly 2610 or onto a beam block 2651. In an embodiment, the DMD 2653 includes a large number of small micromechanical mirrors that rotate by a small angle of 10 to 12 degrees in either of two directions. In one direction, the light passes out of the projector 32. In the other direction, the light passes onto the beam block 2651. Each mirror is toggled very quickly in such a way as to enable reflection of many shades of gray, from white to black. In an embodiment, the DMD chip produces 1024 shades of gray.

The projector-source assembly 2640 is cooled by projector cooling system 2632 shown in FIG. 26. The projector cooling system 2632 includes fan 2633, chambers 2634, 2636, and heat sinks 2635, 2637. In an embodiment, the fan 2633 pushes air through chamber 2634 into the chamber 2636, and out the scanner 30 through a filtered exit. In this way, relatively cool outside air is forced past the heat sink 2635, thereby removing heat generated by the light source 2647 and stabilizing the temperature of the light source 2647. In an embodiment, elements within the scanner 30 are further cooled by fans 2602 and 2603 shown in FIG. 26. In an embodiment, a processor 2660 included within the scanner 30 coordinates projection of light patterns from the DMD 2653 and the capturing of images by the cameras 34, 36. In an embodiment, the processor 2660 further determines 3D coordinates of object points based on the projected patterns of light and the captured images.

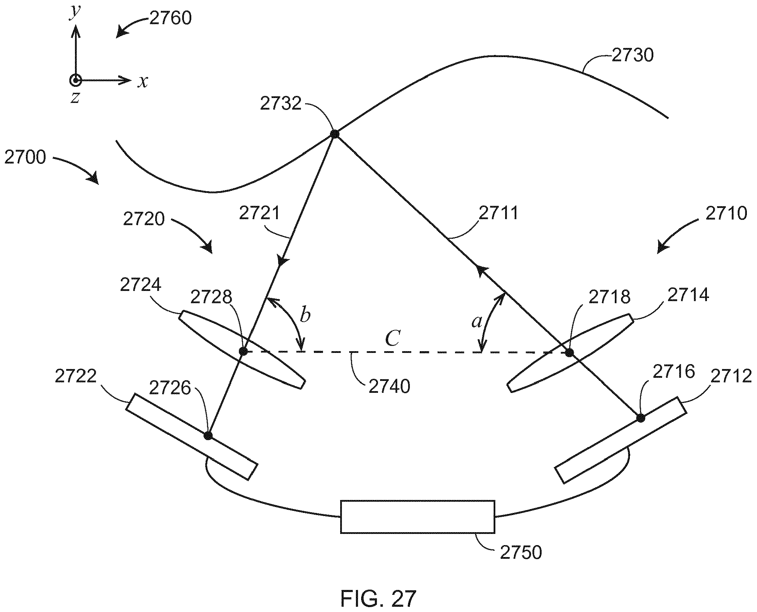

FIG. 27 shows a schematic representation of a structured light triangulation scanner 2700 that projects a pattern of light over an area on a surface 2730. The scanner 2700, which has a frame of reference 2760, includes a projector 2710 and a camera 2720. The projector 2710 includes an illuminated projector pattern generator 2712, a projector lens 2714, and a perspective center 2718 through which a ray of light 2711 emerges. The ray of light 2711 emerges from a corrected point 2716 having a corrected position on the pattern generator 2712. In an embodiment, the point 2716 has been corrected to account for aberrations of the projector, including aberrations of the lens 2714, in order to cause the ray to pass through the perspective center, thereby simplifying triangulation calculations.

The ray of light 2711 intersects the surface 2730 in a point 2732, which is reflected (scattered) off the surface and sent through the camera lens 2724 to create a clear image of the pattern on the surface 2730 on a photosensitive array 2722. The light from the point 2732 passes in a ray 2721 through the camera perspective center 2728 to form an image spot at the corrected point 2726. The image spot is corrected in position to correct for aberrations in the camera lens. A correspondence is obtained between the point 2726 on the photosensitive array 2722 and the point 2716 on the illuminated projector pattern generator 2712. As known in the art, the correspondence may be obtained by using a coded or an uncoded (sequentially projected) pattern. Once the correspondence is known, the angles *a* and *b* in FIG. 27 may be determined. The baseline 2740, which is a line segment drawn between the perspective centers 2718 and 2728, has a length *C.* Knowing the angles *a, b* and the length *C*, all the angles and side lengths of the triangle 2728-2732-2718 may be determined. Digital image information is transmitted to a processor 2750, which determines 3D coordinates of the surface 2730. The processor 2750 may also instruct the illuminated pattern generator 2712 to generate an appropriate pattern. The processor 2750 may be located within the scanner assembly, or it may be an external computer, or a remote server.

As used herein, the term "pose" refers to a combination of a position and an orientation. In embodiment, the position and the orientation are desired for the camera and the projector in a frame of reference of the scanner 2700. Since a position is characterized by three translational degrees of freedom (such as *x, y, z*) and an orientation is composed of three orientational degrees of freedom (such as roll, pitch, and yaw angles), the pose defines a total of six degrees of freedom. In a triangulation calculation, a relative pose of the camera and the projector are desired within the frame of reference of the scanner. As used herein, the term "relative pose" is used because the perspective center of the camera or the projector can be located on an (arbitrary) origin of the scanner system; one direction (say the x axis) can be selected along the baseline; and one direction can be selected perpendicular to the baseline and perpendicular to an optical axis. In most cases, a relative pose described by six degrees of freedom is sufficient to perform the triangulation calculation. For example, the origin of a scanner can be placed at the perspective center of the camera. The baseline (between the camera perspective center and the projector perspective center) may be selected to coincide with the x axis of the 3D imager. The *y* axis may be selected perpendicular to the baseline and the optical axis of the camera. Two additional angles of rotation are used to fully define the orientation of the camera system. Three additional angles or rotation are used to fully define the orientation of the projector. In this embodiment, six degrees-of-freedom define the state of the scanner: one baseline, two camera angles, and three projector angles. In other embodiment, other coordinate representations are possible.

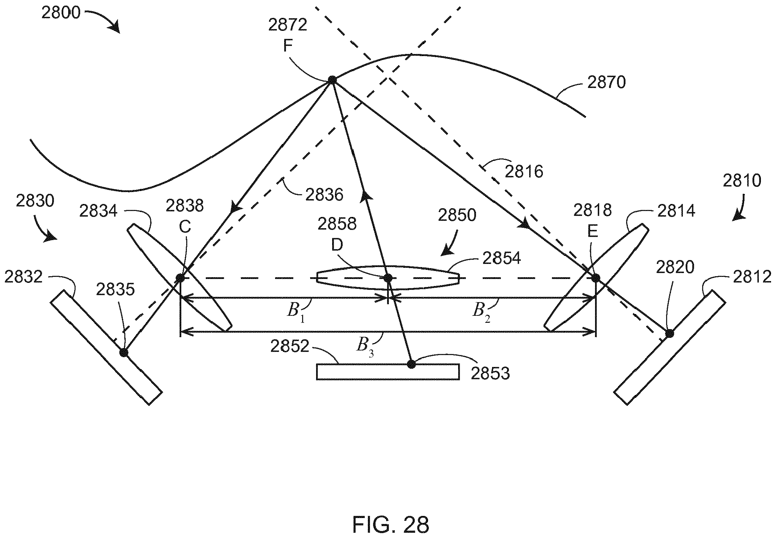

FIG. 28 shows a structured light triangulation scanner 2800 having a projector 2850, a first camera 2810, and a second camera 2830. The projector creates a pattern of light on a pattern generator plane 2852, which it projects from a corrected point 2853 on the pattern through a perspective center 2858 (point D) of the lens 2854 onto an object surface 2870 at a point 2872 (point F). The point 2872 is imaged by the first camera 2810 by receiving a ray of light from the point 2872 through a perspective center 2818 (point E) of a lens 2814 onto the surface of a photosensitive array 2812 of the camera as a corrected point 2820. The point 2820 is corrected in the read-out data by applying a correction factor to remove the effects of lens aberrations. The point 2872 is likewise imaged by the second camera 2830 by receiving a ray of light from the point 2872 through a perspective center 2838 (point C) of the lens 2834 onto the surface of a photosensitive array 2832 of the second camera as a corrected point 2835.

The inclusion of two cameras 2810 and 2830 in the system 2800 provides advantages over the device of FIG. 27 that includes a single camera. One advantage is that each of the two cameras has a different view of the point 2872 (point F). Because of this difference in viewpoints, it is possible in some cases to see features that would otherwise be obscured - for example, seeing into a hole or behind a blockage. In addition, it is possible in the system 2800 of FIG. 28 to perform three triangulation calculations rather than a single triangulation calculation, thereby improving measurement accuracy and identifying error conditions caused by multipath interference or glints (specular reflections). A first triangulation calculation can be made between corresponding points in the two cameras using the triangle CEF with the baseline B₃. A second triangulation calculation can be made based on corresponding points of the first camera and the projector using the triangle DEF with the baseline B₂. A third triangulation calculation can be made based on corresponding points of the second camera and the projector using the triangle CDF with the baseline B₁. The optical axis of the first camera 2820 is 2816, and the optical axis of the second camera 2830 is 2836.

In FIGs. 27, 28, a method is needed to determine a correspondence among projected points and imaged points. For example, in FIG. 28 the point 2872 as seen on the photosensitive arrays 2812, 2832 and on the pattern generator plane 2852. One way to do this is to put a pattern on the pattern generator plane 2852 that is recognized on the photosensitive arrays 2812, 2832. This approach is sometimes referred to as single-shot measurement method. A more accurate way to determine a correspondence is by using a sequential approach. One such approach is to generate a series of sinusoidal patterns on the pattern generator plane 2852, which are then viewed on a pixel-by-pixel basis on the photosensitive arrays 2812, 2832. By shifting the phase of the sinusoidal patterns generated on the pattern generator plane 2852 in a prescribed way, it is possible to determine a correspondence of the points 2818, 2838, 2852 to the object point 2872 to a relatively high confidence.

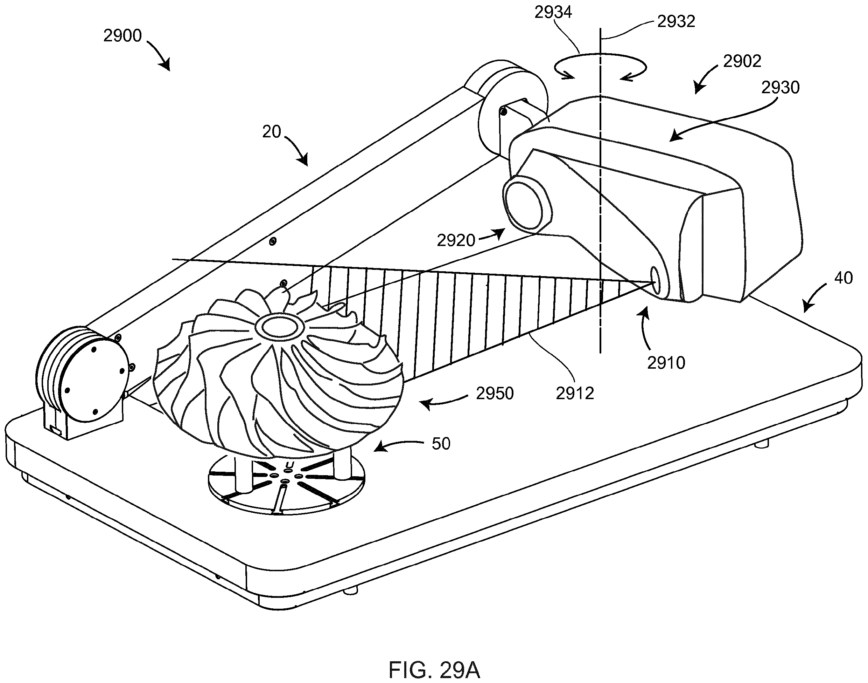

FIG. 29A is an isometric view of a non-contact 3D measuring system 2900 similar to system 10 of FIG. 1A except that the 3D measuring device 30 is replaced by the 3D measuring device 2902. In an embodiment, the 3D measuring device 2902 is a triangulation line scanner, also referred to as a laser line probe (LLP). In an embodiment, the line scanner 2902 includes a projector 2910 that projects a plane of light 2912, also referred to as a line of light because the plane of light becomes a line of light when intersecting an object 2950. The line scanner includes a camera 2920 that captures an image of the line of light 2912 that intersects the object 2950. In an embodiment, the line scanner includes a portion 2930 that is operable to rotate about an axis 2932 over angles of rotation 2934. The portion 2930 includes both the projector 2910 and the camera 2920. At any given angle of rotation 2934, the line scanner 2902 is operable to determine 3D coordinates of points intersected by the line of light 2912. A processor within the line scanner 2902 may be used to determine the 3D coordinates of the object points intersected by the line of light 2912. In an embodiment, the mover mechanism 20 moves to a first position relative to the base assembly 40. At this first position, the portion 2930 rotates about the vertical axis 2932, sweeping a vertical plane of light over a sequence of horizontal positions. As light is swept, the scanner 2900 captures 3D coordinates of the lines of light that intersect the object. After completing a sweep of the object 2950, the portion 2930 resets to its original position, the rotary staging mechanism 50 rotates the object 2950 to a new position, and the 3D measurement process is repeated until 3D coordinates have been obtained for the object 2950 with the mover mechanism 20 at its initial position. The mover mechanism 20 then moves to a new position relative to the base assembly 40 and the 3D measurement process is repeated until 3D points have been determined for the object 2950 as seen by the scanner 2902 from all angles and sides of the object 2950.

In an alternative embodiment, the line scanner 2902 does not include a rotatable portion 2930. Instead the line of light 2950 illuminates the object as the rotary stage 50 is turned. After the rotary stage 50 has rotated the object by 2950 by 360 degrees, the mover mechanism 20 moves the line scanner 2902 to a new position relative to the base assembly 40 and the 3D measurement procedure is continued.

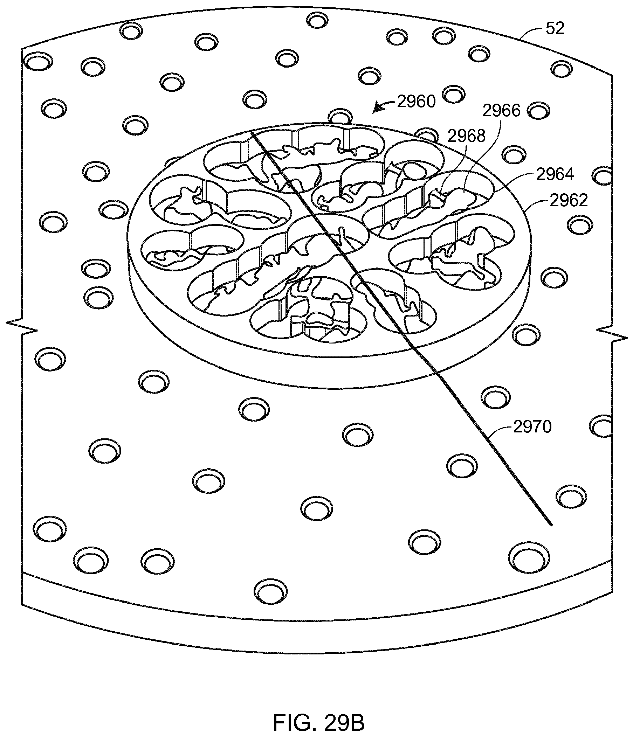

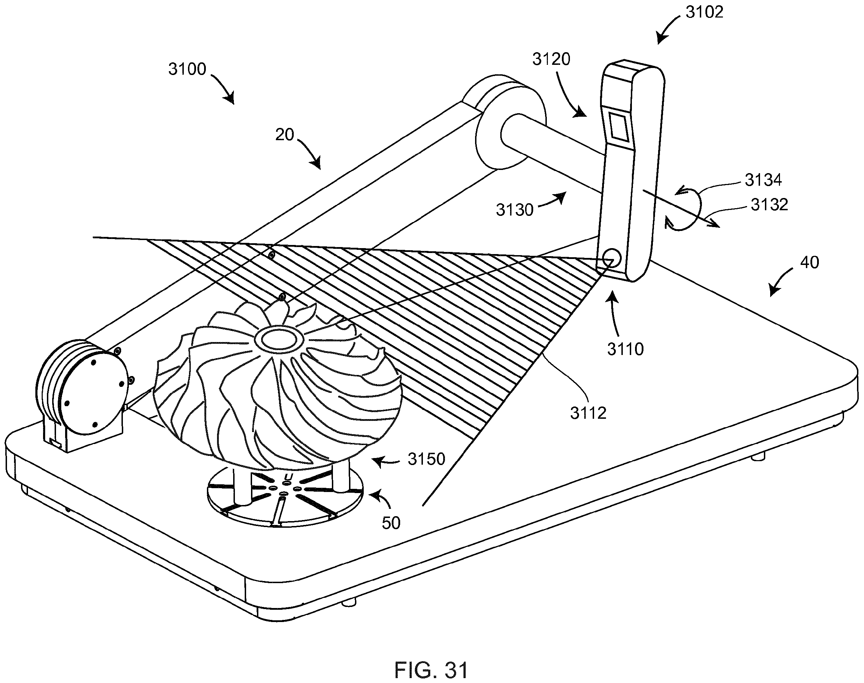

FIG. 29B is an isometric view of an object 2960 that, in an embodiment, replaces the object 2950 in FIG. 29A. In an embodiment, the object 2960 is an assembly of machined dental restorations. In an embodiment, the object 2960 includes a metal disk 2962, a collection of machined cavities 2964, a collection of dental restorations 2966, and a collection of attachments 2968 that affix the machined dental restorations 2966 to the metal disk 2962. In an embodiment, the assembly of machined dental restorations 2960 are produced by a five-axis or six-axis milling machine, enabling the metal disk to be machined from both sides of the disk. Examples of dental restorations include a crown, a bridge, and a full arch. It is highly desirable that the completed dental restorations be checked for dimensional accuracy against the CAD models on which the machined parts were based. It is further highly desirable that such checks of dimensional accuracy be made in an automated basis with a minimum of operator intervention. In the embodiment illustrated in FIG. 29B, a laser stripe 2970 from an LLP is used to accurately and quickly determine the dimensions of the dental restorations 2962. In an embodiment, the laser stripe 2970 measures 3D coordinates of different the dental restorations 2962 as the platen 52 rotates or as portion 2930 rotates the laser stripe 2970. In some embodiments, the metal disk 2962 is placed on mounting stands 1320. In some cases, the height of the metal disk 2962 on the mounting stands may be sufficient to enable the machined dental restorations 2960 to be measured without being turned over by an operator. In an embodiment, the laser stripe 2960 may be produced by a different type of device such as the device 3102 shown in FIG. 31. In another embodiment, the 3D coordinates of the dental restorations 2962 are measured by an area scanner such as the scanner 2600. In other embodiments, other types of non-contact 3D measuring devices may be used. For example, in an embodiment, a scanner 3202, which sweeps a beam of light, is used to measure the 3D coordinates of the dental restorations 2962. In an embodiment, the metal disk 2962 is removed from the milling machine before being measured by one of the non-contact 3D measuring devices described herein above. In other embodiments, a non-contact 3D measuring device measures the dental restorations 2962 before the restorations are removed from the milling machine.

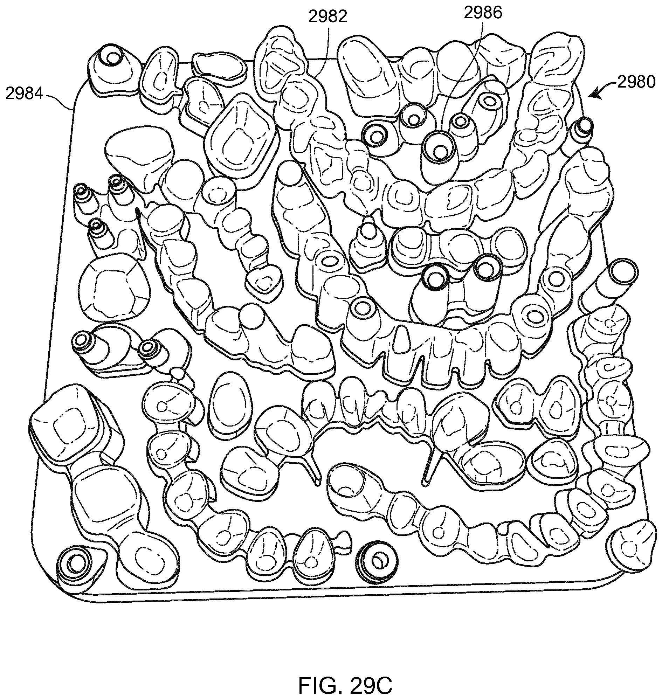

FIG. 29C is an isometric view of an object 2980 that, in an embodiment, replaces the object 2950 in FIG. 29A. In an embodiment, the object 2980 is an assembly of 3D printed dental restorations 2982. In the usual situation, the 3D printed dental restorations are built up in layers using metal or porcelain compounds that are then heated or cured to produce a hard-finished product. This last heating stage is sometimes referred to as the "melt." In the example of FIG. 29C, the dental restorations are built onto a plate 2984 from which they are removed in a final process. In some cases, it is important that features of the dental restorations have precise dimensions. An example is a cylindrical recess 2986 designed to accept dental implants. In some cases, the melt portion of 3D manufacture may cause dimensions of the dental restorations 2982 to be altered. It is important, therefore, to verify that features such as cylindrical recesses have the intended dimensions and to mechanically correct such features if the dimensions are not right. A way to do this is to machine the 3D printed object 2980 as a final step. To correctly position and orient the 3D printed object 2980 in a milling machine, a measurement may be made with a noncontact 3D measuring machine 10. The measuring device may be an area scanner, LLP, or swept beam according to any of the embodiments described herein. In one embodiment, the 3D printed object 2980 is placed in the milling machine and a measurement of the 3D printed object 2980 made with a noncontact 3D measuring device 10 to register the object 2980 to the frame of reference of the milling machine. In this case, the device 10 may measure the features of the 3D printed dental restorations 2982 directly or, alternatively, the device 10 may measure mechanical fiducial features affixed to the object 2980 to enable placing of the 3D printed object 2980 in the frame of reference of the milling machine. In an alternative embodiment, a noncontact 3D measuring device 10 may be located far removed from the milling machine. In this embodiment, the noncontact 3D measuring device 10 measures fiducial features on the 3D printed object. The fiducial features on the object 2980 are then mechanically registered to features on the milling machine.

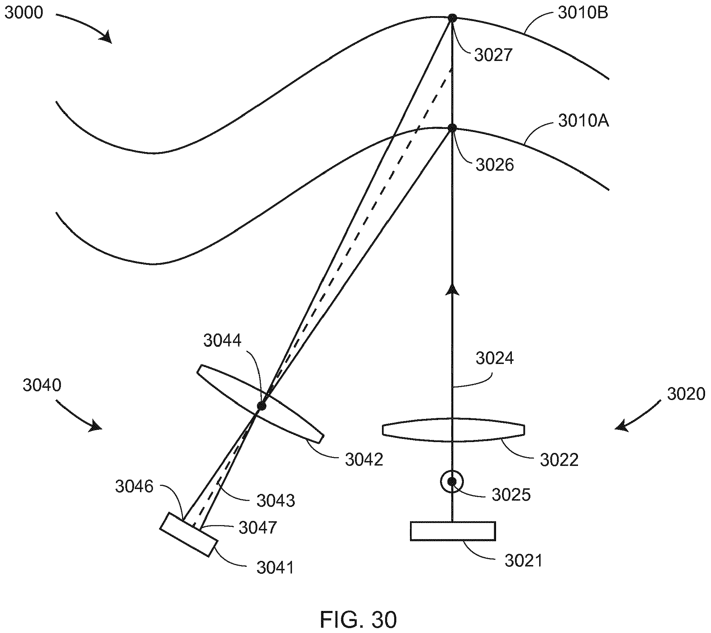

FIG. 30 shows elements of an LLP 3000 that includes a projector 3020 and a camera 3040. The projector 3020 includes a source pattern of light 3021 and a projector lens 3022. The source pattern of light projects an illuminated pattern as a beam of light along a plane, which appears as a line when it strikes an object. Hence the projector 3020 may equivalently be said to project a plane or a line. The beam of light 3024 may likewise be said to be a plane of light or a line of light. The projector lens 3022 includes a projector perspective center and a projector optical axis that passes through the projector perspective center. In the example of FIG. 30, a central ray of the beam of light 3024 is aligned with the projector optical axis. The camera 3040 includes a camera lens 3042 and a photosensitive array 3041. The lens has a camera optical axis 3043 that passes through a camera lens perspective center 3044. In the exemplary system 3000, the line of light 3024 projected by the source pattern of light 3021 has a direction 3025 perpendicular to the paper in FIG. 30. The line strikes an object surface, which at a first distance from the projector is object surface 3010A and at a second distance from the projector is object surface 3010B. It is understood that at different heights above or below the plane of the paper of FIG. 30, the object surface may be at a different distance from the projector. The line of light intersects surface 3010A (in the plane of the paper) in a point 3026, and it intersects the surface 3010B (in the plane of the paper) in a point 3027. For the case of the intersection point 3026, a ray of light travels from the point 3026 through the camera lens perspective center 3044 to intersect the photosensitive array 3041 in an image point 3046. For the case of the intersection point 3027, a ray of light travels from the point 3027 through the camera lens perspective center 3044 to intersect the photosensitive array 3041 in an image point 3047. By noting the position of the intersection point relative to the position of the camera lens optical axis 3043, the distance from the projector (and camera) to the object surface can be determined using the principles of triangulation.

In an embodiment, the photosensitive array 3041 is aligned to place either the array rows or columns in the direction of the reflected laser stripe. In this case, the position of a spot of light along one direction of the array provides information to determine a distance to the object, as indicated by the difference in the positions of the spots 3046 and 3047. The position of the spot of light in the orthogonal direction on the array provides information to determine where, along the length of the laser line, the plane of light intersects the object.

FIG. 31 is an isometric view of a non-contact 3D measuring system 3100 similar to system 10 of FIG. 1A except that the 3D measuring device 30 is replaced by the 3D measuring device 3102. In an embodiment, the 3D measuring device 3102 is a triangulation line scanner (LLP). In an embodiment, the line scanner 3102 includes a projector 3110 that projects a plane of light 3112, also referred to as a line of light because the plane of light becomes a line of light when intersecting an object 3150. The line scanner includes a camera 3120 that captures an image of the line of light 3112 that intersects the object 3150. In an embodiment, the line scanner is mounted on a motorized mechanism 3130 that rotates the scanner 3102 about an axis 3132 over angles of rotation 3134. The motorized mechanism 3130 rotates both the projector 3110 and the camera 3120. At any given angle of rotation 3134, the line scanner 3102 is operable to determine 3D coordinates of points intersected by the line of light 3112. A processor within the line scanner 3102 may be used to determine the 3D coordinates of the object points intersected by the line of light 3112. In an embodiment, the mover mechanism 20 moves to a first position relative to the base assembly 40. At this first position, the motorized mechanism 3130 rotates the scanner 3102 about the horizontal axis 3132, capturing as it goes 3D coordinates of the lines of light that intersect the object. After completing a sweep of the object 3150, the motorized mechanism 3130 resets to its original position, the rotary staging mechanism 50 rotates the object 3150 to a new position, and the 3D measurement process is repeated until 3D coordinates have been obtained for the object 3150 with the mover mechanism 20 at its initial position. The mover mechanism 20 then moves to a new position relative to the base assembly 40 and the 3D measurement process is repeated until 3D points have been determined for the object 3150 as seen by the scanner 3102 from all angles and sides of the object 3150.

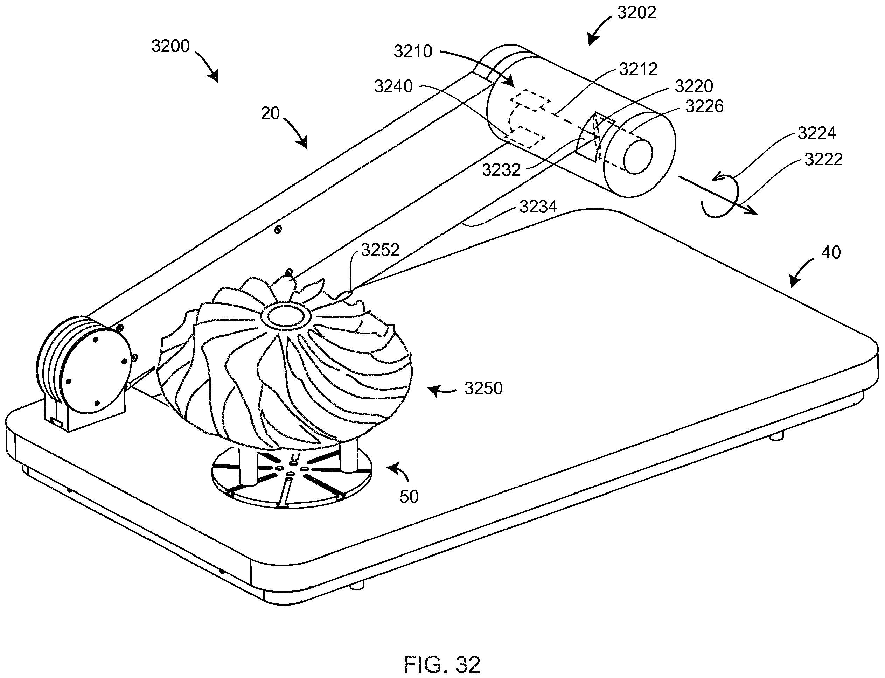

FIG. 32 is an isometric view of a non-contact 3D measuring system 3200 similar to system 10 of FIG. 1A except that the 3D measuring device 30 is replaced by the 3D measuring device 3202. In an embodiment, the 3D measuring device 3202 includes a light source and distance processing unit 3210 that projects a beam of modulated light 3212 onto a rotating mirror 3220 before passing out of a window 3232, and traveling as beam 3234 to the object 3250. At an instant in time, the beam 3234 intersects the object 3250 at a point 3252, reflects off the object point 3252, passes back through the window 3232, reflects off the mirror 3220 and returns to the light source and distance processing unit 3210, which determines the distance from the 3D measuring device 3202 to the object point 3250. The distance from the 3D measuring device 3202 to the object point 3252 is determined by one or more processors 3240 internal or external to the 3D measuring device 3202. The one or more processors determines the distance to the object based at least on a round trip time of the light from and back to the light source and distance processing unit 3210 and on the speed of light in air from the light source within 3210 to the object point 3252 and back to the distance meter with 3210. The method used to determine the elapsed time depends on the type of modulation applied to the modulated light 3212. One type of modulation is a sinusoidal amplitude or intensity modulation. In this case, the distance traveled may be based on a phase shift of the sinusoidally modulated light. Another type of modulation is pulsed modulation. In this case, the distance traveled is based on a measured time according to electronic circuitry design to measure elapsed time between the outgoing and returning pulses. In other embodiments, other types of modulation are used according to methods known in the art. In general the speed of light depends on the wavelength of the light, the temperature, atmospheric pressure, and humidity of the air the light passes through. Depending on the desired accuracy of the measured distance, sensors such as air temperature sensors may be used to measure the characteristics of the ambient air.

As the mirror 3220 rotates about the axis 3222, the beam of light 3234 sweeps out a pattern along a vertical plane. In an embodiment, the rotary staging mechanism 50 rotates the object 3250 as the beam 3234 sweeps along a vertical plane. After the rotary staging mechanism completes a rotation of 360 degrees, the mover mechanism 20 moves the TOF distance meter 3202 to a new position relative to the object 3250 and the measurement procedure is carried out again. With repetitions of this method, 3D coordinates of points over the object 3250 are measured from all directions.

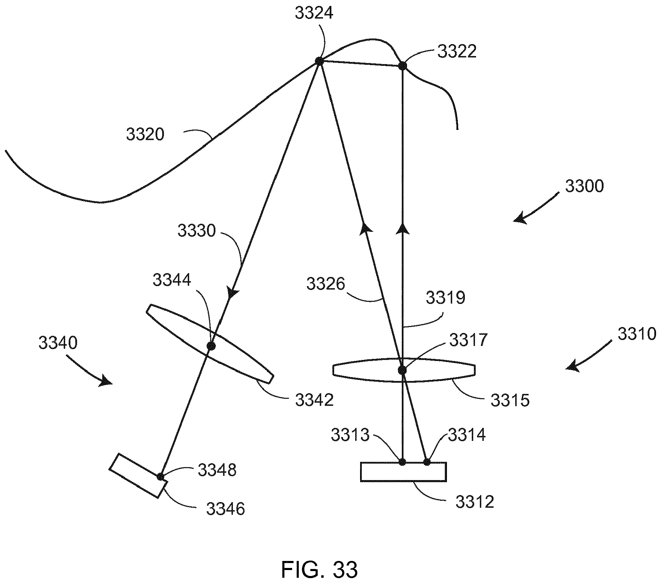

A problem that may degrade accuracy of 3D noncontact scanners is multi-path interference. FIG. 33 is a schematic illustration that describes the origin of multipath interference. In an embodiment, a triangulation scanner 3300 includes a projector 3310 having a pattern generator 3312 and a lens system 3315 with a perspective center 3317. A light from a corrected point 3313 on the surface of the pattern generator 3312 passes through the perspective center 3317 as a ray of light 3319 and intersects an object 3320 at a point 3322. In an embodiment, the ray of light 3319 reflects off the point 3322 and intersects the object surface 3320 at a second point 3324. The reflected light resulting from the double bounce off the points 3322 and 3324 is referred to herein as a secondary reflection. At the same time or simultaneously therewith, a ray of light 3326 from the pattern-generator point 3314 directly reaches and scatters off the point 3324. Light directly scattering (reflecting) off the point 3324 in a single bounce is referred to herein as a primary reflection. Mixing of primary and secondary reflections results in a phenomena known as multipath interference, which reduces measurement accuracy of the determined 3D coordinate of the object point 3324. The ray of light 3330 reflected from the point 3324 arrives at a camera 3340 that includes a lens system 3342 with a perspective center 3344 and a photosensitive array 3346. The corrected point 3348 on the photosensitive array is thus contaminated by secondary reflections and hence is likely to have larger-than-expected error in 3D coordinates determined by a processor that performs the triangulation calculation.

There are several ways to identify multipath interference in scanned data. For the case of a scanner such as that shown in FIGs. 2, 26, 28 that includes two cameras and a projector, a method for identifying multipath interference is to look for inconsistencies in the object point as determined by different combinations of the two cameras and the projector. For example, in FIG. 28, the point 2872 can be determined using the two cameras 2810, 2830 with the baseline length B₃. It can also be determined using the camera 2810 and the projector 2850 with the baseline B₂. It can further be determined using the camera 2830 with the projector 2850 and the baseline B₁. If the 3D coordinates determined for the point 2872 using the three methods differ by more than expected, the cause may be multipath interference. For the case in which the noncontact 3D scanner uses a sinusoidal phase shift method, as described herein above in reference to FIG. 28, an additional check of multipath interference can be made by changing the direction of the sinusoidal modulation. For example, in FIG. 28 suppose sinusoidally modulated stripes were oriented perpendicular to the plane of the paper to obtain 3D coordinates of the point 2872. A second measurement could then be carried out in which the sinusoidally modulated stripes were oriented parallel to the plane of the paper. For both vertically and horizontally modulated stripes, the same phase values should be obtained in each case. Otherwise, multipath interference is indicated.

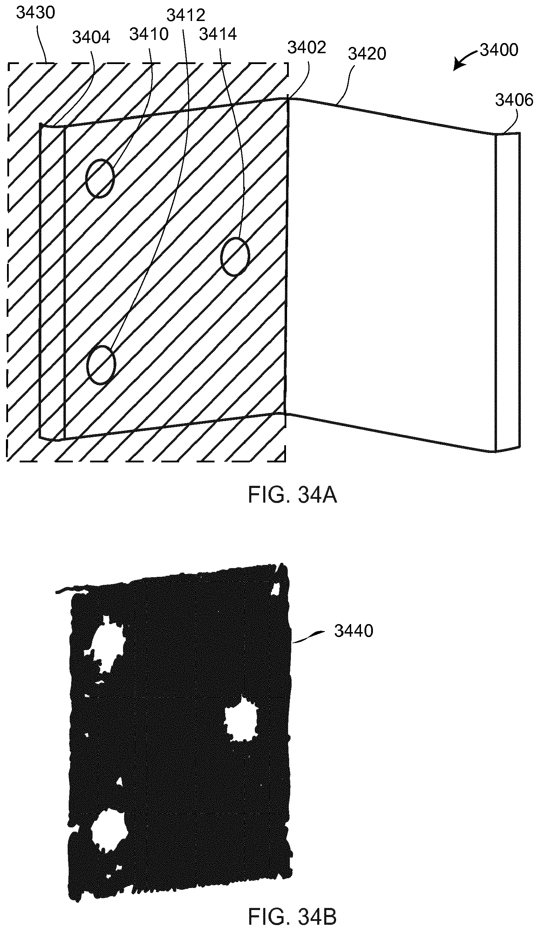

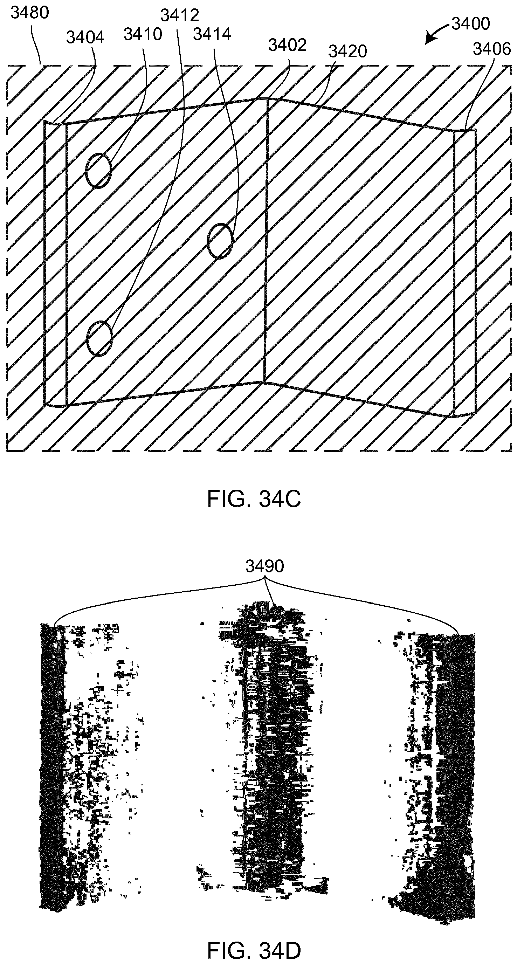

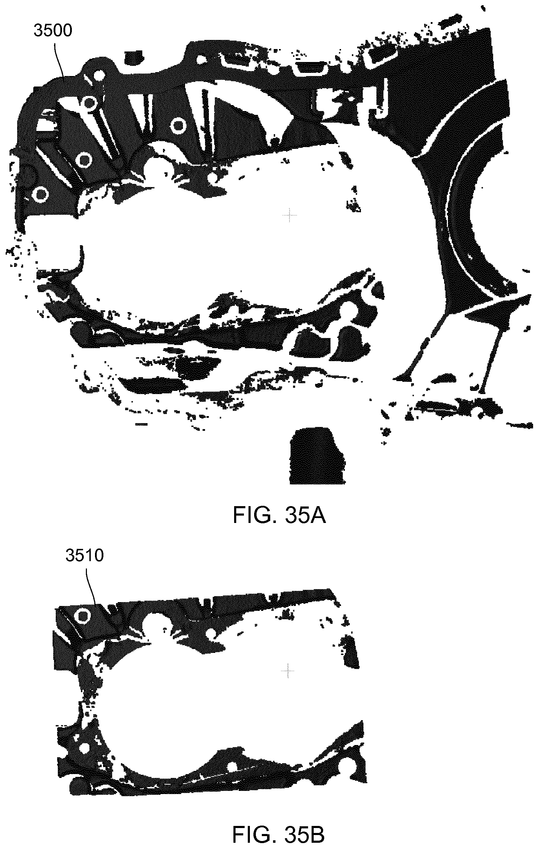

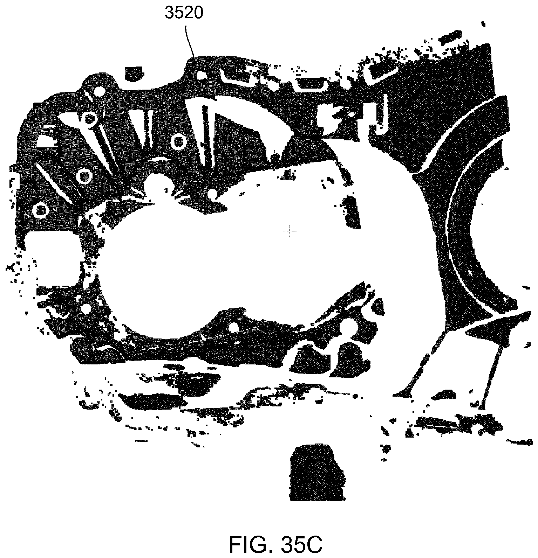

If multipath interference is observed, valid 3D coordinates are not obtained for the scanned point, and the 3D representation of the point should be omitted in the resulting point cloud. Examples of elimination of points contaminated by multipath interference are illustrated in reference to FIGs. 34A, 34B, 34C, 34D, 35A, 35B, 35C. FIGs. 34A and 34C show the outline 3420 of a right angle V-block 3400. The V-block 3400 is rounded in the center 3402, left edge 3404, and right edge 3406. The left half of the V-block 3400 includes three holes 3410, 3412, 3414. The hatched lines 3430 and 3480 indicate portions of the V-block illuminated by projected light, for example, from the triangulation scanner 30 shown in FIG. 2.

For illumination over the smaller region 3430 shown in FIG. 34A, the results of the measurement by the scanner 30 are shown in FIG. 34B. The portion 3440 of the V-block having no multipath interference is shown in black. Because the illuminated region 3430 does not include the right half of the V-block, no light is reflected from the right half of the V-block onto the left half to contaminate the 3D measurements on the left half to produce multipath interference. Over the region 3430, valid 3D coordinates are calculated.

For illumination over the larger region 3480 shown in FIG. 34C, the results of the measurement by the scanner 30 are shown in FIG. 34D. The portions 3490 of the V-block having no multipath interference are shown in black. Because the illuminated region 3530 includes both halves of the V-block, light is reflected from the right half to the left and from the left half to the right half. Hence both halves of the V-block are contaminated, and large regions of the V-block cannot be measured in three dimensions with this approach.

Images 3500, 3510, 3520 in FIGs. 35A, 35B, 35C, respectively, show in black those regions of a crankcase for which valid 3D coordinate data have been obtained. In other words, the regions shown in white are those regions that did not receive valid 3D coordinate data, while those shown in black did receive valid 3D coordinate data. One possible cause for invalid 3D coordinate data is the absence of material in a particular region. In FIGs. 35A, 35B, 35C, there are two large circular regions near the center of the images that correspond to actual holes in the crankcase. Another possible cause of invalid 3D coordinate data is multipath interference. In FIG. 35A, a relatively large portion of the crankcase is illuminated. In FIG. 35B, a relatively small portion of the crankcase is illuminated. The result of the reduced area of illumination in FIG. 35B is less multipath interference, which results in more 3D coordinates being obtained, especially in the regions around the crankcase holes. By combining images of FIGs. 35A, 35B, a composite image in FIG. 35C is obtained that covers a relatively large region but provides more valid 3D details.

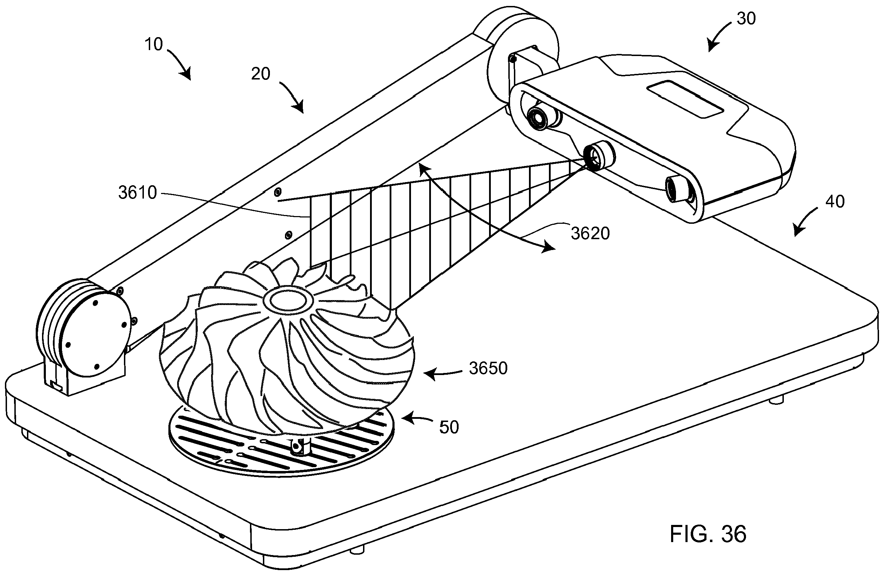

A systematic way to determine an efficient illumination sequence to avoid multipath interference is now described with reference to FIGs. 36, 37A, 37B, 38A, 38B, 38C, 38D, 38E, 38F. In an embodiment illustrated in FIG. 36, a triangulation scanner 30 produces a single line (or equivalently plane) of light 3610. Such a generated line of light resembles the line of light generated by any of the line scanners described in reference to FIGs. 29, 30, 31. However, in the case of the scanner of FIG. 36, the vertical line of light is swept in a pattern 3620 to cover a portion of an object 3650.

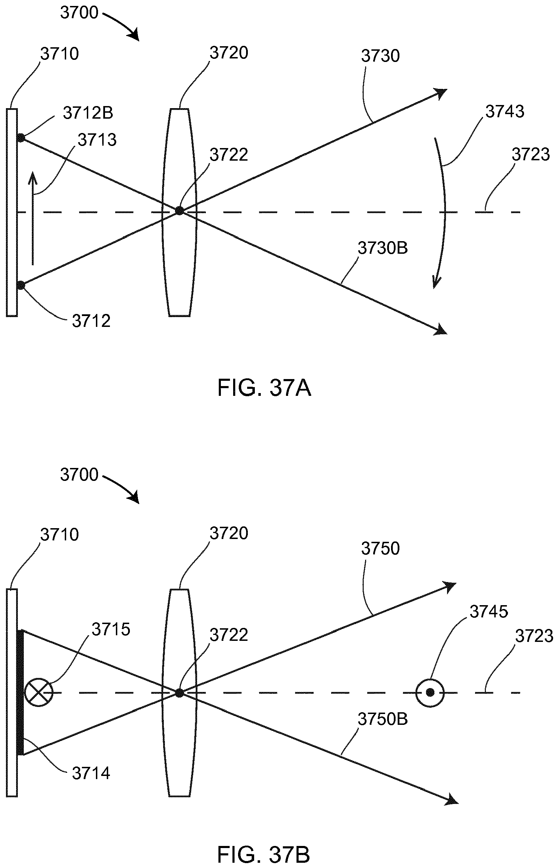

FIGs. 37A, 37B are top and view views, respectively, that schematically depict a method by which a light generation system 3700 generates a swept line of light 3610. The element 3710 is an image generation plane 3710. In different embodiments, the image generation plane 3710 includes a digital micromirror device (DMD), a liquid crystal device (LCD), a liquid crystal of silicon (LCoS) device, or another type of device. For the case of a device such as the DMD 2653 shown in FIG. 26, light is reflected off small electrically activated micromirrors through a projector lens assembly 2610. By adjusting the angles of the micromirrors on the DMD 2653, a desired pattern is created.

In an embodiment, a vertical line of light is created by illuminating an array of pixels that are one pixel wide as seen from the top view and extend over a full range of pixels as seen from the side view. Hence, FIG. 37A shows the line of light 3712 as one pixel wide, and FIG. 37B shows the line of light extending over a range of pixels. In the top view of FIG. 37A, the one-pixel wide line of light 3712 is swept in the direction 3713 to the position 3712B. In the side view of FIG. 37B, the one-pixel wide line of light extends over the full range of pixels and is swept into the plane of the paper in the direction 3715. The optical lensing system 3720 of the projector is represented as a single lens 3720 having a perspective center 3722. The light emerging from the point 3712 emerges as a beam of light having a direction given by the ray 3730, where the ray is a line drawn from the point 3712 through the perspective center 3722. As the illuminated point 3712 is swept upward, the ray that emerges from the lens 3720 sweeps downward, which in the illustration of FIG. 37A is a clockwise direction 3743. The line 3723 is the optical axis of the lens system 3720. In FIG. 37B, the light emerging from the one-pixel wide line of light 3714 passes through the perspective center to form a projected line of light, the length of which is defined by the angular range of the projected rays 3750, 3750B. As the illuminated line 3714 is swept into the paper, the ray that emerges from the lens 3720 sweeps out of the paper. In some embodiments, the line of light is two or more pixels wide. In other embodiments, the line does not cover the full range of pixels in the vertical direction. In other directions, the line is not vertical but angled in some other direction.

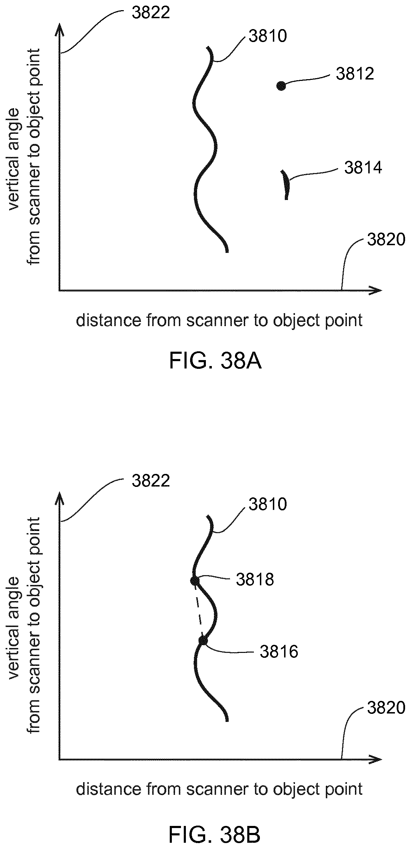

FIGs. 38A show two examples of multipath interference observed from measurements made with a scanner that produces a line of light. The projected line of light is received by a camera having a two-dimensional (2D) photosensitive array. The appearance of the line of light scattered by the object and imaged onto the photosensitive array is shown in FIGs. 38A, 38B as a curved line of light 3810, where the type and amount of curvature depends on the shape of the object being measured. The interpretation of the curved line of light 3810 depends on the details of the triangulation measurement system, but in a simple case the curve can be interpreted according to the labeled axes 3820, 3822. In this simple case, the vertical axis 3822 represents the vertical angle from the scanner to the point on the object point being measured. The vertical angle is taken with respect to the perspective center 3722. In the simple case, the horizontal axis 3820 indicates the distance from the scanner perspective center 3722 to the object point.

FIGs. 38A, 38B illustrate two different types of multiple reflections that may occur. In FIGs. 38A, 38B, illumination of the object by the line of light (such as the line of light 3610) strikes an object to produce a curved line of light 3810 imaged by the lens system 3720. In addition, the illumination of the object by the line of light further produces reflections 3812, 3814 in FIG. 38A. Such reflections are typically specular reflections, which are reflections in which the angle of reflection is equal to the angle of incidence. In FIG. 38A, the reflections 3812, 3814 can be determined to arise from the projection of the curved line of light 3810 by verifying that the reflections 3812, 3814 are not present when the curved line of light 3810 is not present on the object. In FIG. 38B, the less common situation arises in which a point 3818 on the curved line 3810 produces a specular reflection on the curved line of light 3810 at the point 3816. This situation is much less likely to occur than the situation in FIG. 38A because there are many fewer pixels available on the curved line 3810 than in the entire 2D photosensitive array of the camera(s) of the triangulation scanner. It is possible to check whether any such specular reflected points 3816 are present on the curved line of light. As explained herein above, one way to do this is to look for inconsistencies in the 3D coordinates determined by the three different triangulation systems: first camera with second camera, first camera with projector, and second camera with projector. Such inconsistencies, if present, may be observed, for example, in a system that has two cameras such as the system illustrated in FIG. 36.

From the observation of FIG. 38A, it may be determined that that the regions 3812, 3814 cannot be measured in 3D while the curved line of light is illuminated as this would produce multipath interference at the points 3812, 3814. One strategy for efficiently measuring an object while avoiding multipath interference is to keep track of those regions that cannot be simultaneously measured. Afterwards, software can select the largest illumination patches that produce no multipath interference.

The strategy suggested above is to use a swept line of light as a way to determine the most efficient illumination strategy, which in many cases will involve consolidating multiple lines into illumination regions. Such an approach may be useful when a first object is used to determine an inspection strategy for later measurement of essentially identical objects. In the case illustrated in FIG. 38B, a point on a curved line produces a point elsewhere on the curved line. In one approach, the problem is identified by sweeping a point rather than a line. This approach makes it easy to determine which illuminated line segments or regions may be projected to avoid multipath interference.

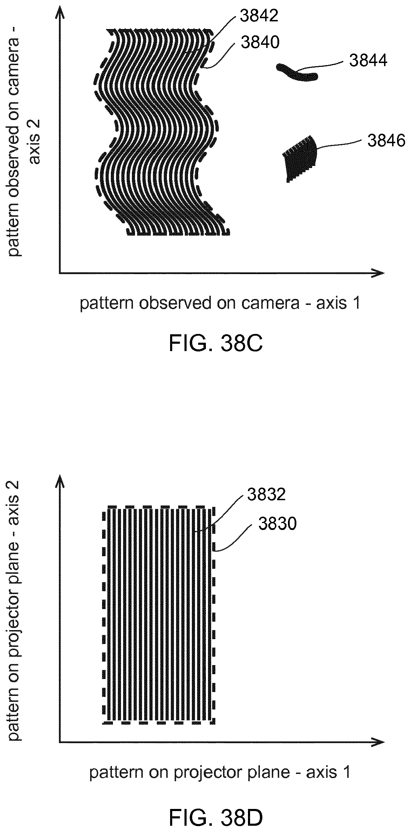

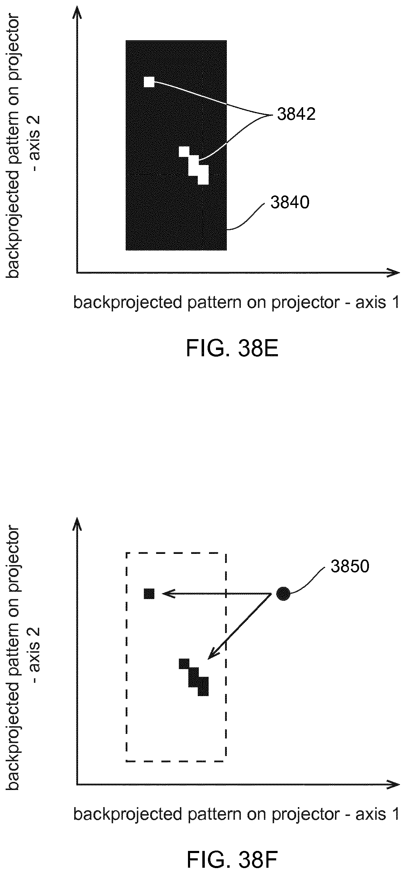

FIGs. 38C, 38D, 38E, 38F explain further aspects of the method described above. FIG. 38C shows an exemplary camera image of a line 3842 swept across an object. FIG. 38D shows a corresponding exemplary projector line 3832 swept across the projector plane. In an embodiment, lines within the projection region 3830 are combined to make the region 3830 a continuously illuminated, rectangular region. In other embodiments, the combined lines of light 3830 are not all straight nor of equal length, thereby resulting in a region of arbitrary shape and size. When the region of light 3830 is projected onto the object, the corresponding shape 3840 imaged by the camera of the triangulation scanner is in general different than the shape 3830 in the projector plane.

Spurious reflections, which might be specular reflections for example, are shown as the exemplary elements 3844, 3846. The region of light 3830 is selected so that the corresponding region of illumination 3840 in the camera image does not intersect any of the unwanted reflections such as 3844, 3846. If there are some spurious reflections that are not seen, for example, spurious reflection similar to those at the point 3816 in FIG. 38B, these can be identified using the methods described above. In embodiments of the present method, such embodiments may include looking for inconsistencies in the object point as determined by different combinations of two cameras and the projector.

FIG. 38E shows a backprojected pattern of light on the projector plane. The backprojected pattern of light is here defined as the original projected pattern of light but with spurious points caused by spurious reflections to be removed. The corresponding spurious points detected on the camera region of illumination 3830 will likewise have been removed. To obtain the 3D object coordinates for these removed spurious points, a small spot of light 3850 can be projected onto those points on the object, as illustrated in FIG. 38F. A single small spot is much less likely to generate a spurious reflection than a projected area of light or a projected line of light.

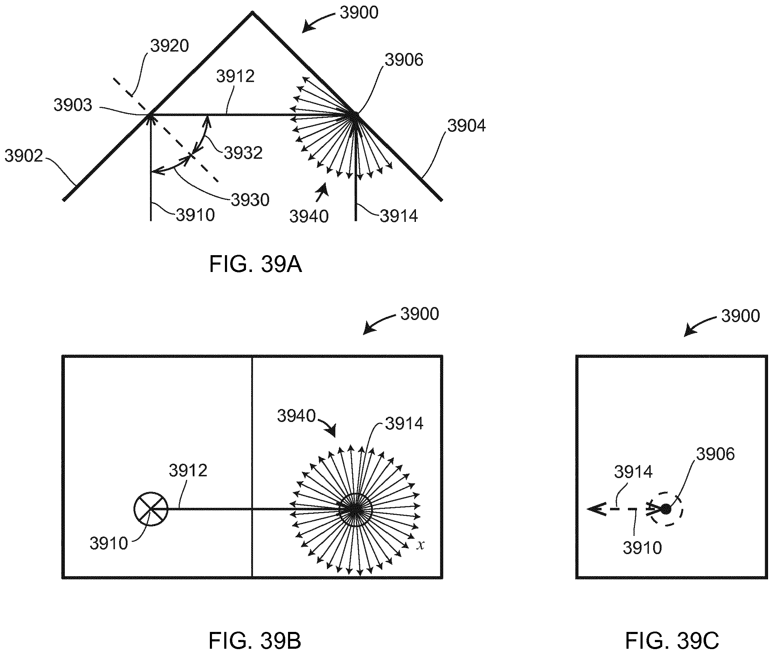

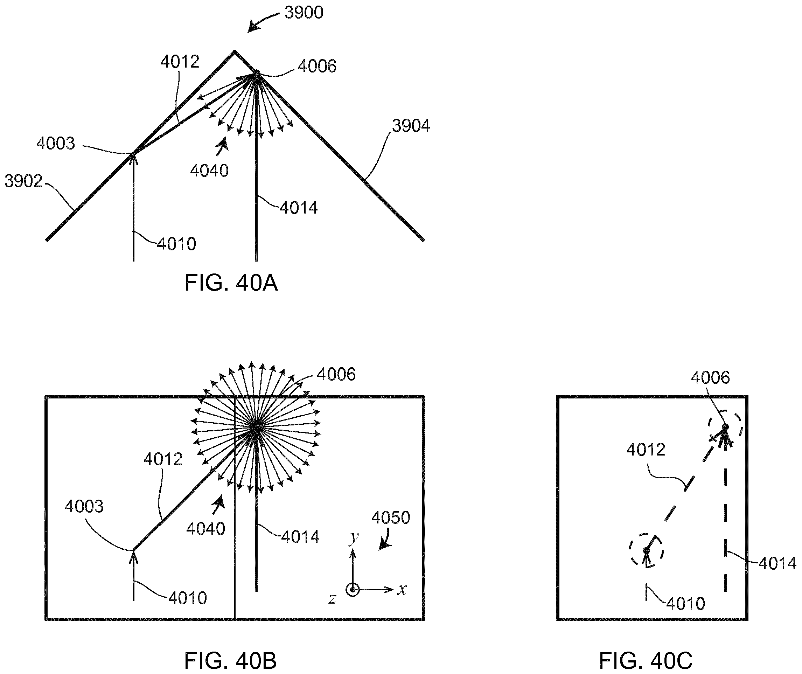

FIGs. 39A, 39B, 39C, 40A, 40B, 40C illustrate some different situations that produce multipath interference. FIGs. 39A, 39B, 39C are top, front, and side views of a V-block 3900. A ray of light 3910 strikes a first panel 3902 of the V-block 3900, making an angle of 45 degrees with respect to the surface normal 3920, the surface normal 3920 being a line perpendicular to the first panel 3902. The angle of incidence 3930 is the angle between the incident ray of light 3910 and the normal line 3920. A reflected ray 3912 reflects off the panel 3902 at an angle of reflection of 3932, the angle of reflection 3932 being the angle between the reflected ray 3912 and the normal line 3920. If the angle of reflection 3932 equals the angle of incidence 3930, as in FIG. 39A, the reflection is said to be specular. A ray 3914 arrives from the projector at the panel 3904 of the V-block 3900. Both rays 3912, 3914 intersect the panel 3904 at the point 3906. Diffusely scattered light 3940 emerges from the point 3906, travels through the perspective center of each camera lens system and forms an image of the point 3906. This point is evaluated and the result is used, possibly in combination with other measured results, to determine 3D coordinates of the point 3906. However, because of the contamination by the specular reflection 3912, the diffusely scattered light 3940 will not yield the correct 3D coordinate. Hence to avoid errors in the measured 3D coordinates, steps should be taken to avoid simultaneously illuminating the points 3903 and 3906.

FIGs. 40A, 40B, 40C are top, front, and side views of the V-block 3900. A coordinate system 4050, as referenced to the front view of FIG. 40B, is shown inset in FIG. 40B. A ray of light 4010 strikes the first panel 3902 of the V-block 3900. In this case, the incoming ray of light 4010 has not only a z component (as in ray 3910) but also a y component. As a result of this new direction for the ray 4010, the reflected ray 4012 strikes the panel 3904 at the point 4006, which is different than the point 3906. A ray 4014 from a projector (such as the projector 32 in the 3D imaging system 30) also strikes the point 4006. The combined light from the rays 4012, 4014 at the point 4006 produced diffusely scattered light 4040 that is received by one or more cameras (such as a camera 34, 36 in a system such as the 3D imaging system 30). However because of contamination of the point 4006 by the specular reflection 4012, the calculated 3D measurement based on the captured image(s) is not expected to be accurate.

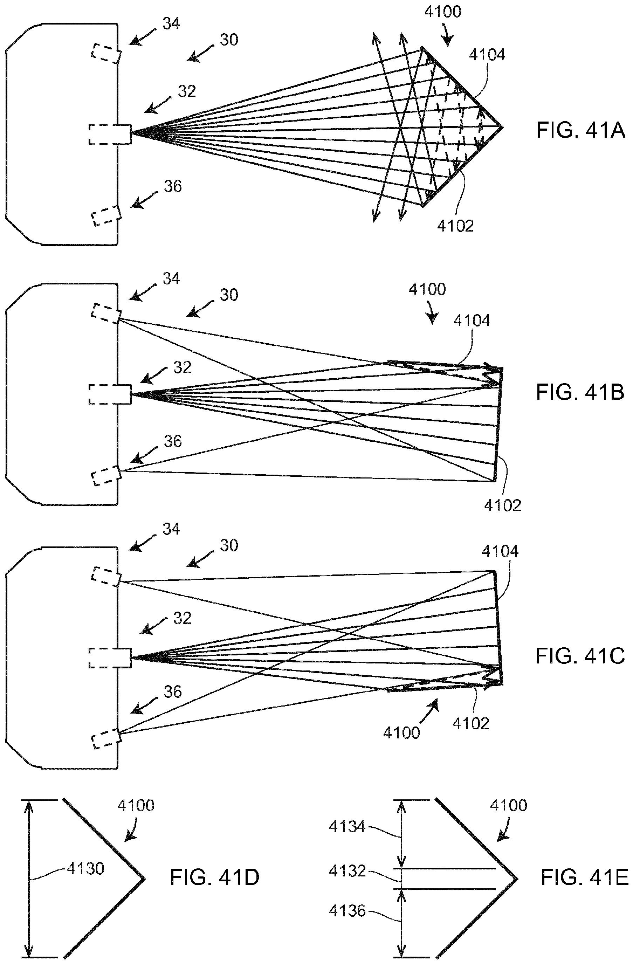

FIGs. 39A, 39B, 39C, 40A, 40B, 40C show that the nature of multipath interference depends on the angle of projected rays of light relative to an object under test. In some cases, selection of the right illumination direction can greatly reduce or eliminate multipath interference, as illustrated in FIGs. 41A, 41B, 41C. These figures show the situation in which a V-block 4100 is measured by a noncontact 3D measuring device 30. In FIG. 41A, each face 4102, 4104 of the V-block 4100 is equally open to light from the projector 32. In other words, the V-block 4100 is oriented symmetrically with respect to the projected light from the projector 32. Upon striking the V-block 4100, the rays from the projector are reflected, those traveling to the opposite face shown as dashed lines. The result is that both faces 4102, 4104 are entirely covered with reflected rays of light. Consequently, every part of V-block surface is contaminated by a specular reflection, invalidating the 3D measurements over the entire V-block surface. This situation is summarized in FIG. 41D, which shows that the entire surface 4130 of the V-block experiences multipath interference.

In FIGs. 41B, 41C, the V-block 4100 is angled with respect to the projector 32. In FIG. 41B, the face 4104 is nearly parallel to rays of light from the projector 32. As a consequence, the specular reflections off of face 4104 only cover a small portion of the face 4102. These specular reflections are indicated by the dashed lines. A similar situation occurs in FIG. 41C when the V-block 4100 is rotated to produce a mirror image of the V-block 4100 in FIG. 41B. The combined result of measurements performed with the V-block 4100 in the positions of FIG. 41B, 41C is that only the relatively small region 4132 is expected to give invalid 3D measurements while a larger region that includes 4134, 4136 is expected to give valid 3D measurements.

For the non-contact 3D measuring system 10, there are many opportunities to adjust the position of an object 60 relative to the noncontact 3D measuring instrument 30, either by rotating the object 60 on the rotary-staging assembly 50 or by lifting the noncontact 3D measuring device 30 on the mover mechanism 20. Hence, besides adjusting the illumination pattern, by projecting light over selected regions, problems due to multipath interference may also be reduced by measuring object features in preferred orientations.

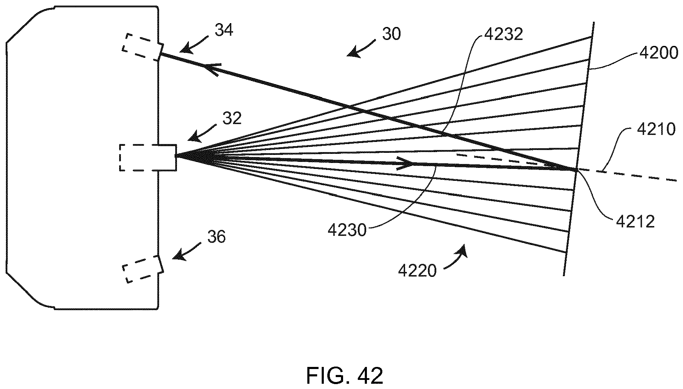

Another type of spurious reflection that may lead to measurement errors is that of specular reflections sent directly into a camera of a triangulation scanner. Such specular reflections are sometimes referred to as glints. An example showing how glint may be produced is shown in FIG. 42. In an embodiment, the projector 32 projects an expanding beam of light 4220 onto an object 4200. One ray of light 4230 in the beam of light 4220 strikes the object 4200 at a point 4212. A normal line of the surface 4200 at the point 4212 is 4210. A ray of light 4232 specularly reflected off the surface 4200 travels to the camera 34 and strikes a photosensitive array within the camera 34. The ray of light 4232 is said to be specularly reflected because the angle of incidence, which is the angle between the incident ray 4230 and the normal line 4210, is equal to the angle of reflection, which is the angle between the reflected ray 4232 and the normal line 4210. In most cases, a specularly reflected ray of light is much brighter than a ray of light arriving from a diffusely scattering surface. In many cases, a strong specular reflection will saturate pixels of the camera array, resulting in saturation or blooming, making results invalid. Glints can also be a problem when very bright background light is present, for example, when measuring outdoors. In such cases, light may strike an object at an angle of incidence that drives a relatively very bright reflected beam of light directly onto a photosensitive array of a camera such as a camera 34, 36. One way to avoid glints is to change the angle of incidence of the 3D measuring device 30 with respect to the object 4200, thereby changing the angle of incidence at the reflecting object so as to prevent direct reflection onto a photosensitive array.

In one or more embodiments, advantages are provided in enabling automated measurements of multiple portions of an object from a variety of perspectives, with minimum or reduced effort used to obtain the desired measurement output. Such an output might, for example, be a report stating whether a part-under-test is within dimensioning and tolerancing (D&T) requirements indicated on a CAD model of the part. In one or more embodiment advantages are provided in enabling measurements made after the first measurement to be carried out even more quickly based on knowledge gained in the first measurement.

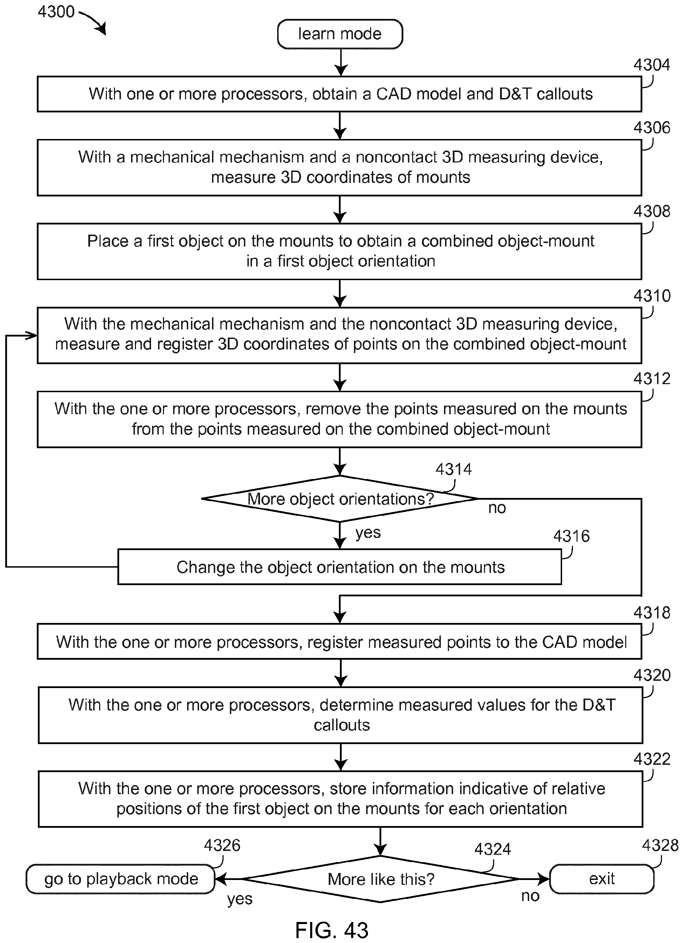

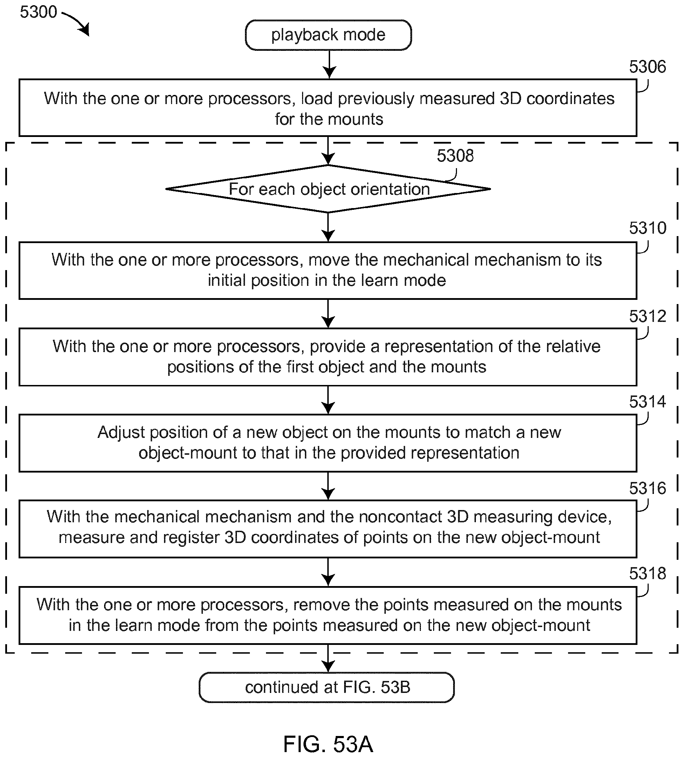

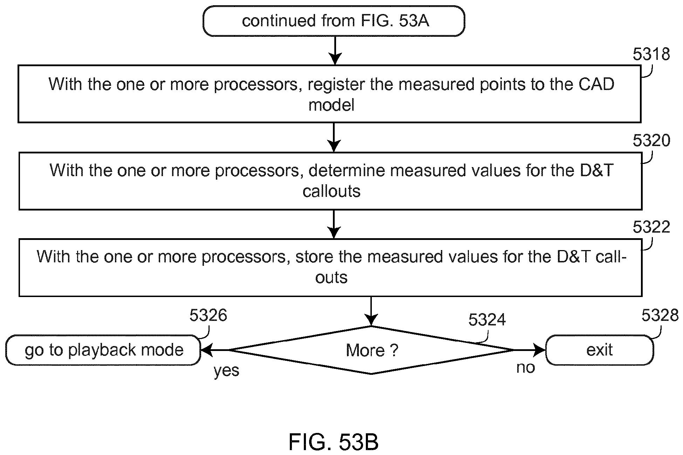

FIGs. 43, 53A, 53B are block diagrams showing elements of a method for measuring a first object in a learn mode and successive objects in a playback mode. In general, measurements in a playback mode may be performed more quickly than measurements in a playback mode. In an embodiment, the learn mode and the playback mode are both performed automatically, while requiring minimal actions on the part of the user. In an embodiment, measurements are performed with a single button click (a so-called "one-click" method) except perhaps to carry out a small number of additional actions such as changing the orientation of an object (for example, to measure a front side and a back side of the object), making a selection, entering a serial number, or scanning a bar code. In an embodiment, a bar code is coupled to an object under test, for example, by being imprinted on the object or attached to a carrier associated with the object. In an embodiment, the bar code or serial number are used to keep records of tested objects.

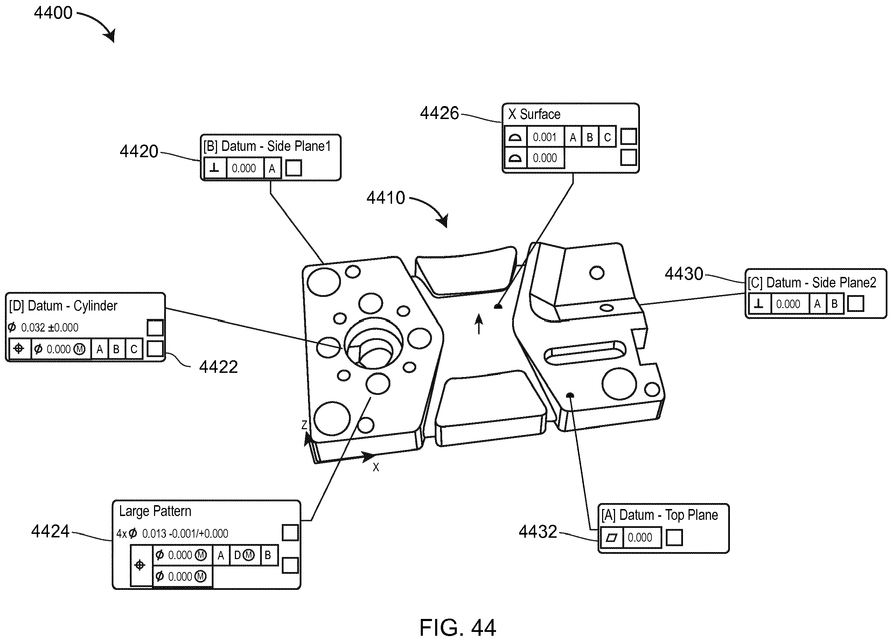

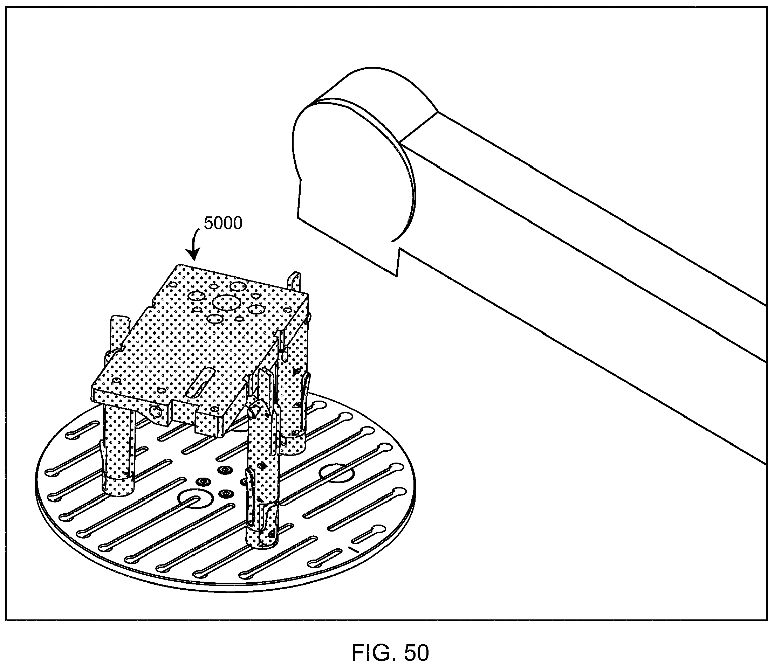

FIGs. 44, 45, 46, 47, 48, 49, 50, 51, 52, 54, 55 illustrate aspects of a method of a noncontact 3D measurement. FIG. 43 shows a collection of elements 4300 of a learn-mode portion of the measurement method. In an element 4304, one or more processors obtain a computer-aided design (CAD) model and dimensioning and tolerancing (D&T) callouts. The one or more processors may be contained in a measuring system, such as the measuring system 10 or external to the measuring system 10 as external or networked computers. The term processor includes microprocessors, digital signal processors, field-programmable gate arrays (FPGAs), digital logic, memory storage devices, and other electrical devices that provide processing functionality. The term CAD model means a representation of geometrical features of an object that is stored electronically and may be downloaded by the one or more processors. The term dimensioning and tolerancing (D&T) refers to nominal or specified values corresponding to features of the CAD model. Such D&T features may include the size, position, or characteristics of the features and may also include allowable tolerances for those sizes, positions, or characteristics. A well-known type of D&T is geometrical dimensioning and tolerancing (GD&T), which is like D&T but is further defined by national or international standards on the way in which sizes, positions, or characteristics are to be described and evaluated. A large number of international standards have been developed by the Intentional Organization for Standardization (ISO) for GD&T. A popular national standard for GD&T is ASME Y14.5, supported by the American Society of Mechanical Engineers (ASME). The category D&T is broader than the category GD&T and encompasses GD&T. A particular type of D&T measurement that is important is a scan compared to a reference object. In most cases, surface deviations of a scanned object compared to the reference object are particularly important. Measurements made with respect to a reference object are often referred to as "golden scans."

In some cases, D&T callouts are embedded within a CAD model. In an embodiment of the present method, the one or more processors downloads the D&T callouts (which may be GD&T callouts) along with the CAD model. In some cases, a user may not want to perform a measurement for every D&T callout. In an embodiment, the method includes allowing the user to select D&T callouts that are to be measured. Once selected in the learn mode, such callouts ordinarily remain in effect in the playback mode. In some cases, an object is to be measured in more than one orientation. A common example is the measurement of the front side of an object in a first orientation and a back side of the object in a second orientation. When multiple orientations are to be measured, the user may be presented with a UI that gives an opportunity to match D&T callouts to particular orientations. In some cases, D&T callouts are not embedded in a CAD model. In an embodiment, the method includes allowing the user to create D&T callouts that are to be measured. In this case, these created D&T callouts ordinarily remain in effect in the playback mode.

FIG. 44 shows an example of an image 4400 that includes a CAD model 4410 and six boxes 4420, 4422, 4424, 4426, 4430, 4432 containing GD&T callouts. In an embodiment, an image similar to the image 4400 is presented near the start of a learn mode portion of the measurement. In the exemplary image 4400, the boxes 4432, 4420, 4430, 4422 are for the datums A, B, C, D, respectively. The four datums reference surfaces on a top plane, a side plane 1, a side plane 2, and a cylinder, respectively. The box 4420, which is for a side plane 1, include symbols that indicate a requirement for a perpendicularity of the side plane 1 with respect to the datum A. Symbols in other boxes indicate GD&T requirements for profile, concentricity, and flatness.

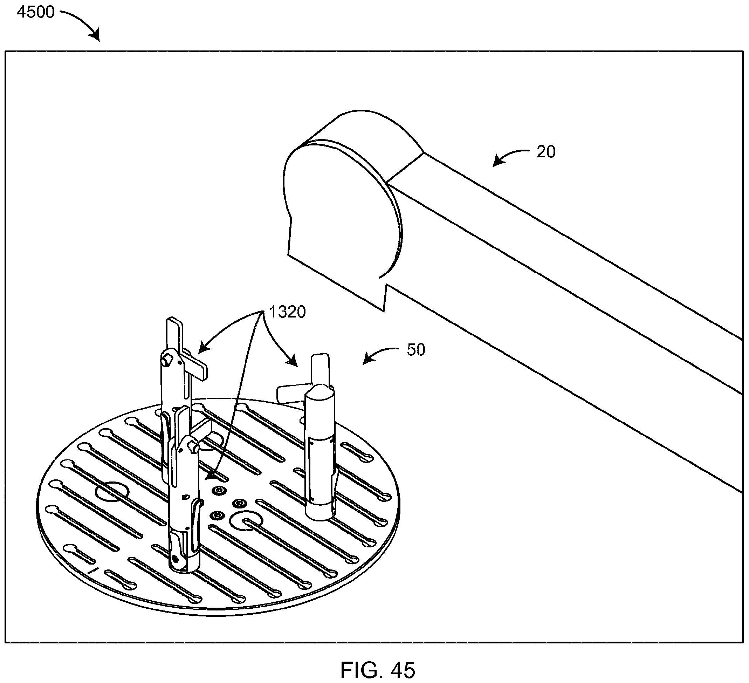

In an element 4306 in FIG. 43, a mechanical mechanism and a noncontact 3D measuring device are used to measure 3D coordinates of mounts. FIG. 45 shows an image 4500 that may be presented as a portion of a UI. In an embodiment, such a UI may be displayed on a computer monitor and may include additional menus and other elements in addition to the image 4500. In an embodiment, the mechanical mechanism is the system 10, which includes the mover mechanism 20 and a rotary staging assembly 50, which further includes mounting stands 1320, also referred to as mounts. In an embodiment, during the learn mode, the image 4500 includes CAD models of the mounting stands 1320 displayed in a default position. In an embodiment, the noncontact 3D measuring device is the device 30. In other embodiments, other types of mechanical mechanism and other types of noncontact 3D measuring devices are used.

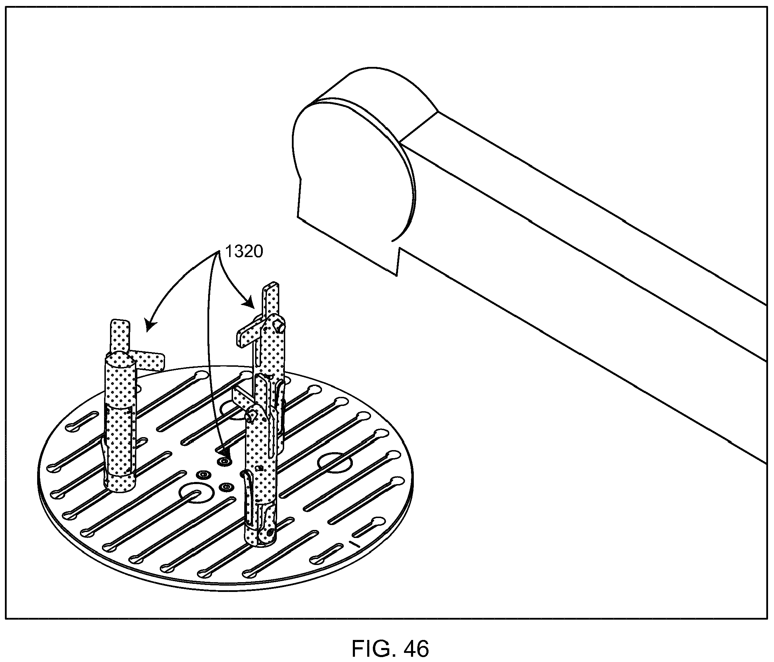

During the measurement, the mechanical mechanism changes the relative position of the 3D measuring device 30 and the mounting stands 1320. Measurements of the mounting stands are obtained and registered together, resulting in a scanned image of the stands. This result is represented in FIG. 46, which shows dots on the mounting stands 1320 to represent the points collected by the 3D measuring device and registered by the one or more processors. The mounting stands 1320 are now represented in their actual positions at the start of the measurement, referred to as their initial positions.

In an element 4308 of FIG. 43, a first object is placed on the mounts to obtain a combined object-mount in a first object orientation. The object is referred to as the first object because in the playback mode, other objects including at least a second object will be measured. When the object is placed on the mounting stands 1320, the resulting combination of the object and the mounting stands is referred to as the object-mount. The term first object orientation refers to a first orientation of the object on the stand - for example, with the object placed so that a top side of the object is placed up. The placing of the first object on the mount may be carried out by a human operator or by another mechanical device such as a robotic device.

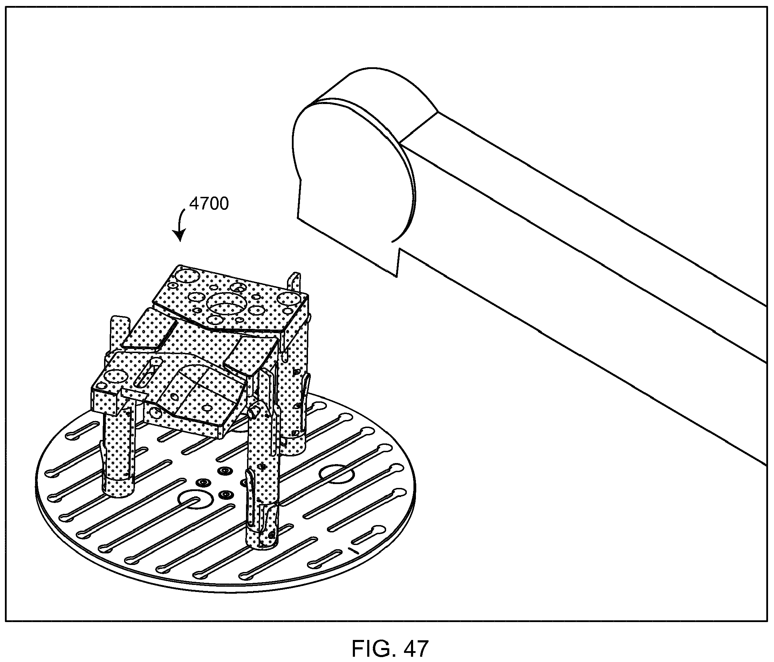

In an element 4310 of FIG. 43, the mechanical mechanism and the noncontact 3D measuring device measure and register 3D coordinates of points on the combined object-mount 4700. The result of this action is shown in FIG. 47. In an embodiment, the noncontact 3D measuring device measures a point cloud for the object-mount 4700 in each relative position of the 3D measuring device and the object-mount 4700. As each point cloud is obtained it is registered to the last point cloud so that the representation more and more closely resembles the complete object-mount 4700 as the measurement proceeds.

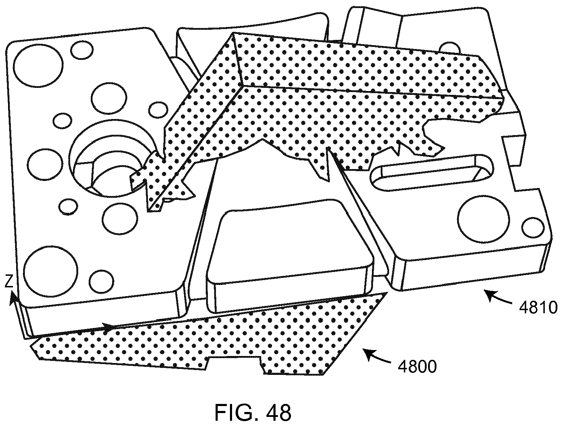

In an element 4312 of FIG. 43, the one or more processors remove the points measured on the mounts from the points measured on the combined object-mount. The result of this is to leave the points on the object, as indicated by the dotted element 4800 in FIG. 48.

In an element 4314 of the learn mode, the user is asked whether more orientations are to be measured. If the user answers yes, the elements 4310, 4312 are repeated. In these elements, the combined object-mount is measured and the measured mount points are removed. When all desired orientations of the object have been measured, the element 4318 is performed. In this element, the one or more processors registers the measured points 4800 to the CAD model 4810, as illustrated in FIG. 48.

In an alternative ordering of steps in the method 4300, the measured points 4800 are registered to the CAD model 4810 immediately after the step 4312 of the first orientation. Thereafter, the measured points for the second orientation and any other orientations are registered first set of points 4800, which have already been measured to the CAD model. This case is the one illustrated in the figures included here. FIG. 48, which includes the 3D points 4800 for the measured object in the first orientation, are registered to the CAD model 4810.

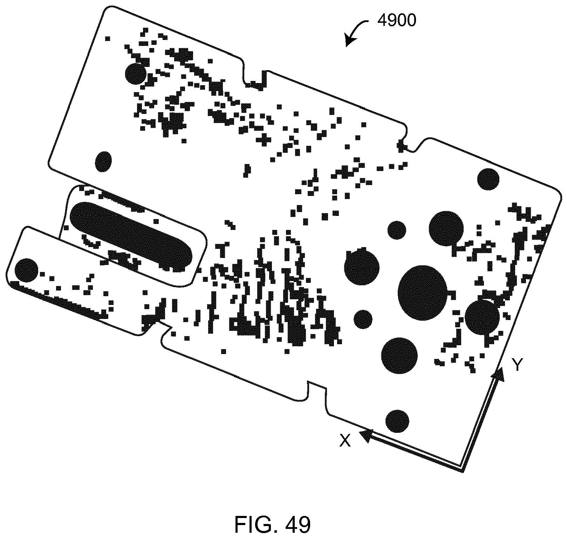

FIG. 49 shows a registration of the scan data to the bottom side 4900 of the measured object 4800. The scanned data in this case is obtained without turning the object over. In other words, the scan of the bottom side 4900 is obtained with the noncontact measuring device 30 in the position 30A of FIG. 3A. In this position, the scanner is able to see the bottom of an object 60 as it sits on the mounting stands 1320.

A further improvement in measuring the bottom side 4900 is obtained when the elements 4310, 4312 are repeated for the second orientation. In this case, the many more detailed scans are obtained for the bottom side 4900, giving a more detailed information for this side. In an embodiment, the UI shows the 3D points of the scanned object 5000 in its second orientation, as represented by the dots on the object, now in its second orientation.

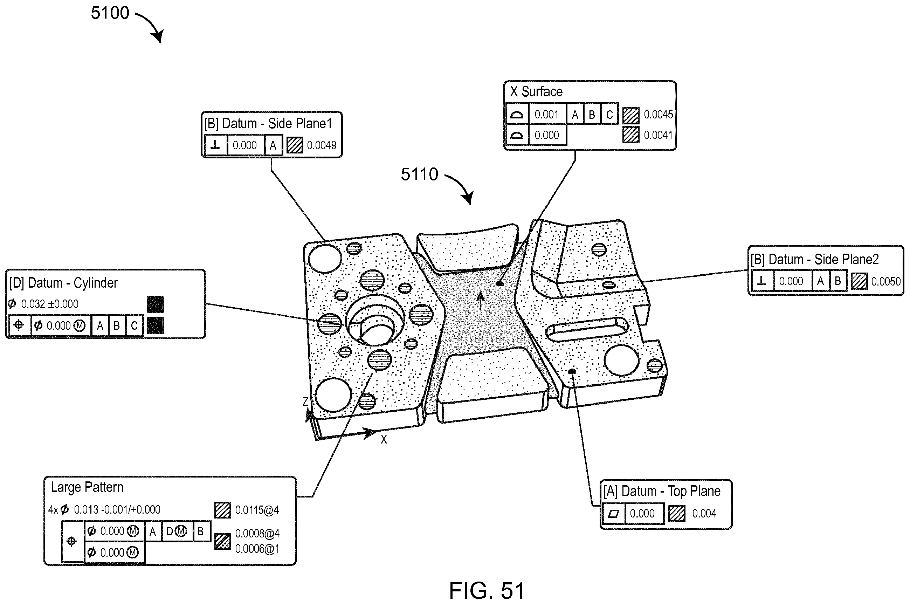

In an element 4320 of the learn mode, the one or more processors determine measured values for the GD&T callouts. In some embodiments, the result of this element is displayed on a UI or printed in a report. FIG. 51 shows a representation 5100 in which the surface of the CAD model 5110 is color coded or otherwise marked to indicate deviation from nominal or specified surface values. In this case, a color-coded key (not shown) would also be provided on the UI or report. In a further embodiment, the measured values for the GD&T callouts are compared to the specified values. The deviation is reported and a color code for each of the six GD&T boxes are reported. In an embodiment, the small boxes are colored to indicate whether the GD&T values were within the allowable tolerances (i.e., are within specifications) or are outside of the allowable tolerances.

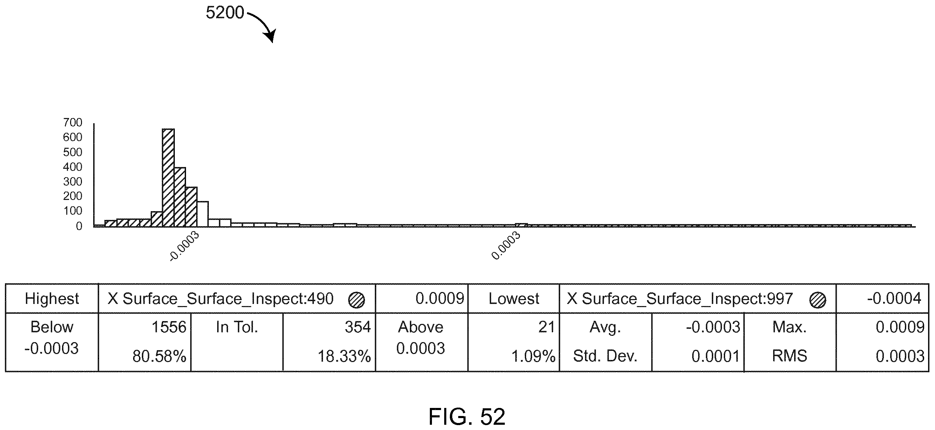

Another example of a representation of object characteristics is shown in FIG. 52. In an embodiment, the UI or report includes a histogram display 5200 having a representation of the numbers of measured points outside a preferred range of values, which in this case is +/- 0.0003 inch.

The playback mode provides a way to efficiently measure objects that are similar to the object measured in the learn mode. Objects in the playback mode are referred to as new objects to distinguish them from the first object of the learn mode. Such measurements can be performed with a minimum of operator involvement, and in some cases with no operator involvement. In an embodiment, objects are considered to be similar if they have the same CAD model and the same D&T callouts.

FIGs. 53A, 53B show a method 5300 that include elements of a playback mode. In an element 5306, the one or more processors load previously measured 3D coordinates for the mounts. These 3D coordinates are those measured in the learn mode.

Each of the elements in the dashed box of FIG. 53A are performed for each orientation of the new object, as indicated by the element 5308. In an element 5310, the one or more processors cause the mechanical mechanism to move to its initial state, which is to say the state at which the measurement began in the learn mode.

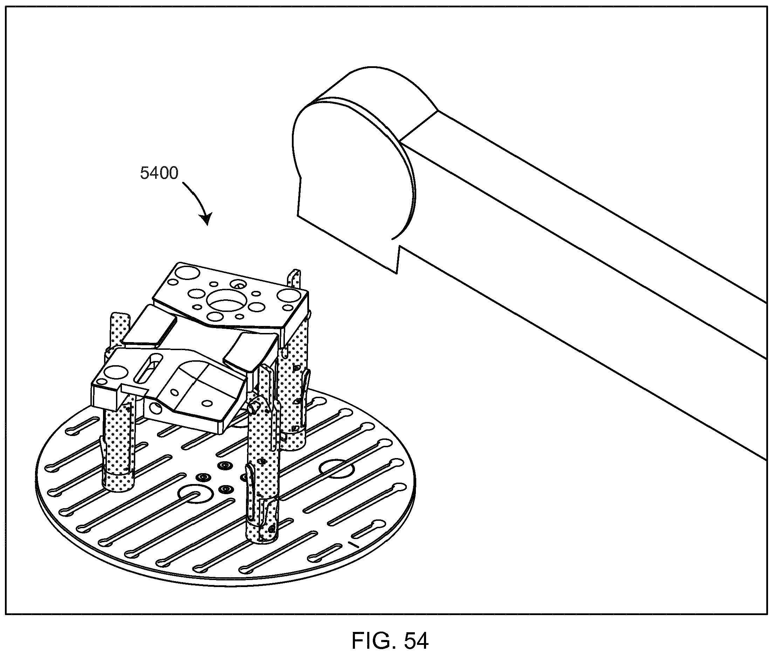

In an element 5312, the one or more processors provides a representation of the relative positions of the first object and the mounts. If the representation is provided to the user, in an embodiment, it is a created image such as the CAD model shown in FIG. 54. This figure is similar to FIG. 47 except that the object in FIG. 54 is not a measured point cloud but rather a CAD model 5400 positioned to mimic the object in the measured point cloud for the object-mount 4700 obtained in the learn mode. In another embodiment, the representation is a photograph of the first object taken by the 3D measuring instrument and displayed on the UI. In this embodiment, a live camera image of the new object from the 3D measuring instrument is superimposed on the photograph of the first object to assist the user in aligning the two images. In a further aspect of this embodiment, the measuring device is moved to a position to clearly indicate the outline of the object. For the case of the measuring device including the mover mechanism 20, the one or more processors drives the 3D measuring device to a height to give a clear view of the object. If the representation is provided to a robotic machine rather than to a user, the one or more processors may obtain coordinates to place the new object in the preferred location.

In an element 5314, the new object is adjusted in position on the mount to adjust the position of the new object-mount to that of the provided representation. This step may be performed by an operator or by an intelligent robotic device. In an element 1516, the mechanical mechanism and the noncontact 3D measuring device measure and register 3D coordinates of points on the new-object mount. In an element 5318, the one or more processors remove the points measured on the mounts in the learn mode from the points measured on the new object-mount.

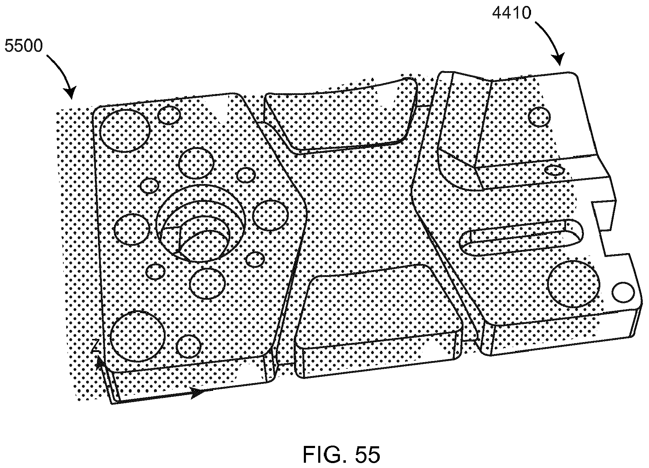

When the elements within the dashed box of FIG. 53A have been completed for each object orientation, the elements in FIG. 53B are performed. In an element 5318, the one or more processors register the measured points to the CAD model. In an embodiment, the UI displays the CAD model 4410 together with point cloud 5500 obtained for the object in the first orientation. As can be seen by comparing FIG. 55 to FIG. 48, the deviation between the CAD model 4410 and the collected point cloud 5500 is much smaller in the playback mode than that in the learn mode.

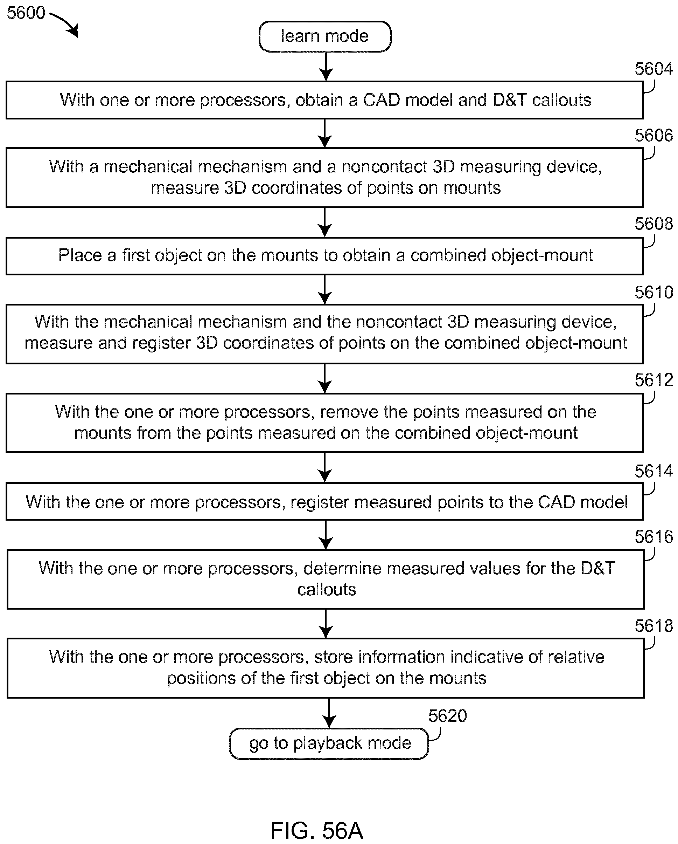

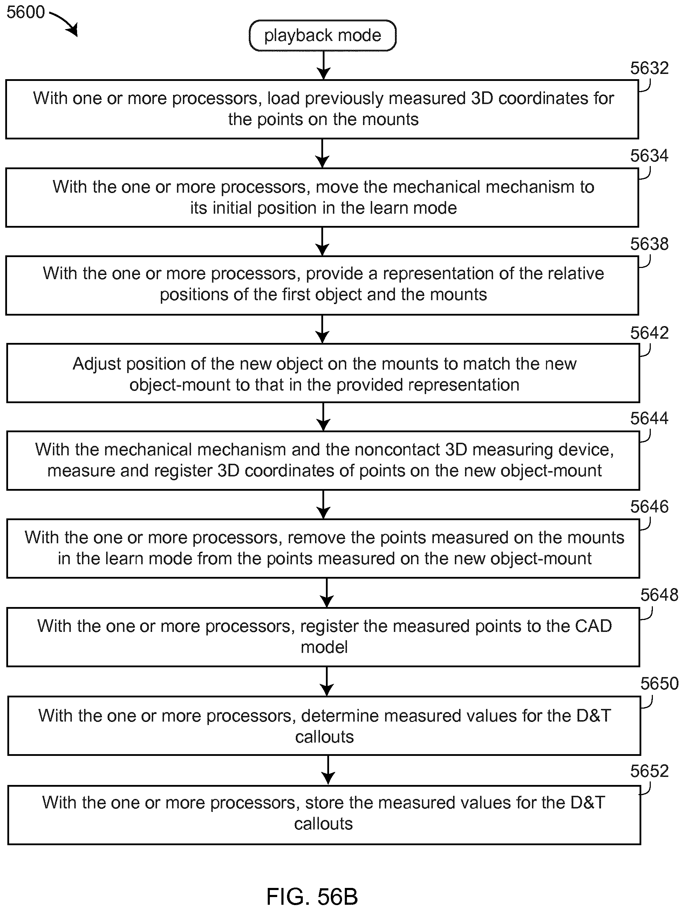

FIGs. 56A, 56B are flow charts showing a method for the learn and playback modes, respectively. These flow charts are similar in functionality to that provided by the flow charts FIGs. 43, 53A, 53B but emphasize the main features of the method. In an element 5604 of FIG. 56A, the one or more processors obtain a CAD model and D&T callouts. Beginning with the learn mode, in an element 5606, a mechanical mechanism and a noncontact 3D measuring device measure 3D coordinates of points on mounts such as the mounts 1320. In an element 5608, a first object is placed on the mounts to obtain a combined object-mount. In an element 5610, the mechanical mechanism and the noncontact 3D measuring device measure and register 3D coordinates of points on the combined object-mount. In an element 5612, one or more processors remove the points measured on the mounts from the points the points measured on the combined object-mount. In an element 5614, the one or more processors register measured points to the CAD model. In an element 5616, one or more processors determine measured values for the D&T callouts. In an element 5618, the one or more processors store information indicative of relative positions of the first object on the mounts.

Moving to the playback mode, in an element 5632, the one or more processors load previously measured 3D coordinates for the points on the mounts. In an element 5634, the one or more processors move the mechanical mechanism to its initial position in the learn mode. In an element 5638, the one or more processors provide a representation of the relative positions of the first object and the mounts. In an element 5642, the position of a new object on the mounts is adjusted to match the new object-mount to that in the provided representation. In an element 5644, the mechanical mechanism and the noncontact 3D measuring device measure and register 3D coordinates of points on the new object-mount. In an element 5646, the one or more processors remove the points measured on the mounts in the learn mode from the points measured on the new object-mount. In an element 5648, the one or more processors register the measured points to the CAD model. In an element 5650, the one or more processors determine measured values for the D&T callouts. In an element 5652, the one or more processors store the measured values for the D&T callouts.

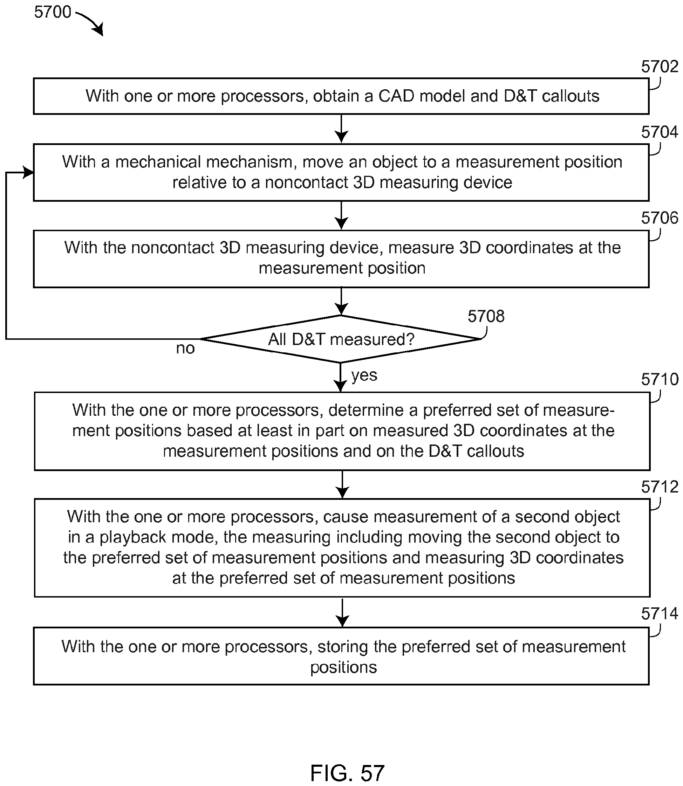

FIG. 57 describes a method 5700 that includes many elements of the FIGs. 43, 53A, 53B but emphasizes obtaining of all desired D&T values as the criterion for completing the learn mode. In an embodiment, the element 5702 begins in a learn mode. In an element 5702, the one or more processors obtain a CAD model and D&T callouts. In an element 5704, a mechanical mechanism moves an object to a measurement position relative to a noncontact 3D measuring device. In an element 5706, the noncontact 3D measuring device measures 3D coordinates at the measurement position. In an element 5708, a check is made to determine whether all D&T values have been measured. If not, the element 5708 causes the elements 5704, 5706 to be repeated. If all the D&T values have been measured, flow moves to element 5710. In this element, the one or more processor determine a preferred set of measurement positions based at least in part on measured 3D coordinates at the measurement positions and on the D&T callouts. In an element 5712, the one or more processors causes measurement of a second object to be carried out in a playback mode, the measuring including moving the second object to the preferred set of measurement positions and measuring 3D coordinates at the preferred set of measurement positions. In an element 5714, the one or more processors stores the preferred set of measurement positions.

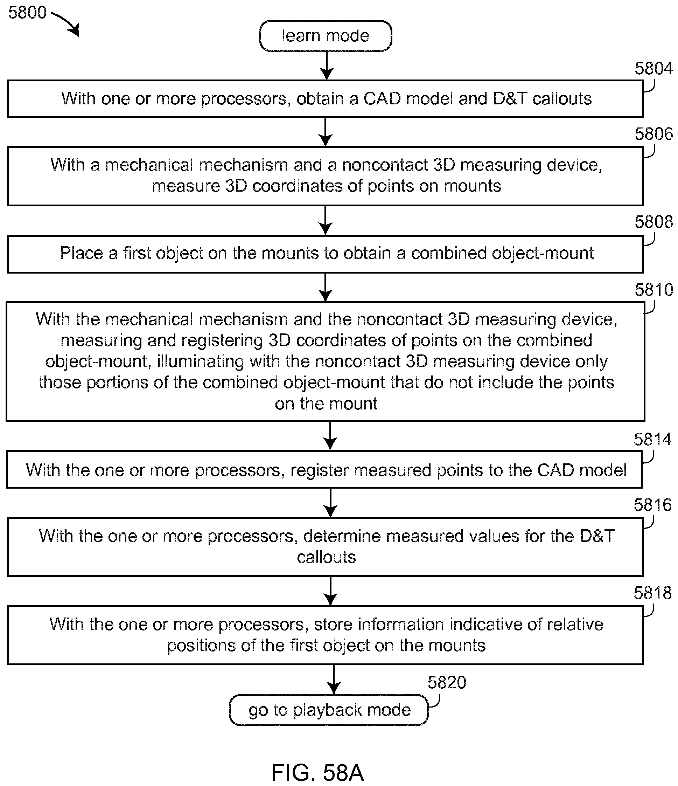

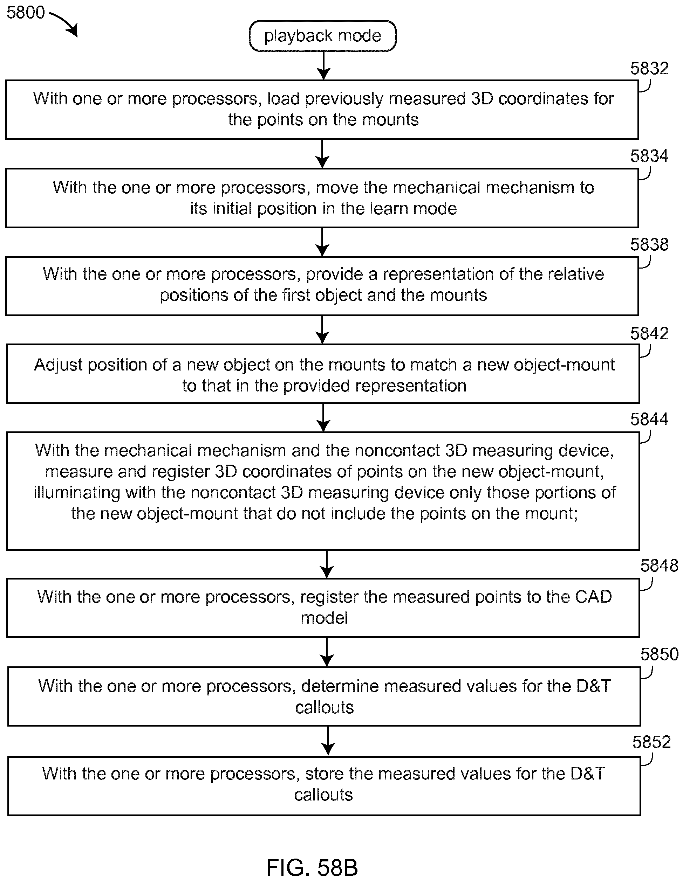

A method 5800 illustrated in FIGs. 58A, 58B is similar to the method 5600 in FIGs. 56A, 56B except that the mounts are not illuminated by the projector of the 3D measuring device, thereby not only eliminating the need to remove mount points from the object-mount but also reducing the possibility of obtaining multipath interference. In an element 5804, the one or more processors obtain a CAD model and D&T callouts. In an element 5806, a mechanical mechanism and a noncontact 3D measuring device measured 3D coordinates of points on mounts. In an element 5808, a first object is placed on the mounts to obtain a combined object-mount. In an element 5810, the mechanical mechanism and the noncontact 3D measuring device measure and register 3D coordinates of points on the combined object-mount, illuminating with the noncontact 3D measuring device only those portions of the combined object mount that do not include the points on the mount. In an element 5814, the one or more processors, register measured points to the CAD model. In an element 5816, the one or more processors determine measured values for the D&T callouts. In an element 5818, the one or more processors store information indicative of the relative positions of the first object on the mounts. In an element 5820, the method moves to a playback mode.

In the playback mode, in an element 5832, one or more processors load previously measured 3D coordinates for the points on the mounts. In an element 5834, the one or more processors move the mechanical mechanism to its initial position in the learn mode. In an element 5838, the one or more processors provide a representation of the relative positions of the first object and the mounts. In an element 5842, the position of a new object is adjusted on the mounts to match a new object-mount to that in the provided representation. In an element 5844, the mechanical mechanism and the noncontact 3D measuring device measure and register 3D coordinates of points on the new object-mount, illuminating with the noncontact 3D measuring device only those portions of the new object-mount that do not include the points on the mount. In an element 5848, the one or more processors register the measured points to the CAD model. In an element5850, the one or more processors determine measured values for the D&T callouts. In an element 5852, the one or more processors store the measured values for the D&T callouts.

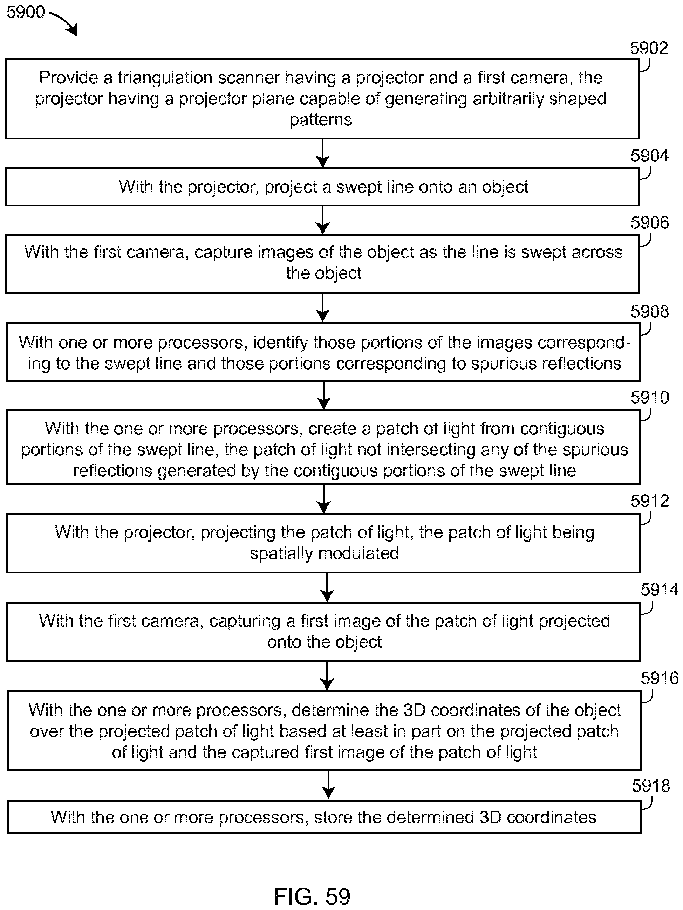

In a method 5900 illustrated in FIG. 59, a method is given for efficiently projecting in regions for which problems caused by spurious reflections such as multipath reflections and specular reflections (glints). In an element 5902, a triangulation scanner has a projector and a first camera, with the projector having a projector plane capable of generating arbitrarily shaped patterns. In an element 5904, the projector sweeps a line onto an object. This may be done using a method such as that described in relation to FIGs. 37A, 37B. In an element 5906, the first camera captures images of the object as the line is swept across the object. In an element 5908, the one or more processors identify those portions of the images corresponding to the swept line and those portions corresponding to spurious reflections. Examples of spurious reflections are the reflections 3844, 3846 in FIG. 38C. In an element 5910, the one or processors create a patch of light from contiguous portions of the swept line, the patch of light not intersecting any of the spurious reflections generated by the contiguous portions of the swept line. In an element 5912, the projector projects the patch of light, which is spatially modulated. The term spatially modulated here means that the light is not of uniform intensity across the area on which it is projected. For example, for the case of the sinusoidal phase shift method the light varies sinusoidally in intensity, for example, with the sinusoidal pattern varying from left to right, leaving the appearance of vertical stripes. In an element 5914, the first camera captures a first image of the patch of light projected onto the object. In an element 5916, the one or more processors determine the 3D coordinates of the object over the projected path of light based at least in part on the projected patch of light and the captured first image of the patch of light. In an element 5918, the one or more processors store the determined 3D coordinates.

In an enhancement to the embodiment of the method 4300 in FIG. 48, in an embodiment, the shape and orientation of the object placed on the mounts 1320 are automatically determined to an approximate value based on alternative and relatively rapid measurement techniques. One such technique involves obtaining 3D coordinates for a noncontact 3D measuring device located in a single location. Such a technique may enable faster measurement of the object if a method such as sequential sinusoidal modulation described herein above. Ordinarily, sinusoidal waves having a relatively long spatial period are first used to determine the position of each point on the object. As the measurement continues, smaller and smaller sinusoidal periods are used, locating the 3D coordinates of the object point ever more accurately. However, if the position and orientation of the object is known to 3 or 4 millimeters, then typically in an exemplary system such as the system 10 shown in FIG. 1A, the 3D coordinates of the object can be determined using only the last in the sequence of sinusoidal periods since the ambiguities in larger distances can be eliminated at the start of the measurement. Using this technique can save considerable measurement time. Use of this technique may also be applied in the playback mode, an embodiment of which is described in the method 5300 of FIGs. 53A, 53B. Besides speeding the collection of 3D values measured for an object, the use of data to approximately located the position and orientation of an object also saves time in the registration step carried out in the learn mode. FIG. 48 shows an example of a registration procedure of a scanned object 4800 to a CAD model 4810. By starting with the scanned object 4800 and the CAD model 4810 closer together because of the initial estimate, time can be saved in registering the object 4800 to the CAD model 4810.

There are several ways in which the position of points in an object under test can be determined to within a few millimeters. In one approach, a single 3D scan is obtained at a first position of the triangulation scanner 30 relative to the object. The determined 3D values are then used to make a comparison to the CAD model to determine which dimensions and which portions of the scanned object correspond to which dimensions and portions of the CAD model. In this case, it may be helpful to move the mover mechanism 20 away from the base to give a clearer view of the object with the 3D measuring device.

In another approach, a camera is used to capture 2D images in at least three different poses of the 3D measuring instrument to the object. The edges of lines are identified in each of the 2D images. Mathematical techniques based on epipolar geometry are then used to determine the 3D coordinates of the edge points, even smoothly continuous edge points as well as discontinuous edge points (e.g., corner points). A method for determining the 3D coordinates of continuous edge points is described in U.S. Published Patent Application No. 2018/0172428, the contents of which are incorporated by reference herein. As in the case of a measurement made with the 3D scanner in an elevated position, as described above, 2D camera images can likewise be advantageously obtained with the camera(s) in elevated positions. If the rotation of the rotation stage 50 is used to move the object to three or more poses, then the poses could be known to relatively high accuracy since the angles traversed by rotation stages may be known to relatively high accuracy.

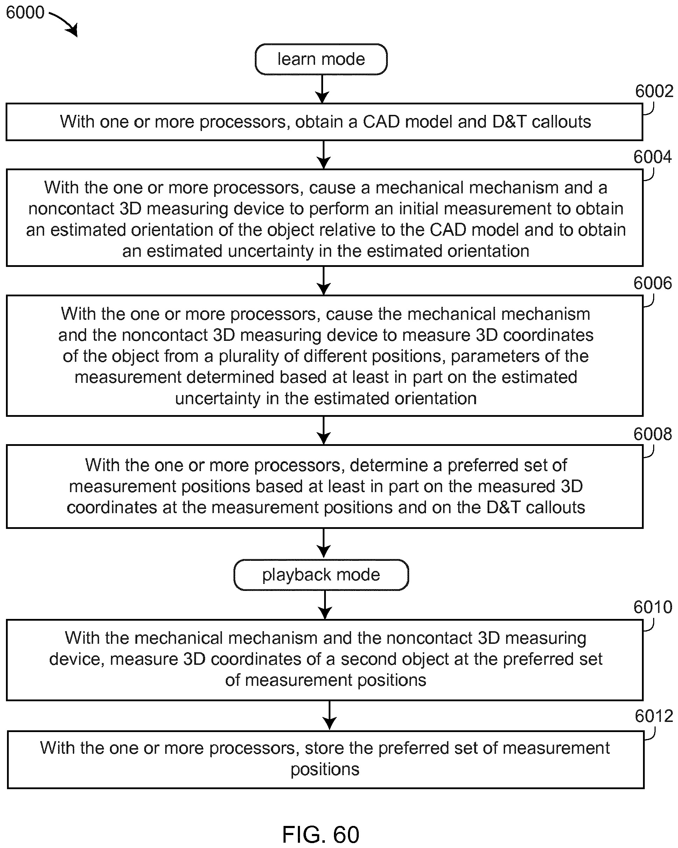

A flow chart of a method 6000 according to the description above is shown in FIG. 60. Beginning in a learn mode, in an element 6002 one or more processors obtain a CAD model and D&T callouts. In an element 6004, the one or more processors cause a mechanical mechanism and a noncontact 3D measuring device to perform an initial measurement to obtain an estimated orientation of the object relative to the CAD model and to obtain an estimated uncertainty in the estimated orientation. In an element 6006, the one or more processors cause the mechanical mechanism and the noncontact 3D measuring device to measure 3D coordinates of the object from a plurality of different positions, parameters of the measurement determined based at least in part on the estimated uncertainty in the estimated orientation. In an element 6008, the one or more processors determine a preferred set of measurement positions based at least in part on the measured 3D coordinates at the measurement positions and on the D&T callouts. Switching to a playback mode, in an element 6010, the mechanical mechanism and the noncontact 3D measuring device measure 3D coordinates of a second object at the preferred set of measurement positions. In an element 6012, the one or more processors store the preferred set of measurement positions.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A system comprising:
a noncontact three-dimensional (3D) measuring device operable to measure 3D coordinates of an object;
a stage operable to rotate the object; and
a mechanical arm coupled to the 3D measuring device, the mechanical arm operable to rotate the 3D measuring device in a first arc about a first axis and in a second arc about a second axis, the first arc larger than the second arc.

2. The system of claim 1 wherein the mechanical arm is further operable to point the 3D measuring device toward the object.

3. The system of claim 1 wherein the mechanical arm further comprises a linear actuator operable to produce the rotation about the first axis.

4. The system of claim 2 wherein the linear actuator is further operable to produce the rotation about the second axis.

5. The system of claim 1 wherein the mechanical arm further comprises a four-bar linkage.

6. The system of claim 1 further operable to stop the rotation of the mechanical arm about the first axis whenever an upward force on the arm exceeds a prescribed upward force level or a downward force on the arm exceeds a prescribed downward force level.

7. The system of claim 1 further comprising a stage operable to rotate the object.

8. The system of claim 7 wherein the stage further comprises a platen and a plurality of mounts.

9. The system of claim 1 wherein the noncontact 3D measuring device includes a triangulation scanner.

10. The system of claim 1 wherein the noncontact 3D measuring device includes a triangulation scanner that projects a pattern of light onto an object, the pattern of light being selectable in a variety of shapes.

11. The system of claim 1 wherein the noncontact 3D measuring device includes a triangulation scanner that sweeps a pattern of light on the object, the pattern being a line of light or a point of light.

12. The system of claim 11 wherein the noncontact 3D measuring device includes a pattern generation plane and a lens system, the pattern of light being generated and swept on the pattern generation plane and projected through the lens system.

13. The system of claim 1 wherein the noncontact 3D measuring device includes a triangulation line scanner that projects a line of light on the object.

14. The system of claim 1 wherein the noncontact 3D measuring device is operable to measure a distance and an angle to the object.

15. A method comprising:
providing a system having a noncontact three-dimensional (3D) measuring device, a rotation stage, and a mechanical arm attached to the 3D measuring device;
with one or more processors, executing executable instructions causing the mechanical arm to rotate the 3D measuring device in a first arc about a first axis and in a second arc about a second axis, the first arc larger than the second arc;
with the one or more processors, executing executable instructions further causing the rotation stage to rotate the object;
with the noncontact 3D measuring device, measuring 3D coordinates of a point on the object; and
with the one or more processors, executing executable instructions storing the measured 3D coordinates.
